# EUROPÄISCHE PATENTSCHRIFT

(11) **EP 4 285 327 B1**
(45) Veröffentlichungstag und Bekanntmachung des Hinweises auf die Patenterteilung: **26.08.2026**
(21) Anmeldenummer: 22705743.7
(22) Anmeldetag: 31.01.2022
(51) Int. Cl.: G06T 7/593

(54) **VORRICHTUNG UND VERFAHREN ZUR KORRESPONDENZANALYSE IN BILDERN**
DEVICE AND METHOD FOR CORRESPONDENCE ANALYSIS IN IMAGES
DISPOSITIF ET PROCÉDÉ D'ANALYSE DE CORRESPONDANCE DANS DES IMAGES

(30) Priorität: 01.02.2021 DE 102021102233
(43) Veröffentlichungstag der Anmeldung: 06.12.2023
(73) Patentinhaber: Recognitionfocus GmbH, 01067 Dresden (DE)
(72) Erfinder: SCHULZE, Marc, 01309 Dresden (DE); IHLEFELD, Joachim, 01309 Dresden (DE); RIEGEL, Torvald, 01067 Dresden (DE)
(74) Vertreter: Blumbach · Zinngrebe Patentanwälte PartG mbB
(86) Internationale Anmeldenummer: PCT/EP2022/052201
(87) Internationale Veröffentlichungsnummer: WO 2022/162216

(56) Entgegenhaltungen:
- EP-A1- 2 636 993
- MARROQUIN J. L. ET AL: "Robust quadrature filters", JOURNAL OF THE OPTICAL SOCIETY OF AMERICA A, vol. 14, no. 4, 1 April 1997 (1997-04-01), pages 779, XP055922603, ISSN: 1084-7529, DOI: 10.1364/JOSAA.14.000779

## Beschreibung

### Hintergrund und Aufgabe der Erfindung

Die Erfindung betrifft allgemein die Analyse von Bilddaten. Insbesondere betrifft die Erfindung eine Vorrichtung, mit der korrespondierende Bildelemente in mehreren Bildern identifiziert und lokalisiert werden können. Dies ist insbesondere auch eine Grundlage für die Stereofotogrammmetrie, bei welcher anhand der Lokalisierung korrespondierender Bildelemente die Lage dieser abgebildeten Elemente im Raum bestimmt wird.

Erste Versuche zur Stereophotographie gab es bereits im Jahr 1838 als Sir Charles Wheatstone statt einer einfachen Fotografie zwei leicht voneinander verschiedene Aufnahmen mittels eines Spiegels erzeugte. Durch die separate Betrachtung des linken Bildes mit dem linken Auge und des rechten Bildes mit dem rechten Auge entstand ein räumlicher Eindruck der aufgenommenen Szene. Im ersten Weltkrieg wurden zum ersten Mal große Bildverbände aus der Luftaufklärung verwendet und stereoskopisch ausgewertet. $\begin{matrix}Z = \frac{B ⋅ f}{δ} \\ X = \frac{Z ⋅ x ′}{f} \\ Y = \frac{Z ⋅ y ′}{f}\end{matrix}$

Die Beziehungen in Gleichung (1) werden als Stereonormalformel bezeichnet. Diese beschreiben den Zusammenhang zwischen Disparität δ und der Tiefenkoordinate Z in Abhängigkeit der Basis B (also dem Abstand zwischen linker und rechter Kamera) und der Brennweite f. Mithilfe von Z und den Koordinaten im Bild (x',y') ergeben sich durch den Strahlensatz die zu Z gehörenden lateralen Koordinaten X und Y im Raum. X, Y, und Z repräsentieren dann die Lage und Form vom abgebildeten Objekten. Die Menge dieser Daten wird im Folgenden als "3D-Daten" bezeichnet und ist eine mögliche Verwendung einer Anwendung der Erfindung.

Durch vorherige Kalibrierung der Stereokamera sind Basis und Brennweite hinreichend bekannt. Eine Möglichkeit für das Ermitteln einer Karte der Tiefenkoordinaten des aufgenommenen Objektraums (und damit für 3D-Daten) ist zum Beispiel das Finden vieler, homogen verteilter Punktkorrespondenzen in den Eingabebildern und die Berechnung der Disparität für diese Korrespondenzen. Die räumliche Auflösung der 3D-Daten wird dabei von der Rastergröße der korrespondieren Punkte bestimmt. Eine manuelle Auswertung ist höchst zeitaufwendig und genügt nicht den Genauigkeitsanforderungen.

Das Ziel des maschinellen räumlichen Sehens ist die automatische Korrespondenzanalyse, also die automatische, eindeutige Identifikation von Punktkorrespondenzen mit einem minimalen Messfehler zur exakten Bestimmung der Disparität. Aus der Disparität können wiederum 3D-Daten berechnet werden. Aktuelle Anwendungen erfordern eine hohe Auflösung und Genauigkeit der berechneten 3D-Daten und eine effiziente Berechnung mit niedrigem Energiebedarf in Echtzeit. Derzeit angewendete Verfahren und Vorrichtungen zur Korrespondenzanalyse können diese Anforderungen nicht oder nur teilweise erfüllen. Ein Problem vieler Verfahren ist zum Beispiel die speicher- und berechnungsintensive Verarbeitung großer Bildbereiche zur sicheren Identifikation von Korrespondenzen, was die Implementierung mittels schneller, spezialisierte Hardware erschwert und die Erstellung der 3D-Daten verlangsamt.

Viele technische Anwendungen beruhen auf Erfahrungen, die durch Untersuchungen des menschlichen Sehens gewonnen wurden. Das räumliche Sehen des Menschen basiert auf zwei unkalibrierten Einzellinsen mit zur Laufzeit variablen Parametern. Obwohl der Mensch in der Lage ist, die Brennweite beider Augen leicht zu variieren, ist es möglich, unter verschiedenen Bedingungen, wie Gegenlicht, Nebel und Niederschlag, räumlich zu sehen. Es ist allerdings nicht bekannt, nach welchem Verfahren die räumliche Sicht des Menschen funktioniert. Zumindest legen biologische und medizinische Studien nahe, dass das menschliche Stereosehen auf einer Verarbeitung von Ortsfrequenzen der vom menschlichen Auge empfangenen LichtSignale auf mehreren Ortsfrequenzskalen beruht:
Mayhew, J. E. und Frisby, J. P., 1976, "Rivalrous texture stereograms", Nature, 264(5581):53-56.
Marr, D. und Poggio, T., 1979, "A computational theory of human stereo vision", Proceedings of the Royal Society of London B: Biological Sciences, 204(1156):301-328.

In beiden Quellen wird die unabhängige Berechnung von Phaseninformationen in mehreren Ortsfrequenzbereichen und in einem Fenster beschrieben. Für eine präzise Signalverarbeitung ist bei diesem Ansatz nachteilig, dass der prinzipielle Widerspruch zwischen hoher Ortsauflösung und hoher Ortsfrequenzauflösung nicht optimal gelöst wird. Das aus den Phasensignalen der einzelnen Ortsfrequenzbereiche zusammengefasste Disparitätssignal rauscht. Das Rauschen wird durch vorgeschaltete Tiefpassfilterung im Eingangsbild reduziert, dabei werden jedoch auch Signalinformationen entfernt.

In einer weiteren Quelle (Marcelja, S., 1980, "Mathematical description of the responses of simple cortical cells", J. Opt. Soc. Am., 70(11):1297-1300) werden Details der Empfindlichkeitscharakteristika von Neuronen im visuellen Cortex als Gabor-Funktionen und somit die Fenstercharakteristik der Empfindlichkeit für die Korrespondenzanalyse beschrieben.

Neben der Stereofotogrammmetrie gibt es auch weitere Verfahren, um aus mehreren Bildern eine Tiefeninformation zu extrahieren. Die US 2013/0266210 A1 beschreibt ein Verfahren zum Bestimmen von Tiefeninformation einer Szene, bei dem mindestens zwei Bilder der Szene mit unterschiedlichen Kameraparametern aufgenommen und Bildfelder in jeder Szene ausgewählt werden. Ein erster Ansatz berechnet mehrere komplexe Antworten für jedes Bildfeld unter Verwendung mehrerer verschiedener Quadraturfilter, wobei jede komplexe Antwort eine Größe und eine Phase hat und weist jedem Quadraturfilter eine Gewichtung der komplexen Antworten in den entsprechenden Bildfeldern zu. Eine Gewichtung wird durch eine Beziehung der Phasen der komplexen Antworten bestimmt und die Tiefenmessung der Szene aus einer Kombination der gewichteten komplexen Antworten bestimmt wird. Gemäß einer Ausführungsform werden den Tiefenschätzungen der verschiedenen Bildfelder Konfidenzmaße als Schätzungen der Zuverlässigkeit der Tiefenbewertungen zugeordnet. Als Konfidenzmaß kann beispielsweise die Anzahl von Pixeln im Bildbereich verwendet werden, denen durch eine adaptive spektrale Maskierung eine Gewichtung von 1 zugewiesen wird.

MARROQUIN J. L. ET AL: "Robust quadrature filters", JOURNAL OF THE OPTICAL SOCIETY OF AMERICA A, Bd. 14, Nr. 4, 1. April 1997, Seiten 779 - 791 beschreibt eine Berechung einer Disparität eines Paars stereoskopischer Bilder entlang einer Epipolarlinie durch Anwendung von Quadraturfiltern auf die Bilder. Dies ermöglicht eine subpixelgenaue Bestimmung der Disparität.

Eine Berechnung der Disparität zwischen einem Ziel- und einem Referenzbild ist auch aus der EP 2 636 993 A1 bekannt. Dabei wird gemäß Gleichung (1) die beste Übereinstimmung der relativ zueinander verschobenen Bilder anhand einer Intensitätsdifferenz in Form einer Summe der Beträge der Intensitätswerte der Pixel berechnet.

Generell können bei den verschiedensten Verfahren der Bildauswertung auch Filteroperationen zum Einsatz kommen, bei denen Bilder oder Bildbereiche mit Faltungskernen gefaltet werden, um die so erhaltenen Daten weiter zu verarbeiten. So beschreibt die US 2015/0146915 A1 ein Verfahren zur Objekterkennung, bei welchem die Bilddaten zunächst mit einem Faltungskern gefaltet und die gefalteten Bilder dann mit einem Schwellwertfilter verarbeitet werden. Mit dem Schwellwertfilter werden dadurch Pixel, die vermutlich keine relevante Information für die Objekterkennung beinhalten, maskiert, um die Weiterverarbeitung zu beschleunigen.

### Computer-Vision

Eine automatisierte Korrenspondenzanalyse arbeitet in der Regel mit zwei oder mehr Digitalbildern, zum Beispiel aufgenommen durch eine linke und eine rechte Digitalkamera (im Folgenden als Stereokamera bezeichnet). Im Idealfall wird davon ausgegangen, dass dieses Stereobildpaar bis auf einen horizontalen Versatz identisch ist, wenn Abbildungs-, Digitalisierungs- und Quantisierungsfehler vernachlässigt werden (und wenn beide Kameras das gleiche Objekt abbilden und dieselben Teile des Objekts von beiden Kameras sichtbar sind). Ist die relative Orientierung, d.h. die Lage der beiden Kameras zueinander (z.B. Basis B), durch vorherige Kalibrierung bekannt, reduziert sich die Korrespondenzanalyse durch die Nutzung der Epipolargeometrie und Epipolarlinien auf eine eindimensionale Suche entlang der Abbildung der Epipolarlinien in den Digitalbildern. Im allgemeinen, nicht kalibrierten Fall verlaufen die Epipolarlinien aber quer und konvergent durch den Bildraum. Um dies zu vermeiden muss durch die Rektifizierung ein Stereobildpaar ohne y-Parallaxe erzeugt werden. Dadurch verhält sich eine reale Stereokamera wie der Stereonormalfall und sämtliche Epipolarlinien verlaufen parallel. Da aus Effizienzgründen nicht im Subpixelbereich senkrecht zur Abtastrichtung gesucht werden soll, ist eine hohe Rektifizierungsqualität mit einer Toleranz kleiner 0,5px gefordert.

In der Literatur wird die Korrespondenzanalyse in drei verschiedene Gruppen unterteilt, nämlich flächenbasierte, merkmalsbasierte oder phasenbasierte Verfahren.

Flächenbasierte Verfahren stellen mit Abstand die größte Gruppe dar. Hierbei wird ein Fenster der Größe m x n mit den Intensitäts-Werten des linken Digitalbildes der Stereokamera mit den Werten eines Fensters der gleichen Größe im rechten Digitalbild der Stereokamera verglichen und mittels einer Kostenfunktion (z.B. Summe der absoluten Differenzen (SAD), Summe der quadrierten Differenzen (SSD) oder Mutual Information (MI)) bewertet. Auf Basis dieser Bewertungen von Flächenunterschieden findet dann die Korrespondenzanalyse statt. Bekannte Algorithmen aus diesem Bereich sind die Kreuzkorrelation (z.B. Marsha J. Hannah, "Computer Matching of Areas in Stereo Images", PhD Thesis, Stanford University, 1974, sowie Nishihara, H. K., 1984, "PRISM: A Practical Real-Time Imaging Stereo Matcher", Massachusetts Institute of Technology) und das Semi-Global Matching (Hirschmüller, H., 2005, "Accurate and efficient stereo processing by semi-global matching and mutual information", Proceedings of the 2005 IEEE Computer Society Conference on Computer Vision and Pattern Recognition). Der Nachteil der Kreuzkorrelation besteht darin, dass die Punkte innerhalb des Ortsfensters gleich gewichtet sind und unabhängig von der Ausrichtung der Epipolarlinien analysiert werden, obwohl die zu detektierende Disparitätsinformation entlang der Epipolarlinien ausgerichtet ist. Damit wird das optimale Signal/Rausch-Verhältnis (S/N) nicht erreicht.

Merkmalsbasierte Verfahren spielen zur Erzeugung dichter 3D-Daten derzeit keine Rolle, da die hierfür benötigten markanten Punkte oft ungleichmäßig verteilt sind und nur vereinzelt vorkommen (z.B. nur an Ecken und Kanten der von der Stereokamera abgebildeten Objekte). Sie fassen eine oder mehrere Eigenschaften (z.B. Gradient, Orientierung) eines Fensters m × n im Digitalbild in einem Deskriptor zusammen und vergleichen diese Merkmale, in der Regel global im gesamten Bild, mit anderen Merkmalspunkten. Diese Umgebungsmerkmale sind in der Regel zwar sehr rechenintensiv, aber häufig intensitäts-, skalierungs- und rotationsinvariant, sodass sie global nahezu eindeutig sind. Durch diese globale Eindeutigkeit und hohe Rechenzeit werden merkmalsbasierte Ansätze vorrangig zur Bildregistrierung/-orientierung verwendet, um z.B. die relative Orientierung (Homographie) von Stereobildpaaren herzustellen.

Es existieren weniger bekannte phasenbasierte Verfahren, obwohl davon auszugehen ist, dass das menschliche Sehen auf solch eine Methode zurückzuführen ist. Bei diesen Verfahren wird die Phaseninformation der Signale im linken und rechten Bildes genutzt, um über die Phasendifferenz die Disparität möglichst exakt zu berechnen. Untersuchungen mit zufälligen Punkt-Stereogrammen zeigen, dass das menschliche Sehen nicht auf dem Vergleich von Intensitäten beruhen kann (Julesz, B., 1960, "Binocular depth perception of computer-generated patterns", Bell System Technical Journal). Weitere Arbeiten entwickeln eine Theorie zur Korrespondenzanalyse auf Basis der menschlichen Psychophysik (Marr, D. und Poggio, T., 1979, "A computational theory of human stereo vision", Proceedings of the Royal Society of London B: Biological Sciences, 204(1156):301-328). Dieser Ansatz basiert auf dem Nulldurchgang des LoG ("Laplacian of Gaussian") für verschiedene örtliche Auflösungen und versucht Ausreißer mit einer Grob-zu-Fein Strategie zu reduzieren. Experimente von Mayhew and Frisby (Mayhew, J. E. und Frisby, J. P., 1981, "Psychophysical and computational studies towards a theory of human stereopsis", Artificial Intelligence, 17(1):349 - 385) zeigen, dass der Nulldurchgang allein nicht die Wahrnehmung des menschlichen Sehens erklären kann. Die Autoren nehmen an, dass auch Signalspitzen nach der Faltung mit einem Filter zum Stereosehen nötig sind. Weng bemerkt (Weng, J. J., 1993, "Image matching using the windowed fourier phase", International Journal of Computer Vision, 11(3):211-236, nachfolgend bezeichnet als "Weng (1993)"), dass die Ergebnisse des Nulldurchgangs aufgrund weniger Kanäle zu instabil sind, und empfiehlt eine Windowed Fourier Phase (WFP) als "Matching Primitive". Die WFP ist dabei eine Kombination mehrerer modifizierter gefensterter Fouriertransformationen (WFT), bei der die Phasen, die durch die einzelnen WFT ermittelt wurden, gemittelt werden. Dabei können die einzelnen Ortsfrequenzen und Phasen jedoch nicht spektral rein erfasst werden, so dass das Signal/Rausch-Verhältnis nicht optimal ist. Ein weiterer auf dem Nulldurchgang des LoG basierender Ansatz (T. Mouats und N. Aouf, "Multimodal stereo correspondence based on phase congruency and edge histogram descriptor," International Conference on Information Fusion, 2013) verwendet auch eine Tiefpassfilterung vor der Disparitätsanalyse und erreicht aus diesem Grund auch kein optimales Signal/Rausch-Verhältnis, wie später genauer erklärt wird.

### Zusammenfassung zur Technik der phasenbasierten Korrespondenzanalyse

Die Bildsignale der rechten und linken (Farb-) Kamera können durch jeweils ein Y-Signal (Y_{Image}), auch Grauwert- oder Luminanzsignal, und Farbsignal U und V repräsentiert werden. Für die Korrespondenzanalyse und deren Messgenauigkeit sind Bildauflösung und Kontrast ein wichtiges Kriterium. Deshalb wird vorrangig das gegenüber U und V höher aufgelöste Y-Signal (Y_{Image}) verwendet. Es werden somit zwei hochaufgelöste Y_{Image}-Kanäle miteinander zeilenweise verglichen. Die Betrachtungen für Y_{Image} gelten in gleicher Weise auch für den U- und V-Kanal.

Beide Kameras bilden das gleiche Objekt ab. Unter der Voraussetzung einer idealisierten Abbildung des Objektraums in den Bildraum durch die Kamera, sind entsprechende Teilbilder beider Kameras gleich (YR_{Image} - YL_{Image} = 0). Unter realen Bedingungen treten jedoch Toleranzen bzw. Unterschiede auf:
- Unterschiedlicher Blickwinkel der Kameras auf das Objekt. Daraus folgt eine unterschiedliche Perspektive (projektive Verzerrung), Verdeckung (Vignettierung) und unterschiedliches Reflexionsverhalten (Lambert'scher Strahler).
- Kamerarauschen (also z.B. Rauschen in den Sensoren der Digitalkameras), sowie PRNU (pixel response nonuniformity) und DSNU (dark signal nonuniformity).
- Digitalisierungsfehler und Quantisierungsfehler.
- Verschiedene OTF (Optical Transfer Function) durch unterschiedliche Objektive, sowie Kontrastverluste, die durch die Rektifizierung in den Bildecken entstehen (insbesondere die Tonnenverzeichnung bei Weitwinkelobjektiven).

Die Fourierreihenzerlegung eines Signals für eine Frequenz ω liefert einen Realund einen Imaginärteil. Der Realteil ("even") mit dem Cosinus-Signal beschreibt den geraden Teil der Fourierreihe und der Imaginärteil ("odd") mit dem Sinus-Signal den ungeraden Teil. Die Phasenverschiebung bzw. Disparität δ in einem bandpassgefiltertem zeilenförmigen Signalpaar YL_{Signal} und YR_{Signal} wird nach dem Stand der Technik wie in Gleichung (2) gezeigt berechnet (Jepson, A. D. und Jenkin, M. R. M., 1989, "The fast computation of disparity from phase differences", IEEE Computer Society Conference on Computer Vision and Pattern Recognition). $\begin{matrix}{Δ}_{odd} = {YL}_{cos} ⋅ {YR}_{sin} - {YL}_{sin} ⋅ {YR}_{cos} = {YL}_{0} ⋅ {YR}_{0} ⋅ sin \left(ωδ\right) \\ {Δ}_{even} = {YL}_{cos} ⋅ {YR}_{cos} + {YL}_{sin} ⋅ {YR}_{sin} = {YL}_{0} ⋅ {YR}_{0} ⋅ cos \left(ωδ\right)\end{matrix}$

YL_{cos}, YLₛᵢₙ, YR_{cos} und YRₛᵢₙ sind die Ergebnisse der Faltung von YL_{Signal} und YR_{Signal} mit einer Cosinus- bzw. Sinus-Funktion. Die Disparität δ ergibt sich dann aus Gleichung (3), wobei sich das Amplitudenprodukt YL₀ · YR₀ kürzt. $δ = \frac{arctan \left(\frac{{Δ}_{odd}}{{Δ}_{even}}\right)}{ω}$

Die Berechnung nach Gleichung (3) bringt jedoch einige Nachteile:
- Jeweils zwei Faltungsintegrale (Sinus, Cosinus) für YL_{Signal} und YR_{Signal} für ein Signalpaar. Für jeden Disparitätswert δ für eine definierte Ortsfrequenz ω werden 4 Faltungsoperationen benötigt. Es werden im Zähler und im Nenner von Gleichung (3) jeweils zwei Multiplikationen und eine Addition mit hoher Wortbreite benötigt. Die Disparität ist im Vergleich zu den Produkten sehr klein, es wird eine hohe Dynamik benötigt: Rundungsfehler erzeugen Rauschen. Dadurch entsteht ein hoher Verarbeitungsaufwand für echtzeitfähige Implementierungen.
- Der grundsätzliche Widerspruch zwischen hoher Ortsauflösung (kleines Ortsfenster) und hoher Ortsfrequenzauflösung (nur eine Ortsfrequenz) führt zu einer schlechten Signalqualität. Die nach Stand der Technik verwendete Mittelwertbildung über mehrere Messungen auf unterschiedlichen Ortsfrequenzen bringt eine Verbesserung, ist aber nicht optimal.

Es besteht die Forderung nach Senkung des Verarbeitungsaufwands und nach deutlicher Verbesserung der Signalqualität, insbesondere des S/N. Daraus ergeben sich folgende Ziele:
- Definition einer optimalen Korrespondenzfunktion, die die Disparitätsinformation innerhalb der Grenzen eines hinreichend kleinen Messfensters im Ortsbereich und innerhalb eines ebenfalls hinreichend kleinen Messfensters im Ortsfrequenzbereich so zu einem einheitlichen Signal zusammenfasst, dass die Signalfehler der nach Stand der Technik für jede Ortsfrequenz einzeln mit der gefensterten Fouriertransformation (WFT) berechneten Phase vermieden werden. Diese Lösung der optimalen Korrespondenzfunktion (SSD(δ)) nach δ wird als Gruppendisparitätsfunktion (SSD'(δ)/SSD"(δ)) bezeichnet.
- Getrennte Erfassung der optimalen Korrespondenzfunktion mit Informationen über die Disparität in Richtung des Vektors der Kamera-Basis B und einer getrennt berechneten Konfidenzfunktion mit zusätzlichen Informationen, die nicht von der Disparität in Richtung des Vektors der Kamera-Basis B abhängen. Die Konfidenzfunktion dient der Auswahl der korrekten Disparität im Falle mehrerer Kandidaten, ohne dass das Rauschen der Disparitätsmessung durch Einfluss auf die Gruppendisparitätsfunktion erhöht wird.
- Durchführung einer Modellrechnung zur Bestimmung der Verläufe von optimalen Faltungskernen mit dem Ziel, die Gruppendisparitätsfunktion mit einer minimalen Anzahl von Faltungsoperationen und geringem Rauschen zu berechnen.
- Implementierung eines adaptiven Verhaltens der Gruppendisparitätsfunktion mit dem Ziel, die effektiv wirksame Übertragungsfunktion im Ortsfrequenzbereich abhängig vom aktuellen Bildinhalt innerhalb der Fenster zu steuern, so dass sich die effektive Rauschbandbreite nach der jeweils stärksten Amplitude innerhalb einer Fourierreihe des Bildsignals richtet. Dabei entsteht näherungsweise das Verhalten eines Optimalfilters nach Wiener, N., 1949, "Extrapolation, Interpolation, and Smoothing of Stationary Time Series: With Engineering Applications", The MIT Press (nachfolgend bezeichnet als "Wiener (1949)").
- Durchführung der Korrespondenzanalyse mit hochaufgelösten Kameradaten und unverfälschten Disparitätsinformationen ohne vorherige Tiefpassfilterung. Rauschverbesserung durch Tiefpassfilterung der 3D-Daten nach Korrespondenzanalyse oder der diesen 3D-Daten zugrundeliegenden Menge an Disparitäts-Messergebnissen nach der Korrespondenzanalyse.
- Steuerung der optimalen Übertragungsfunktion der Gruppendisparitätsfunktion durch Profile zur Anpassung an das Leistungsspektrum der Bilder.
- Minimierung des Rauschens durch Störungen der Epipolargeometrie (y-Parallaxe) durch Justage der Komplanaritätsbedingung der optischen Achsen und durch Überwachung und Korrektur der relativen Verschiebung des Stereobildpaars (optokinetischer Nystagmus) zur Laufzeit.

Der Erfindung liegt daher die Aufgabe zugrunde, eine Vorrichtung und ein Verfahren bereitzustellen, mit denen eine Korrespondenzanalyse in Bilddaten besonders rauscharm und effizient und unter Verbesserung der vorstehend genannten Punkte gelingt. Diese Aufgabe wird durch den Gegenstand der unabhängigen Ansprüche gelöst. Vorteilhafte Ausgestaltungen sind in den jeweiligen abhängigen Ansprüchen angegeben.

### Zusammenfassung der Erfindung

Zur Lösung der vorgenannten Aufgabe ist ein Korrespondenzanalysator nach Anspruch 1 und ein entsprechendes Verfahren nach Anspruch 19 vorgesehen. Dieser Korrespondenzanalysator zur Bestimmung der Disparität δ, somit also der Verschiebung korrespondierender Bildelemente in zwei digitalen Einzelbildern, umfasst eine Recheneinrichtung, die eingerichtet ist, aus den beiden Einzelbildern jeweils Bildbereiche auszuwählen, wobei der Bildbereich eines der Einzelbilder als Referenzbildbereich ausgewählt wird, und im anderen Einzelbild eine Abfolge von Suchbildbereichen ausgewählt wird. Der Referenzbildbereich und die Suchbildbereiche liegen auf einer Epipolarlinie, und die Disparität für einen Suchbildbereich ist also der Abstand dieses Suchbildbereichs zum Referenzbildbereich auf der Epipolarlinie. Die Menge der Suchbildbereiche und deren Disparitäten stellt den Disparitätsbereich dar, in dem der Korrespondenzanalysator Korrespondenzen finden soll.

Im Unterschied zu anderen Verfahren werden für die Disparitätsbestimmung relevante Informationen aus den Bildbereichen zu einer einheitlichen Korrespondenzfunktion zusammengefasst, welche Informationen aus einem vorzugsweise rechteckförmigen Ortsfenster, also aus den Bildbereichen, und einem vorzugsweise rechteckförmigen Ortsfrequenzfenster das mehrere Ortsfrequenzen umfasst auswertet. Ein Vorteil davon ist, dass nicht erst rauschbehaftet einzelne Ortsfrequenzen extrahiert und für jede dieser Ortsfrequenzen die Disparität gemessen wird und dann diese Messwerte wiederum rauschbehaftet interpoliert werden, wie es in anderen Verfahren der Fall ist. Die Zusammenhänge zwischen Ortsfenstergröße, Ortsfrequenzfenstergröße und den optischen Übertragungsfunktionen der Kameras die die Einzelbilder liefern werden weiter unten genauer erklärt.

Die Korrespondenzfunktion SSD(δₚ) wird gebildet aus zu Signalen weiterverarbeiteten Daten von Bildbereichen, die wiederum mit speziell geformten Faltungskernen gefaltet werden. Beides wird weiter unten genauer erklärt. Dabei wird jeweils die Paarung des Referenzbildbereichs mit einem Suchbildbereich mit Disparität δₚ genutzt, um den Wert von SSD(δₚ) an Stelle δₚ zu ermitteln. Somit ist die Recheneinrichtung weiterhin eingerichtet,
- aus dem Referenzbildbereich eine Mehrzahl von vₘₐₓ Signalen YL_{Signal,v} und aus den Suchbildbereichen jeweils eine Mehrzahl von vₘₐₓ Signalen YR_{Signal,v} zu erzeugen, und
- die Mehrzahl der Signale YL_{Signal,v} des Referenzbildbereichs mit in einem Speicher gespeicherten im Wesentlichen geraden und im Wesentlichen ungeraden Faltungskernen im Ortsfenster zu falten, wobei die geraden Faltungskerne eine gewichtete Summe von mehreren geraden harmonischen Funktionen unterschiedlicher Ortsfrequenzen und die ungeraden Faltungskerne eine gewichtete Summe von mehreren ungeraden harmonischen Funktionen unterschiedlicher Ortsfrequenzen umfassen,
- und für jeden der Suchbildbereiche die Signale YR_{Signal,v} mit den, beziehungsweise diesen im Speicher gespeicherten Faltungskernen im Ortsfenster zu falten und
- für jedes Signalpaar YL_{Signal,v} und YR_{Signal,v} die Differenzen der jeweiligen Faltungsergebnisse zu bilden.

Die Korrespondenzfunktion wird so gebildet und die Faltungskerne sind so ausgewählt, dass ein lokales Extremum der Korrespondenzfunktion an einer Stelle δₚ eine mögliche Korrespondenz an dieser Stelle anzeigt. Alternativ kann auch direkt die erste Ableitung der Korrespondenzfunktion ermittelt werden, womit Nullstellen dieser mögliche Korrespondenzen anzeigen. Somit ist die Recheneinrichtung weiterhin eingerichtet,
- für jeden der Suchbildbereiche die Differenzen der Faltungsergebnisse nichtlinear zu verarbeiten und zu einem Funktionswert einer Korrespondenzfunktion SSD(δₚ) an der Stelle δₚ zu akkumulieren oder aus den Differenzen der Faltungsergebnisse die erste Ableitung SSD'(δₚ) der Korrespondenzfunktion SSD(δₚ) nach δₚ an der Stelle δₚ zu ermitteln und damit einen Funktionswert einer Korrespondenzfunktion SSD(δₚ) oder deren Ableitung an der Stelle δₚ zu bilden, wobei δₚ den Abstand des Referenzbilds vom Suchbild bezeichnet, und
- lokale Extrema der Korrespondenzfunktion SSD(δₚ) oder Nulldurchgänge der Ableitung SSD'(δₚ) der Korrespondenzfunktion SSD(δₚ) zu ermitteln, und
- die Stelle δₚ von einem der lokalen Extrema oder von einem der Nulldurchgänge als Disparität δ auszugeben.

Die Disparität soll vorzugsweise auch mit feinerer Auflösung als der endlichen Menge an Suchbildbereichen, also an einer Stelle δₚ, ermittelt und ausgegeben werden, was als subpixelgenauer Wert der Disparität bezeichnet wird und wofür Informationen nebeneinanderliegender Suchbildbereiche genutzt werden können. Eine bevorzugte Möglichkeit hierzu ist die Berechnung einer Gruppendisparität SSD'(δₚ)/ SSD"(δₚ) in der Nachbarschaft von δₚ, um den subpixelgenauen Anteil des Disparitätswertes zu ermitteln.

Die Ausgabe kann beispielsweise in Form eines Eintrags in eine Disparitätskarte erfolgen, in dem die ermittelte Disparität der Position des entsprechenden Referenzbildbereichs zugeordnet ist. Unter einer Ausgabe wird allgemein eine Bereitstellung des Werts zu einer Weiterverarbeitung oder Anzeige verstanden. Die Weiterverarbeitung kann beispielsweise die Ermittlung des Abstands des Objekts umfassen. Eine Weiterverarbeitung kann auch verschiedene, weiter unten erläuterte Filterungen der Daten umfassen.

Eine Korrespondenzanalyse für digitale Einzelbilder ist in der Regel eine rauschund toleranzbehaftete Ausführung, zum Beispiel durch Diskretisierungs- und Quantisierungseffekte bei der Repräsentation von Einzelbildern als endliche Menge von Pixeln mit beschränkter Auflösung (z.B. 8bit pro Pixel und Farbkanal). Ähnlich verhält es sich bei der Faltung im Ortsfenster mit diskreten Faltungskernen, wobei dort zusätzlich die Frage besteht, wie die Koeffizienten dieser Faltungskerne zu wählen sind, sodass die Faltungsergebnisse rauscharm und nützlich sind für die Korrespondenzanalyse.

Unter anderem aus diesen Gründen offenbart diese Erfindung wie im Rahmen eines stetigen Signalmodells mit kontinuierlichen Funktionen Faltungskerne ausgewählt werden können und eine Korrespondenzfunktion gebildet werden kann, die sich direkt in eine diskrete Verarbeitung mit diskreten Faltungskernen übertragen lässt, und dabei gleichzeitig eine rauscharme Bestimmung der Disparität ermöglicht. Insbesondere sind die Korrespondenzfunktion und die Faltungskerne so gewählt, dass vorhandene Disparitäts-Signale, also Information aus den Bildbereichen die für die Bestimmung der Disparität relevant sind, zuverlässig zur Korrespondenzanalyse genutzt werden, und vorhandenes Rauschen, also andere Informationen die nicht relevant sind, weitestgehend ignoriert wird. Dies ist wichtig, da ansonsten das Rauschen zu einer ungenaueren Bestimmung der Disparität führen kann. Des Weiteren wird offenbart, wie Faltungskerne für bestimmte Profile von Eingabebildern oder Bildbereichen ausgewählt werden können, sodass zusammen mit der Korrespondenzfunktion Optimalfilter entstehen.

Im Umkehrschluss heißt das, dass die Erfindung auf Basis des Signalmodells eine Vielzahl von Sätzen diskreter Faltungskerne offenbart, und dass es für jeden dieser zusätzlich weitere ähnliche diskrete Faltungskerne gibt, die sich nur dadurch unterscheiden, dass sie ein wenig zusätzliches Rauschen enthalten oder eine ähnliche Menge an Rauschen einfach anders geartet enthalten, und damit praktisch ebenso offenbart werden. Ein zufälliges Finden solcher Sätze an Faltungskernen oder das Finden mittels einer einfachen Suche die nicht durch ein Modell geleitet wird ist unwahrscheinlich allein wegen der großen Anzahl an möglichen Faltungskernen (z.B. sind im weiter unten erläuterten Ausführungsbeispiel bei 4 Faltungskernen insgesamt 32 Koeffizienten zu bestimmen, was bei beispielsweise 8bit Auflösung pro Koeffizient 256³² Kombinationen entspricht).

Ein wichtiger Bestandteil der Erfindung ist die Verwendung von sowohl Faltungskernen die aus einer gewichteten Summe von mehreren geraden harmonischen Funktionen unterschiedlicher Ortsfrequenzen bestehen, als auch Faltungskernen die aus einer Summe von mehreren ungeraden harmonischen Funktionen unterschiedlicher Ortsfrequenzen bestehen. Dadurch kann die Anzahl benötigter Faltungsoperationen kleiner oder gleich der Anzahl beachteter Ortsfrequenzen im Ortsfrequenzfenster sein, so dass der benötigte Rechenaufwand kleiner ist als bei anderen Verfahren bei gleichzeitig besserem Signal-Rausch-Verhältnis. Diskrete Faltungskerne umfassen diese Summen von Funktionen insbesondere dann, wenn die Faltungskerne eine genaue Diskretisierung der jeweiligen Summen an den einzelnen Positionen der Faltungskerne sind. Sofern eine Abweichung der diskreten Koeffizienten der Faltungskerne zu Summen idealer gerader oder ungerader Funktionen vorliegt, ist aber insbesondere bevorzugt, dass eine hohe Korrelation der diskreten Werte zu den zugrundeliegenden Funktionen vorliegt. Gemäß einer besonders bevorzugten Ausführungsform ist dazu vorgesehen, dass die Koeffizienten der Filterkerne den Funktionswerten gewichteter Summen harmonischer gerader, beziehungsweise ungerader Funktionen entsprechen, oder einen Korrelationskoeffizienten zu den Funktionswerten aufweisen, der einen betragsmäßigen Wert von mindestens 0,8, vorzugsweise mindestens betragsmäßig 0,9 aufweist. Gemäß einer weiteren Ausführungsform weisen die Koeffizienten ein hohes Bestimmtheitsmass R² zu den Funktionswerten auf. Das Bestimmtheitsmass beträgt vorzugsweise mindestens 80%, insbesondere mindestens 90%, besonders bevorzugt mindestens 95%. Sofern die oben genannten Werte des Korrelationskoeffizienten und/oder des Bestimmtheitsmaßes erreicht werden, stellen die Koeffizienten der geraden und ungeraden Faltungskerne mit hinreichender Genauigkeit noch eine gewichteten Summe von mehreren geraden harmonischen Funktionen unterschiedlicher Ortsfrequenzen, beziehungsweise eine gewichtete Summe von mehreren ungeraden harmonischen Funktionen unterschiedlicher Ortsfrequenzen dar.

Es ist vorteilhaft aber nicht zwingend, dass die zu messenden Positionen in den Einzelbildern mittig in den jeweiligen Bildbereichen oder den Faltungskernen liegen. Die Faltungskerne können auch so diskretisiert werden, dass die Funktionen zu einer neben der Mitte der Bildbereiche oder Faltungskerne liegenden Position gerade, beziehungsweise ungerade sind. Weiterhin müssen die Summen auch nicht im strengen Sinne gerade oder ungerade Funktionen darstellen. Die Einträge der Faltungskerne können einen leicht asymmetrischen Funktionsverlauf wiedergeben und/oder bezüglich einer neben der Mitte der Referenz- und Suchbildbereiche liegenden Position gerade, beziehungsweise ungerade sein. Zum Beispiel resultiert die Erweiterung eines Faltungskerns um einen zusätzlichen Koeffizienten am Rand, der einen im Vergleich zu den anderen Koeffizienten des Faltungskerns kleinen Wert hat, in der Praxis nur zu einem kleinen zusätzlichen Rauschanteil. Des Weiteren können die Faltungskerne mit Faltungen vorheriger Verarbeitungsschritte kombiniert vorliegen, was aber immer noch einer Faltungsoperation im Sinne dieser Erfindung umfasst. Die vorher beschriebenen Varianten umfassen somit immer noch Summen von mehreren geraden bzw. ungeraden harmonischen Funktionen.

Es ist besonders bevorzugt, die Korrespondenzfunktion SSD(δₚ) durch eine nichtlineare Verarbeitung wie beispielsweise durch Quadrieren der Featuredifferenzen, beziehungsweise der Faltungsergebnisse zu bilden. Sowohl die nichtlineare Verarbeitung mit der 2. Potenz, als auch deren Ableitung sind besonders einfach zu berechnende Operationen und daher leicht in einer entsprechend angepassten Hardware umzusetzen. Abseits dieser Berechnung ist auch die nichtlineare Verarbeitung mit Kennlinien möglich, die Anteile der vierten oder größeren geraden Potenzen der Differenzen enthalten bzw. die Differenzen ab einer Schwelle begrenzen.

Die Auswahl der Faltungskerne derart, dass diese gewichtete Summen gerade, beziehungsweise ungerader harmonische Funktionen umfassen und die nichtlineare Verarbeitung der Differenzen der Faltungsergebnisse, insbesondere das Quadrieren dieser, ermöglicht einen weiteren Teil der Erfindung, mittels dem der Einfluss der Objektphasen im Signalmodell auf die Ergebnisse der Disparitätsmessung sehr stark verringert wird. Die Objektphasen im Signalmodell können sich zum Beispiel ändern wenn man eine Textur auf einem zu analysierenden Objekt verschieben würde ohne das Objekt im Raum zu verschieben. Vereinfacht heißt das, dass die einheitliche Korrespondenzfunktion rauscharme Messergebnisse liefert, die weitestgehend unabhängig davon sind welche Textur oder welches Muster ein Objekt hat, falls ein zur Disparitätsmessung verwertbares Signal in dem gewählten Ortsfrequenzbereich existiert. Dazu ist vorgesehen, dass die Faltungskerne so ausgewählt sind, dass im Signalmodell für jedes Signal v im Ortsfrequenzbereich die Faltungsoperationen der kₘₐₓ geraden und lₘₐₓ ungeraden Funktionen jeweils Summen mit gewichteten Signalanteilen einer Gruppe von Ortsfrequenzen mit den Amplituden Aₘ übertragen, so dass sich in der Korrespondenzfunktion SSD(δ) zwei Teilsummen für jedes Signal v und jede Ortsfrequenz mit Index m ausbilden, die erste mit durch quadratischen Amplituden Aₘ² gekennzeichneten Termen aus den Ergebnissen der Faltungsoperationen mit den geraden Funktionen, die zweite mit durch quadratischen Amplituden Aₘ² gekennzeichneten Termen aus den Ergebnissen der Faltungsoperationen mit den ungeraden Funktionen. Die erste Teilsumme und die zweite Teilsumme lassen sich nach dem trigonometrischen Pythagoras insbesondere exakt oder in einer Näherung zusammenfassen, so dass die Summe SSDᵢₙᵥ(δ) beider Teilsummen unabhängig von der Objektphase Δₘ ist. Im Speziellen können die Faltungskerne im Ortsbereich so ausgewählt sein, dass im Signalmodell für jedes Signal v im Ortsfrequenzbereich die Faltungsoperationen der kₘₐₓ geraden und lₘₐₓ ungeraden Funktionen jeweils Summen mit gewichteten Signalanteilen einer Gruppe von Ortsfrequenzen mit den Amplituden Aₘ übertragen, so dass sich in der Korrespondenzfunktion SSD(δ) zwei Terme für jedes Signal v und jede Ortsfrequenz mit Index m ausbilden, wobei der erste Term ein Produkt einer quadratischen Amplitude Aₘ², einer ersten Konstanten und einer quadrierten Sinus-Funktion ist, und der zweite Term ein Produkt einer quadratischen Amplitude Aₘ², einer zweiten Konstanten und einer quadrierten Cosinus-Funktion ist, und die Werte der ersten und der zweiten Konstante gleich sind oder innerhalb einer Toleranz von +/-20% gleich sind.

Vereinfacht heißt das, dass bei Vorliegen eines Signals die größten Bestandteile des Werts der Korrespondenzfunktion unabhängig sind von den Objektphasen, und somit rauscharm zur Bestimmung der Disparität zur Verfügung stehen.

Eine durch die verschiedenen Rauschprozesse hervorgerufene Abweichung der Disparität vom tatsächlichen Wert kann durch eine Standardabweichung σ_{δ} der Abweichungen charakterisiert werden. Mit aus dem Stand der Technik bekannten Systemen werden typischerweise Standardabweichungen von 0,25 Pixeln und mehr erreicht. Im Allgemeinen liegt die Standardabweichung eines gut eingestellten Systems zwischen 0,25 und 0,5. Mit dem hier beschriebenen Korrespondenzanalysator sind hingegen geringere Standardabweichungen erzielbar. Allgemein können die Faltungskerne so ausgewählt sein, dass bei der Bestimmung der Disparität eine örtliche Standardabweichung der Messungen der Disparität von kleiner als 0,2 Pixel, sogar von 0,1 Pixeln bei der Verschiebung eines ebenen Objekts erzielt wird, welches eine Intensitätsmodulation entlang der Richtung der Epipolarlinie, insbesondere inklusive einer Ortsfrequenz im Ortsfrequenzbereich, oder eine entsprechende Textur aufweist, wobei die Verschiebung des Objekts bei gleichbleibender Distanz Z zur Kamera und entlang der Epipolarlinie erfolgt. Die Standardabweichung wird dabei insbesondere wenig durch systematische Fehler beeinflusst, die bei aus dem Stand der Technik bekannten Verfahren entstehen. Mit einem solchen Test kann der Störeinfluss der vorher erläuterten Objektphasen bestimmt werden. Der Test kann mit aufgenommenen Kamerabildern, aber gegebenenfalls auch mit synthetischen oder errechneten, beispielsweise gerenderten Bildern durchgeführt werden.

Die Signale YL_{Signal,v} und YR_{Signal,v} werden aus den Intensitäten der Pixel des jeweiligen Bildbereiches errechnet. Insbesondere können die Signale durch Faltungen der Bildintensitäten mit geeigneten Faltungsfunktionen gewonnen werden, wobei diese Funktionen beispielsweise auch eine Mittelung enthalten oder sein können. Besonders geeignet als harmonische Funktionen sind die Cosinus-Funktion als gerade Funktion und die Sinus-Funktion als ungerade Funktion. Eine Faltung annähernd senkrecht zur Epipolarlinie ist bevorzugt da die Signale annähernd entlang der Epipolarlinie gefaltet werden. Die Reihenfolge der Faltungen senkrecht und entlang der Epipolarlinie ist beliebig, die Faltungen können mit geeigneten Faltungskernen insbesondere auch gleichzeitig erfolgen. Die Auswahl der Faltungskerne zur Ermittlung der Signale folgt in Verbindung mit der speziellen Korrespondenzfunktion wieder dem Ziel, zur Disparitätsberechnung nützliche Informationen zu bewahren und gleichzeitig den Einfluss von Rauschen zu verringern. Dazu ist insbesondere in Weiterbildung vorgesehen, dass die Recheneinrichtung eingerichtet ist,
- aus dem Referenzbildbereich eine Mehrzahl von vₘₐₓ Signalen YL_{Signal,v} durch Faltungsoperationen der Daten des Referenzbildbereichs senkrecht, beziehungsweise annähernd senkrecht zur Epipolarlinie zu erzeugen, und aus den Suchbildbereichen jeweils eine Mehrzahl von vₘₐₓ Signalen YR_{Signal,v} durch Faltungsoperationen der Daten des jeweiligen Suchbildbereichs senkrecht, beziehungsweise annähernd senkrecht zur Epipolarlinie zu erzeugen, wobei die Faltungsoperationen die die Signale erzeugen und die Faltungsoperationen der kₘₐₓ geraden und lₘₐₓ ungeraden Funktionen im Signalmodell so ausgewählt sind, dass letztere Faltungsoperationen jeweils Summen mit gewichteten Signalanteilen einer Mehrzahl von Ortsfrequenzen übertragen, im Folgenden bezeichnet durch unterschiedliche Werte für den Index m, und dass für jedes Signal sich in der Korrespondenzfunktion SSD(δ) eine erste Teilsumme bildet deren Terme unabhängig sind von den Objektphasen Δₘ und eine zweite Teilsumme bildet deren Terme abhängig sind von den Objektphasen Δₘ, wobei
- sich bei einer Akkumulation der ersten Teilsummen jedes der vₘₐₓ Signale eine konstruktive Akkumulation ausbildet bei der sich die einzelnen Terme nicht gegenseitig kompensieren und
- sich bei einer Akkumulation der zweiten Teilsummen jedes der vₘₐₓ Signale eine statistische Akkumulation ausbildet bei der sich diese rauschbehafteten Anteile statistisch zumindest teilweise kompensieren. Die Akkumulation der ersten und zweiten Teilsummen entsteht bei der Berechnung der Werte der Korrespondenzfunktion. Der Begriff der "statistischen Akkumulation" im Sinne dieser Offenbarung bedeutet, dass sich deren Ergebnis durch die Aufsummierung zufälliger, also statistisch verteilter Rauschanteile der Bildsignale ergibt. Diese statistische Akkumulation hat die vorteilhafte Eigenschaft, dass sich durch Rauschen verursachte Fehler zumindest teilweise gegenseitig kompensieren können.

Die bis jetzt erläuterten Bestandteile der Erfindung sind darauf ausgelegt, dass Disparitäten besonders genau, insbesondere subpixelgenau, bestimmt werden können. Das ist aber nicht das gleiche Ziel wie zu ermitteln, ob im Bereich einer bestimmten Disparität eine tatsächliche Korrespondenz wahrscheinlich ist, also die Konfidenz einer möglichen Korrespondenz zu bestimmen. Während bei der Korrespondenzfunktion möglichst alle Informationen ignoriert werden die nicht für die Bestimmung des Disparitätswertes nützlich sind, können die gleichen Informationen für die Konfidenzbestimmung relevant sein. Ein einfaches Beispiel ist ein Suchbildbereich dessen Pixel alle 30% größere Intensitäten haben als die entsprechenden Pixel im Referenzbildbereich. Dieser gleichbleibende Helligkeitsunterschied liefert keine nützlichen Informationen zu einer genauen Disparitätsbestimmung und wird durch die vorzugsweise mittelwertfreien Faltungskerne für die Faltungen der Signale in der Korrespondenzfunktion ausgeblendet, da er sonst nur Rauschen erzeugen würde das beispielsweise eine eher kontrastschwache Textur, die für die genaue Disparitätsbestimmung nützlich ist, überdecken würde. Gleichzeitig gibt es in diesem Beispiel einen zweiten Suchbildbereich, in dem der gleichbleibende Helligkeitsunterschied nur 5% beträgt und diese kleine Abweichung durch eine unterschiedliche Aussteuerung der Kameras hervorgerufen wird. Die Korrespondenzfunktion ermittelt somit sehr genaue aber potentiell mehrdeutige Ergebnisse mit mehr als einem Suchbildbereich als Kandidaten für eine mögliche Korrespondenz. Eine separate Bestimmung der Konfidenz zeigt dann, dass im Bereich des zweiten Suchbildbereichs mit nur 5% Unterschied die Wahrscheinlichkeit einer Korrespondenz höher ist.

Aus diesem Grund wird die Korrespondenzfunktion um eine vorzugsweise unabhängige Konfidenzfunktion ergänzt. Im Unterschied zu anderen Verfahren die nicht zwischen diesen beiden Zielstellungen trennen und beispielsweise nur anhand einer Funktion Disparität und Konfidenz bestimmen, hat der hier offenbarte Ansatz den Vorteil, sowohl eine rauscharme und somit genaue Disparitätsbestimmung als auch eine gute Konfidenzbestimmung zu ermöglichen, anstatt nur einen Kompromiss zwischen beidem zuzulassen. Deshalb ist gemäß einem weiteren Aspekt unabhängig von der hierin beschrieben Bestimmung einer Korrespondenz, insbesondere auch unabhängig von der hierin beschriebenen speziellen Faltung von Bildsignalen ein Korrespondenzanalysator vorgesehen, welcher eine Recheneinrichtung umfasst, die eingerichtet ist,
- aus den beiden Einzelbildern jeweils Bildbereiche auszuwählen, wobei zumindest ein Bildbereich eines der Einzelbilder als Referenzbildbereich ausgewählt wird, und im anderen Einzelbild Suchbildbereiche ausgewählt werden, und aus den Bildbereichen mehrere Kandidaten eines Disparitätswerts zu berechnen, wobei die Recheneinrichtung weiter eingerichtet ist, aus dem Referenzbildbereich und den Suchbildbereichen Informationen auszuwählen, und anhand dieser Informationen Konfidenzvektoren für mögliche Disparitätswerte auszuwählen, die geeignet sind abzuschätzen, ob das jeweilige Ergebnis eine tatsächliche Korrespondenz des jeweiligen Suchbildbereiches mit dem Referenzbildbereich anzeigt. Dies ist insbesondere dann hilfreich, wenn die Konfidenzvektoren Informationen bereitstellen, die nicht oder nicht in gleicher Qualität schon durch die Korrespondenzfunktion bereitgestellt werden. Deshalb ist die Recheneinrichtung weiterhin eingerichtet, Werte von zumindest einem Element des Konfidenzvektors mittels Funktionen auszuwählen, die zumindest für manche Klassen von Referenz- und Suchbildbereichen Kandidaten mit höherer Wahrscheinlichkeit als gültig oder ungültig klassifizieren können als dies allein durch die Korrespondenzfunktion möglich ist. Der oben genannte gleichbleibende Helligkeitsunterschied ist ein Beispiel hierfür.

Trotz der rauscharmen Bestimmung von Disparitäten verbleibt ein Restrauschen das sowohl die Korrespondenzfunktion als auch die Konfidenzwerte betreffen kann. Das verbleibende Rauschen kann durch Anwendung eines Tiefpassfilters auf die für mehrere Referenzbildbereiche berechneten Disparitätswerte oder Konfidenzvektoren weiter reduziert werden. Im Unterschied zum Stand der Technik, insbesondere zu anderen Verfahren die einen Tiefpass auf die Signale anwenden bevor diese zur Disparitätsbestimmung verwendet werden, wird bei vergleichbarem Kontrast und vergleichbarer Auflösung der Disparitätsmessungen im Einzelbild durch die Verarbeitung der vollen Signalbandbreite und das der Korrespondenzanalyse nachgeschaltete Tiefpassfilter eine wesentlich effektivere Rauschminderung erreicht. Des weiteren können Messergebnisse mit geringerer Konfidenz weniger stark von einem Tiefpassfilter einbezogen werden. Dementsprechend ist in einer Ausführungsform vorgesehen, dass die Recheneinrichtung eingerichtet ist, zumindest eine der folgenden Größen mit einem Tiefpassfilter zu filtern: die errechneten Disparitätswerte, die Konfidenzwerte, oder die durch Konfidenzwerte gewichteten Disparitätswerte.

Die Suchbildbereiche werden so ausgewählt, dass diese mindestens annähernd entlang, beziehungsweise auf der Epipolarlinie liegen. Die Signale der Suchbildbereiche bilden entsprechend eindimensionale Funktionen annähernd entlang der Epipolarlinie. Die Disparität ist weiterhin durch die Kurvenlänge zwischen den korrespondierenden Bildelementen entlang der Epipolarlinie gegeben. Mit den Begriffen "annähernd entlang der Epipolarlinie" oder auch "annähernd senkrecht zur Epipolarlinie" wird zum Ausdruck gebracht, dass die tatsächliche Epipolarlinie aufgrund von Ungenauigkeiten der Justage oder auch beispielsweise optischer Verzerrungen nicht exakt entlang der Bildrichtungen der rektifizierten Bilder verlaufen müssen. Im Rahmen der gegebenen Ungenauigkeiten ist daher der Begriff "annähernd entlang der Epipolarlinie" mit "entlang der Epipolarlinie" und "annähernd senkrecht zur Epipolarlinie" mit "senkrecht zur Epipolarlinie" gleichzusetzen.

Allgemein ist es zweckmäßig, die Abfolge der Suchbildbereiche so zu wählen, dass die Epipolarlinie durch die Suchbildbereiche verläuft, beziehungsweise, dass die Suchbildbereiche die Epipolarlinie einschließen. Solange die Epipolarlinie durch einen Suchbildbereich hindurchläuft, liegt der Suchbildbereich annähernd auf der Epipolarlinie.

Der zu erwartende Disparitätsbereich ist ein vorgegebener Bereich in x-Richtung, beziehungsweise der Richtung entlang der Epipolarlinie, innerhalb dessen ein zum Referenzbildbereich korrespondierender Suchbildbereich maximal liegen kann. Der zu erwartende Disparitätsbereich kann beispielsweise ±50 Pixel in x-Richtung um den Pixel des Digitalbilds liegen, für den die Disparität bestimmt werden soll.

Die Erfindung betrifft weiter auch das insbesondere mit dem hierin beschriebenen Korrespondenzanalysator beschriebene Verfahren zur Bestimmung der Disparität. Mithin wird ein Verfahren zur Bestimmung der Disparität korrespondierender Bildelemente in zwei vorzugsweise auf den Stereonormalfall rektifizierten digitalen Einzelbildern bereitgestellt, bei welchem zur Bestimmung der Disparität δ mittels einer Recheneinrichtung
- aus den beiden Einzelbildern jeweils Bildbereiche ausgewählt werden, wobei der Bildbereich eines der Einzelbilder als Referenzbildbereich ausgewählt wird, und im anderen Einzelbild eine Abfolge von Suchbildbereichen ausgewählt wird, und
- aus dem Referenzbildbereich eine Mehrzahl von vₘₐₓ Signalen YL_{Signal,v} und aus den Suchbildbereichen jeweils eine Mehrzahl von vₘₐₓ Signalen YR_{Signal,v} erzeugt wird, und
- die Mehrzahl der Signale YL_{Signal,v} des Referenzbildbereichs mit in einem Speicher gespeicherten geraden und ungeraden Faltungskernen im Ortsfenster gefaltet werden, wobei die geraden Faltungskerne eine gewichteten Summe von mehreren geraden harmonischen Funktionen unterschiedlicher Ortsfrequenzen und die ungeraden Faltungskerne eine gewichtete Summe von mehreren ungeraden harmonischer Funktionen unterschiedlicher Ortsfrequenzen umfassen,
- und für jeden der Suchbildbereiche die Signale YR_{Signal,v} mit den, beziehungsweise den vorgenannten im Speicher gespeicherten Faltungskernen im Ortsfenster gefaltet und
- für jedes Signalpaar YL_{Signal,v} und YR_{Signal,v} die Differenzen der jeweiligen Faltungsergebnisse gebildet, und
- für jeden der Suchbildbereiche die Differenzen der Faltungsergebnisse nichtlinear verarbeitet und zu einem Funktionswert einer Korrespondenzfunktion SSD(δₚ) an der Stelle δₚ akkumuliert werden oder aus den Differenzen der Faltungsergebnisse die erste Ableitung SSD'(δₚ) der Korrespondenzfunktion SSD(δₚ) nach δₚ an der Stelle δₚ ermittelt wird und damit ein Funktionswert einer Korrespondenzfunktion SSD(δₚ) oder deren Ableitung an der Stelle δₚ gebildet wird, wobei δₚ den Abstand des Referenzbilds vom Suchbild bezeichnet, und
- lokale Extrema der Korrespondenzfunktion SSD(δₚ) oder Nulldurchgänge der Ableitung SSD'(δₚ) der Korrespondenzfunktion SSD(δₚ) ermittelt, und die Stelle δₚ eines der lokalen Extrema oder von einem der Nulldurchgänge als Disparität δ ausgegeben wird, oder
- ein subpixelgenauer Wert der Disparität an der Stelle δₚ errechnet und ausgegeben wird.

Die Erfindung betrifft auch eine Stereokamera mit zwei Kameras, welche jeweils einen Kamerasensor und ein Objektiv umfassen, wobei die Hauptpunkte der Objektive um eine Basisbreite B zueinander beabstandet angeordnet sind, und wobei die Stereokamera einen wie vorstehend beschriebenen Korrespondenzanalysator umfasst, beziehungsweise eingerichtet ist, das oben beschriebene Verfahren durchzuführen. Eine Anordnung mit zwei Kameras ist aber nicht zwingend. Prinzipiell können 3D-Daten auch aus sequentiell an verschiedenen Orten aufgenommen Digitalbildern gewonnen werden.

Eine wesentliche Anwendung des Korrespondenzanalysators liegt in der Bestimmung der Disparität in Stereoaufnahmen. Demgemäß betrifft die Erfindung auch eine Stereokamera mit einem Korrespondenzanalysator, sowie einer Aufnahmevorrichtung zur Aufnahme von Paaren von Digitalbildern unter zueinander gleich beabstandeten Blickrichtungen mit sich überschneidenden Aufnahmebereichen. Die Recheneinrichtung des Korrespondenzanalysators errechnet aus den Disparitäten korrespondierender Bildelemente die Distanzkoordinaten der Bildelemente. Der Abstand der Blickrichtungen (Hauptpunkte) ist die Basis B. Die Distanzkoordinate Z kann dann von der Recheneinrichtung gemäß der obigen Gleichung (1) als Z=B·f/ δ errechnet werden (mit δ in [mm]).

Die Erfindung, deren Hintergrund und Vorteile werden nachfolgend auch unter Bezugnahmen auf die beigeschlossenen Figuren näher erläutert.

### Kurzbeschreibung der Figuren

Fig. 1 zeigt ein Kameraobjektiv mit einer Justageeinrichtung zur Einstellung der Lage der optischen Achse.
Fig. 2 zeigt ein durch die Abbildung einer Kamera verzeichnetes Raster und ein rektifiziertes Raster.
Fig. 3 zeigt Epipolargeometrien für den allgemeinen Fall und den Stereonormalfall.
Fig. 4 zeigt Graphen der zueinander verschobenen Bildsignale YL_{Signal,v} und YR_{Signal,v}.
Fig. 5 zeigt Funktionswerte beispielhafter Faltungskerne zur Faltung der Bilddaten in y-Richtung, senkrecht zur Epipolarlinie.
Fig. 6 zeigt 3D-Bilder vor (Teilbild (a)) und nach einer Tiefpass-Filterung (Teilbild (b)).
Fig. 7 zeigt Graphen von Ortsfrequenz-Profilen.
Fig. 8 zeigt den quasi-linearen Zusammenhang (Kennlinie) zwischen realer Verschiebung δₛᵢₘ und berechneter Subpixelinterpolation δ mit zufälligen Amplituden A, Phasen Δ und Disparitäten δₛᵢₘ der Bildeingangssignale (Graph (a)) und dem mittleren Subpixel-Interpolationsergebnis aller Signale (Graph (b)) im Definitionsbereich <-0,5px ... +0,5px>.
Fig. 9 zeigt ein Kamerabild und zugehörige, mit dem Korrespondenzanalysator ermittelte 3D-Daten.
Fig. 10 zeigt Funktionswerte eines Satzes von zwei geraden und zwei ungeraden Faltungskernen im Signalmodell zur Faltung von Bildsignalen in x-Richtung.
Fig. 11 zeigt die Funktionswerte eines geraden Faltungskerns im Signalmodell in Verbindung mit den ungeraden Faltungskernen aus Fig. 10.
Fig. 12 zeigt eine Stereokamera mit einem Korrespondenzanalysator.
Fig. 13 zeigt ein Beispiel eines Verlaufs der Korrespondenzfunktion SSD(δ) in einem definierten Disparitätsbereich.
Fig. 14 zeigt schematisch die Berechnung der Datenströme mit den Features der Kamerabilder.
Fig. 15 zeigt schematisch eine Hardwarestruktur zur Verarbeitung der Datenströme.
Fig. 16 zeigt eine Stereokamera, welche ein Objekt mit einer sinusförmigen Helligkeitsmodulation erfasst.
Fig. 17 zeigt Wichtungen der einzelnen Pixelwerte. Dabei zeigen das Teilbild (a) eine Wichtung der Pixelwerte mit einem Boxfilter und das Teilbild (b) eine Wichtung mit einem Gaußfilter.

### Rektifizierung

Aufgabe der Rektifizierung ist die Herstellung der Epipolargeometrie nach dem Vorbild des Stereonormalfalls. Eine nichtlineare geometrische Transformation korrigiert Verzeichnung (Distorsion), projektive Verzerrung und relative Orientierung beider Abbildungen (linkes und rechtes Bild) so, dass Objektpunkte unabhängig von ihrer Distanz subpixelgenau auf gleichen Zeilen der linken bzw. rechten Kamerabildes abgebildet werden. Damit reduziert sich die Korrespondenzanalyse auf ein eindimensionales Problem.

Für eine möglichst exakte Rektifizierung können drei Teilschritte durchgeführt werden:

### Korrektur der inneren Orientierung der Kamera

Hierbei handelt es sich um eine Korrektur der nichtlinearen geometrischen Verzeichnungen (Distorsion) des Objektivs, der Brennweite f und Sensorunebenheiten der Kamera.

### Justage der Komplanaritätsbedingung

Die windschiefen optischen Achsen des Stereosystems stellen außerhalb des Kalibrierabstandes eine große Fehlerquelle dar. Eine restriktive Komplanaritätsbedingung beider Achsen reduziert diesen Fehler auf ein Minimum. Diese Bedingung kann in der Praxis durch eine exzentrische Hülse, in der das z.B. als Mikroobjektiv ausgeführte Kameraobjektiv gehaltert ist, realisiert werden. Die relative Lage der optischen Achsen kann z.B. durch Messung eines Testbilds auf 2 oder mehr Distanzen bestimmt werden, anschließend kann durch Drehen eines Exzenters die Lage der einen optischen Achse justiert werden, so dass beide Achsen komplanar sind.

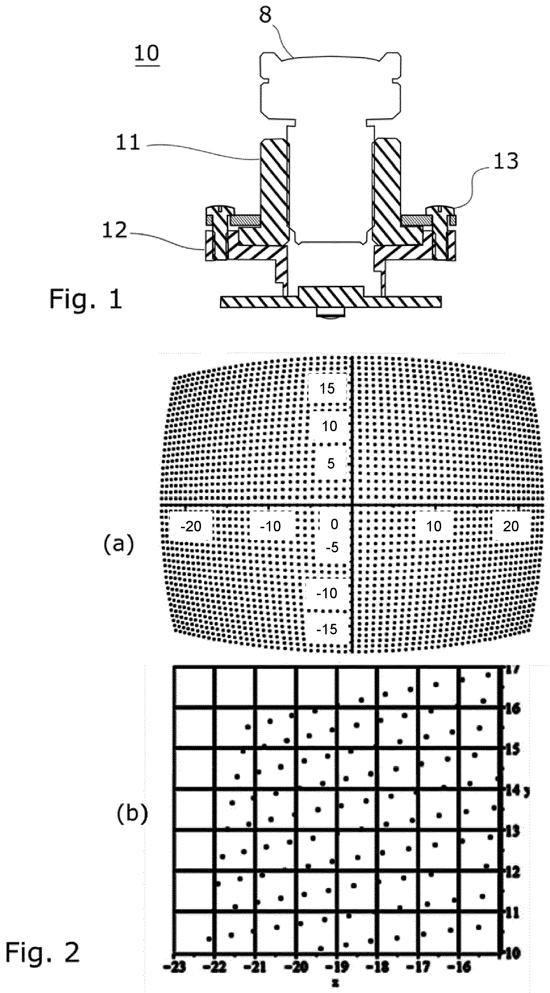

Fig. 1 zeigt ein Ausführungsbeispiel einer Objektivhalterung 10 mit einem Objektiv 8. Die Objektivhalterung 10 umfasst zwei zueinander drehbare Exzenterelemente 11, 12. Das Objektiv 8 ist in das Exzenterelement 11 eingeschraubt. Durch Verdrehen der Exzenterelemente 11, 12 kann die Lage der optischen Achse des Objektivs 8 ohne Änderung des Abstands des Objektivs zum Bildsensor und damit unter Beibehaltung der Lage der Bildebene geändert werden. Nach erfolgter Justage können die Exzenterelemente 11, 12 durch Schrauben 13 aufeinander geklemmt und damit zueinander fixiert werden. Gemäß einer Ausführungsform ist dazu vorgesehen, dass eines der Objektive im justierbaren Exzenter mit den beiden Exzenterelementen 11, 12 gehaltert ist, so dass durch Drehen des Objektivs im Exzenter gegenüber einem Testbild die Komplanarität der optischen Achsen der Objektive justiert werden kann. Diese Ausführungsform einer Stereokamera kann insbesondere auch unabhängig vom Korrespondenzanalysator gemäß dieser Offenbarung und der hierin beschriebenen besonderen Verarbeitung der Bilddaten eingesetzt werden. Es ist dem Fachmann ersichtlich, dass eine Stereokamera mit einem Exzenter zur Einstellung komplanarer Achsen auch in Verbindung mit anderen Bildverarbeitungsverfahren möglich und sinnvoll. Daher ist allgemein, ohne Beschränkung auf den hierin beschriebenen Korrespondenzanalysator eine Stereokamera 2 mit zwei Kameras 20, 21 vorgesehen, welche jeweils einen Kamerasensor 5 und ein Objektiv 8, 9 umfassen, wobei die Hauptpunkte der Objektive 8, 9 mit den Kamerasensoren 5 um eine Basisbreite B zueinander beabstandet angeordnet sind, und wobei zumindest ein justierbarer Exzenter vorgesehen ist, mit welchem durch Verstellung desselben die Orientierung und Lage der optischen Achse eines der Objektive 8. 9 geändert werden kann, so dass ein Komplanaritätsfehler der optischen Achsen der Objektive ausgleichbar ist. Der Exzenter kann dabei die oben beschriebene Konstruktion aufweisen, denkbar sind aber auch Abwandlungen davon. So wäre es beispielsweise denkbar, die Objektive fest zueinander montiert vorzusehen und eine der Kameras mit dem Exzenter gegenüber dem zugehörigen Objektiv zu verstellen.

### Korrektur der äußeren Orientierung der Kamera

Nach Durchführung der Korrektur der inneren Orientierung der Kamera verbleibt die äußere Ausrichtung. Hierbei handelt es sich um eine affine Transformation mit Rotation und Translation.

Die Rektifizierung erfolgt nach dem Prinzip einer virtuellen Kamera (VIRCAM). In der Kamera sind Rektifizierungsdaten in Form einer Tabelle hinterlegt, welche für jede Zielkoordinate (i,j) im epipolaren Raster die Lageinformation der realen (x,y) Koordinaten im Bild I enthält. Da die Koordinaten (x,y) rationale Zahlen sind, ist eine Interpolation in einer 2x2 px Umgebung des Bildpunktes zur Rauschminimierung vorteilhaft. Die VIRCAM tastet in einem virtuellen Raster ab. Es erfolgt für jeden virtuellen Rasterpunkt eine Interpolation in der 2x2 px Umgebung des Bildes I auf das Zielraster (i,j). Diese Geometriekorrektur ist nichtlinear.

Teilbild (a) der Fig. 2 zeigt dazu ein Beispiel der Verzeichnung eines regelmäßigen Rasters im Kamerabild. Durch die Objektivverzeichnung (Distorsion) wird ein regelmäßiges Raster des Objektraums wie dargestellt beispielsweise tonnenförmig verzeichnet. Diese Verzeichnung und eventuelle projektive Verzerrungen werden durch die Rektifizierung in der VIRCAM behoben. Dabei erfolgt eine virtuelle Transformation der Bildkoordinaten (x,y) in das Koordinatensystem (i,j) der VIRCAM. Durch diese Rektifizierung verhält sich das Stereobildpaar der VIRCAM wie der Stereonormalfall. In Teilbild (b) ist ein Ausschnitt des als Gitter dargestellten Zielrasters überlagert zu den als Punkten gezeigten realen (x,y)-Koordinaten gezeigt.

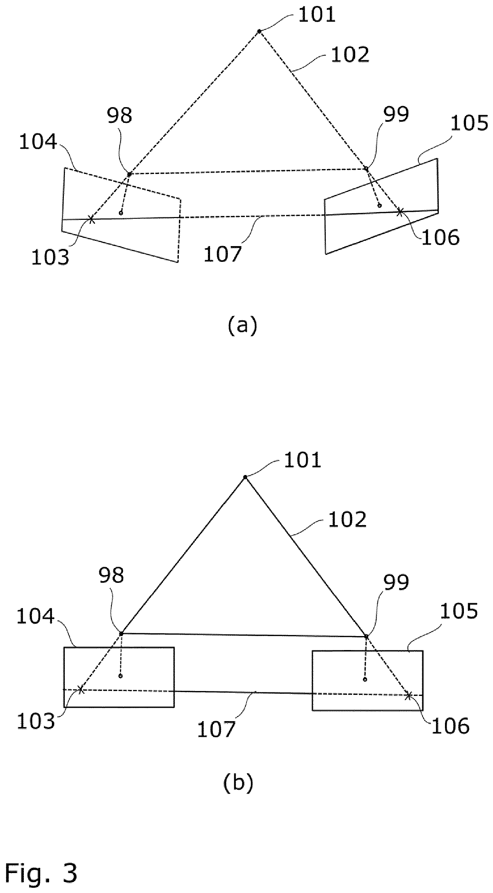

Fig. 3 zeigt die Epipolargeometrie eines Stereobildpaares mit den Bildern 104, 105, den Epipolen 98, 99 und der Epipolarebene 102. Teilbild (a) zeigt dabei den allgemeinen Stereofall. Teilbild (b) stellt den Stereonormalfall dar. Die Epipolargeometrie beschreibt den linearen Zusammenhang zwischen der Orientierung der Kameras, einem Bildpunkt 103 des Bildes 104 und dessen Punktkorrespondenz im Bildpunkt 105 des anderen Bildes 105. Die korrespondierenden Bildpunkte 103, 106 liegen auf der Epipolarlinie 107. Ist eine Punktkorrespondenz gefunden, ergibt sich der zugehörige 3D-Punkt 101 aus den Parametern der Stereokamera (Brennweite und Basis) und der Bildpunktkorrespondenz, also den zum 3D-Punkt korrespondierenden Bildpunkten 103, 106.

### Mathematische Herleitung

Aus den rektifizierten Bildern einer Stereokamera im Stereonormalfall (YL_{Image} bzw. YR_{Image}) werden jeweils vₘₐₓ zeilenförmige Signale YL_{Signal,v} bzw. YR_{Signal,v} (für v=1..vₘₐₓ ) ausgewählt. Diese zeilenförmigen Signale können direkt aus den rektifizierten Bildern (z.B. die Intensitätswerte auf der jeweiligen Zeile in YL_{Image} und YR_{Image}) oder nach einer vorangegangenen Faltung mit k_{y} geraden und l_{y} ungeraden Faltungskernen senkrecht zur Zeilenrichtung der rektifizierten Bilder entnommen werden. Weiterhin kann die Faltung in y-Richtung auch nach der Faltung in x-Richtung, also zur Gewinnung der zeilenförmigen Signale vorgenommen werden. Die Reihenfolge der Faltungen ist also vertauschbar. Insbesondere kann die Recheneinrichtung dazu ausgebildet sein, die Bildbereiche mit einem Satz von vₘₐₓ = k_{y} + l_{y} Faltungskernen in y-Richtung zu falten, sodass eine Anzahl von vₘₐₓ Signalpaaren YL_{Signal,v} und YR_{Signal,v} entstehen, die in einem Ortsfenster von -T/4 ... +T/4 definiert sind. Die y-Richtung ist die Bildrichtung annähernd senkrecht zur Epipolarlinie. Für eine optimale Berechnung der Disparität ist eine Bandbegrenzung auf das tatsächlich vorhandene Spektrum der Signale vorteilhaft. Empfehlenswerte Größen für das Ortsfenster und T lassen sich analog zu den weiter unten beschriebenen Überlegungen zu den Größen der Faltungs-Fenster in x-Richtung finden. Etwaige Faltungen in y-Richtung sind separierbar von den weiter unten beschriebenen Faltungen in x-Richtung. Dabei ist es nicht zwingend, aber vorteilhaft, zuerst in y-Richtung zu falten.

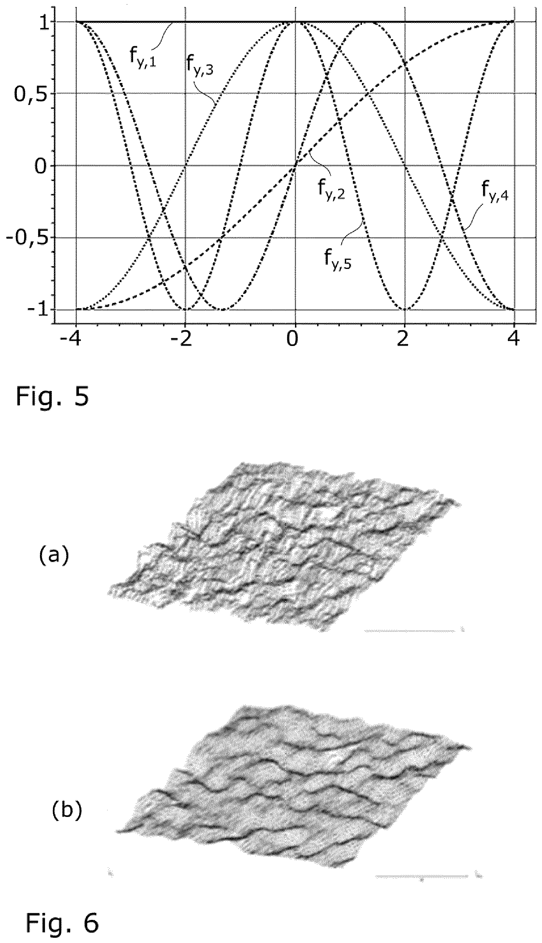

Beispielhafte Faltungskerne f_{y,v} für vₘₐₓ=5 und T=16px sind in Tabelle 1 dargestellt (Spalten sind die jeweilige Position in einem Faltungskern). Fig. 5 zeigt die Funktionswerte der Faltungskerne in y-Richtung aus Tabelle 1. Für exakt rektifizierte Stereobilder existiert eine große Anzahl ähnlicher Faltungskerne mit gleicher Wirkung, und vₘₐₓ kann auch andere Werte als 5 haben. In realen Applikationen ist die Rektifizierung toleranzbehaftet, das daraus resultierende Rauschen wird weiter unten betrachtet. Wie ebenfalls weiter unten erläutert, kann Rauschen durch eine andere Form von Faltungskernen weiter reduziert werden.

**Tabelle 1**

| *y* | -3,5 | -2,5 | -1,5 | -0,5 | 0,5 | 1,5 | 2,5 | 3,5 |
|---|---|---|---|---|---|---|---|---|
| *f*_{*y*,1} | 1 | 1 | 1 | 1 | 1 | 1 | 1 | 1 |
| *f*_{*y*,2} | -0,97 | -0,83 | -0,55 | -0,19 | 0,19 | 0,55 | 0,83 | 0,97 |
| *f*_{*y*,3} | -0,9 | -0,37 | 0,37 | 0,9 | 0,9 | 0,37 | -0,37 | -0,9 |
| *f*_{*y*,4} | 0,78 | -0,18 | -0,93 | -0,52 | 0,52 | 0,93 | 0,18 | -0,78 |
| *f*_{*y*,5} | 0,64 | -0,64 | -0,64 | 0,64 | 0,64 | -0,64 | -0,64 | 0,64 |

Es ist dabei in einer Weiterbildung auch möglich nur einen Teil der oben aufgelisteten Faltungskerne zu verwenden. So kann beispielsweise von den fünf in der Tabelle gelisteten Faltungskernen einer der Faltungskerne entfallen, beziehungsweise eine Menge von vier Faltungskernen ausgewählt werden. Nach einer Ausführungsform werden dabei die Faltungskerne f_{y,2}, f_{y,3}, f_{y,4} und f_{y,5}, verwendet, beziehungsweise der Faltungskern f_{y,1} weggelassen. Diese Ausführungsform ergibt immer noch gute Ergebnisse bei leicht erhöhtem Rauschen, aber dafür reduziertem Rechenaufwand.

Somit entstehen für jede Zeile y (entlang der Epipolarlinien) diskrete eindimensionale Funktionen, die als YL_{Signal,v}(x) und YR_{Signal,v}(x), jeweils für die linke und rechte Kamera, bezeichnet werden. Generell können auch diese Faltungskerne aus Funktionswerten zusammengesetzt werden, die eine gewichteten Summe von mehreren geraden harmonischen Funktionen (als "gerade Faltungskerne" bezeichnet), beziehungsweise eine gewichtete Summe von mehreren ungeraden harmonischen Funktionen (als "ungerade Faltungskerne" bezeichnet), umfassen. Die harmonischen Funktionen tasten dabei jeweils unterschiedliche Ortsfrequenzen ab.

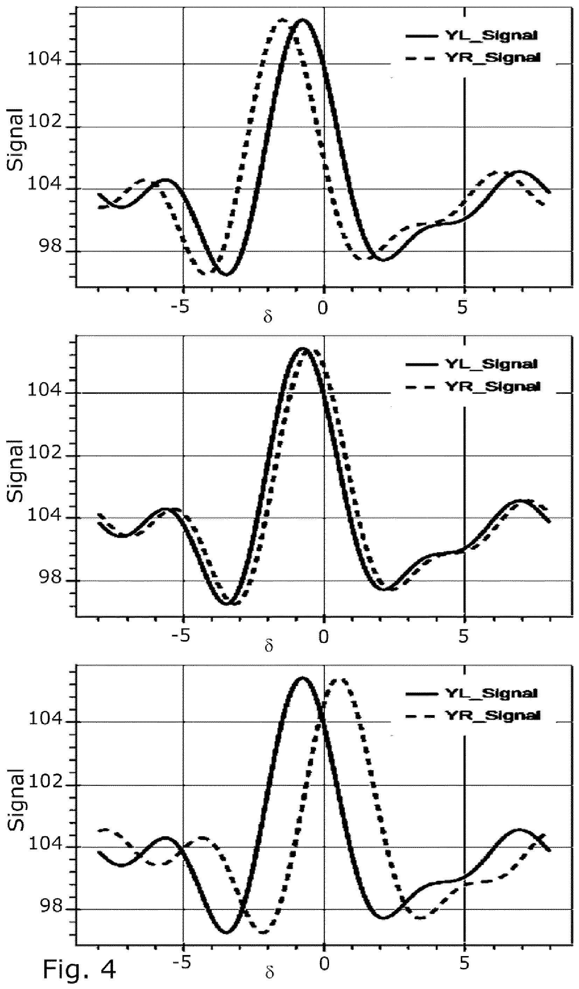

Aus diesen werden anschließend für bestimmte Zeilen y Teilsignale entnommen, und zwar innerhalb von Fenstern an den Positionen x in YL_{Signal,v} und (x+δ) in YR_{Signal,v}. Die linke Kamera ist dabei die Referenzkamera. Die rechte Kamera kann auch als Referenzkamera gewählt werden (d.h., x in YR_{Signal,v} und (x+δ) in YL_{Signal,v}). Anschließend wird für die Position x die Ähnlichkeit beider Fenster als Funktion der Verschiebung δ innerhalb eines Disparitätsbereichs berechnet und somit eine Korrespondenzfunktion SSD(δ) gebildet. Abschließend werden Extrema der Korrespondenzfunktion SSD(δ) gefunden, gegebenenfalls anhand weiterer Kriterien gefiltert und die Korrespondenzfunktion SSD(δ) nach δ gelöst, so dass einer Position (x,y) im Bild der Referenzkamera die so ermittelten Disparitäten δ in der Bildebene zugeordnet werden können. Zuletzt werden die Disparitäten δ in das Objektkoordinatensystem zurück projiziert und 3D-Daten berechnet. Fig. 4 zeigt dazu beispielhafte Signale YL und YR in unterschiedlich zueinander pixelweise zueinander verschobener Position. Im mittleren Diagramm entspricht die relative Verschiebung der Disparität δ, beim oberen Diagramm beträgt die Verschiebung δ-1, im unteren Diagramm beträgt die Verschiebung δ+1. Die Übereinstimmung der Signale YL, YR ist im mittleren Graph am größten, weshalb die Disparität δ wahrscheinlich der tatsächlichen Disparität des lokal abgebildeten Objekts nahe kommt. Allerdings wird die tatsächliche Disparität aufgrund der pixelweisen Verschiebung nicht exakt getroffen.

Zur Erzeugung einer hohen Datenqualität der 3D-Daten ist eine rauscharme Interpolation der Disparität δ zwischen den Rasterpositionen der diskreten Signalfunktionen YL_{Signal,v}(x) und YR_{Signal,v}(x) erforderlich. Dieser Vorgang wird als Subpixelinterpolation bezeichnet und erfolgt mittels der Recheneinrichtung des Korrespondenzanalysators, wie weiter unten genauer erläutert wird. Für eine erfolgreiche Subpixelinterpolation sind zwei Voraussetzungen vorteilhaft:
möglichst vollständige und exakte Akkumulation sehr kleiner, verrauschter Signalanteile, die im Ortsfrequenzspektrum verteilt sind, und
Erzeugung eines vorbekannten und von der konkreten Signalform der gefensterten Signale weitgehend unabhängigem Funktionsverlaufs der Korrespondenzfunktion SSD(δ) in der Nähe des Extremums.

Aufgrund einer Analogie zu der in der Nachrichtentechnik im Zeitbereich formulierten Küpfmüllerschen Unbestimmtheitsrelation (1924, in weiterer Analogie zu Heisenberg) besteht ein Widerspruch zwischen einer hohen Ortsauflösung und gleichzeitig hohen Ortsfrequenzauflösung. Es ist deshalb unmöglich, mit einem für eine hohe Ortsauflösung wünschenswert kleinen Fenster, z.B. der Breite von 8px, die Signale YL_{Signal,v} und YR_{Signal,v} so zu falten, dass eine genügend kleine Bandbreite im Ortsfrequenzbereich entsteht. Nach der Faltung ist das Signal auf der zur weiteren Interpolation verwendeten Ortsfrequenz von Komponenten auf anderen Ortsfrequenzen überlagert. Das Faltungsergebnis des realen Signals kann damit nicht fehlerfrei, wie das Faltungsergebnis eines harmonischen Signals, betrachtet werden. Die Bestimmung der Phase auf nur einer Ortsfrequenz ist nach dem Stand der Technik damit rauschbehaftet.

Das Ziel der Erfindung besteht darin, eine Anzahl von mehreren, in ihrer Gesamtwirkung optimierten Faltungen innerhalb der Fenster von YL_{Signal,v} und YR_{Signal,v} durchzuführen und die Faltungsergebnisse so zu einer Korrespondenzfunktion SSD(δ) zu kombinieren, dass sich die theoretisch unvermeidbaren Fehler weitgehend kompensieren (u.a. durch eine spezielle Auswahl der Signalformen kleiner Faltungskerne). Im Gegensatz zu bekannten Verfahren müssen damit die grundlegenden Messfehler der gefensterten Fouriertransformation (WFT) nicht durch vorangegangene Tiefpassfilterung der Bildsignale reduziert werden. Etwaige nach der Kompensation verbleibende Restfehler werden durch eine Tiefpassfilterung erst nach der Verarbeitung zu 3D-Daten bzw. zu der diesen 3D-Daten zugrundeliegende Menge an Disparitäts-Messergebnissen beseitigt (im Folgenden Ausgangstiefpassfilter genannt). Im Detail besteht das Ziel darin, das in der Korrespondenzfunktion SSD(δ) implizierte akkumulierte gemeinsame Disparitätssignal, bestehend aus Signalkomponenten mit mehreren Ortsfrequenzen, allgemeingültig zu detektieren. Die Lösung der Korrespondenzfunktion SSD(δ) nach δ wird im Folgenden als Gruppendisparität bezeichnet.

Zwecks einfacherer Darstellung wird zuerst eine ideale Stereokamera und ein stetiges Signalmodell angenommen, und die Betrachtung dann weiter unten auf den realen Fall erweitert. Eine ideale Stereokamera liefert vereinfacht zwei ideale zeilenförmige Signale YL_{Ideal} und YR_{Ideal} (statt YL_{Signal,v} und YR_{Signal,v}), die als Fourierreihen mit mₘₐₓ Gliedern im Intervall T modelliert werden können, wie in Gleichung (4) gezeigt. $\begin{matrix}{YL}_{Ideal} = {\sum }_{m = 1}^{{m}_{max}} {A}_{m} ⋅ cos \left(m⋅ω⋅\left(x+{Δ}_{m}\right)\right) \\ {YR}_{Ideal} = {\sum }_{m = 1}^{{m}_{max}} {A}_{m} ⋅ cos \left(m⋅ω⋅\left(x+{Δ}_{m}+δ\right)\right)\end{matrix}$

Da bei einer idealen Stereokamera die Übertragungsfunktionen beider Kameras gleich sind und bestimmte Signalfehler (z.B. Reflexionen) fehlen, kann angenommen werden dass die Amplituden Aₘ und Phasen Δₘ für beide Kameras gleich sind. YL_{Ideal} und YR_{Ideal} unterscheiden sich damit nur durch die Verschiebung um die Disparität δ. Der Index bzw. Faktor m bestimmt die jeweilige Ortsfrequenz im idealen Signal. ω wird definiert als 2*π/T.

Als nächster Schritt werden gerade Faltungskerne f_{even,k} und ungerade Faltungskerne f_{odd,l} definiert, mit denen YL_{Ideal} und YR_{Ideal} verarbeitet werden sollen. Diese Faltungskerne können wiederum als Fourierreihen in Phasenform modelliert werden, wie in Gleichung (5) gezeigt. Die Koeffizentenvektoren c_{k,n} und s_{l,n} in den Faltungskernen von Gleichung (5) bestimmen die Gewichtung der jeweiligen harmonischen Funktion auf Ortsfrequenz n des Faltungskerns. nₘₐₓ ist gleich mₘₐₓ aus Gleichung (4). kₘₐₓ und lₘₐₓ sind die Anzahl der geraden bzw. ungeraden Faltungskerne. $\begin{matrix}{f}_{even , k} = {\sum }_{n = 1}^{{n}_{max}} {c}_{k , n} ⋅ cos \left(n⋅ω⋅x\right) \\ {f}_{odd , l} = {\sum }_{n = 1}^{{n}_{max}} {s}_{l , n} ⋅ sin \left(n⋅ω⋅x\right)\end{matrix}$

Die idealen Signale YL_{Ideal} und YR_{Ideal} sowie die Faltungskerne f_{even,k} und f_{odd,1} sind stetige Funktionen. Die Digitalisierung wird getrennt betrachtet. Das Ortsfenster hat vorzugsweise die halbe Größe des Intervalls T, insbesondere -T/4 bis +T/4. Dies hat zur Folge, dass einige der Faltungskerne unvollständige Perioden, also Fragmente enthalten. Die Einbeziehung von Fragmenten hat den Vorteil, dass mehr Ortsfrequenzen in einen kleinen Faltungskern gepackt werden können. Gemäß einer Ausführungsform ist es vorgesehen, das Fenster allgemein kleiner als das Intervall T zu wählen. Es sind jedoch auch andere Fenstergrößen als -T/4 bis +T/4 anwendbar.

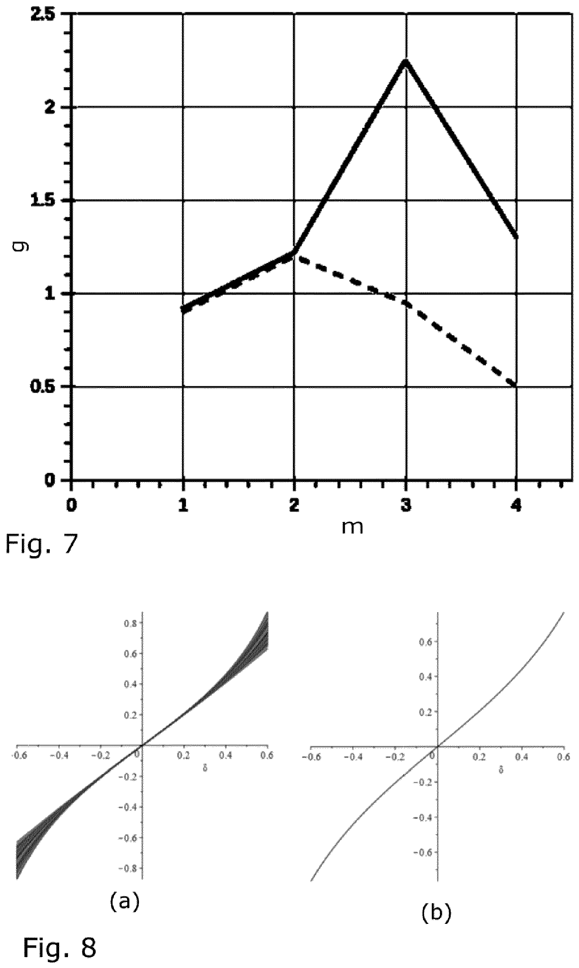

In den Darstellungen des Ausführungsbeispiels wird das Intervall T = 16 px mit der Fenstergröße T/2 = 8 px verwendet. In ein solches Fenster können im Ortsfrequenzbereich bevorzugt 4 Ortsfrequenzen hineingelegt werden (also mₘₐₓ=4 in Gleichung (4)). Die Größe des Fensters und damit die Anzahl an Ortsfrequenzen ist abhängig von der gewünschten Anwendung, meist genügen aber 4 Ortsfrequenzen. Mittels der weiter unten erklärten Profile und entsprechender Auswahl der Faltungskerne kann der Einfluss einzelner Ortsfrequenzen auf die Korrespondenzfunktion verstärkt oder geschwächt werden. Die optimale Fenstergröße kann durch einen Kompromiss zwischen 3D-Auflösung und Signal/Rauschverhältnis bestimmt werden. Dieser Kompromiss ist abhängig vom Bildinhalt und der gewünschten Anwendung. Die sinnvolle obere Ortsfrequenzgrenze entspricht einer Periode von 4 Pixel im Bild. Höhere Ortsfrequenzen würden ein unerwünschtes nichtlineares Verhalten der Phasenkennlinie (Fig. 8) erzeugen. Bei modernen CMOS Kamerasensoren mit 2 bis 4 µm Pixelabstand ist dieser Signalanteil gering, weil eine Begrenzung durch die OTF der Objektive und die Tiefpasswirkung des in Farbkameras verwendeten Filters für die Umwandlung des BAYER-Formats in YUV auf ca. 100 Linienpaare pro mm besteht.

Mit Hilfe der Fourieranalyse im Intervall T sollen nun für die Gruppendisparität optimale Faltungskerne bestimmt werden. Zur vereinfachten Darstellung der mathematischen Zusammenhänge wird zuerst angenommen, dass die Faltungskerne spektral rein sind (d.h., c_{k,n} und s_{l,n} sind 1 falls n gleich k bzw. n gleich 1, ansonsten 0).

Damit können die Faltungsintegrale getrennt für jede Kombination von Komponenten der Signale YL_{Ideal} und YR_{Ideal} und von den Komponenten der geraden und ungeraden Faltungskerne analytisch berechnet werden. Es entstehen nₘₐₓ * mₘₐₓ Komponenten der Faltungsergebnisse der Faltungsergebnisse C_{YL}, C_{YR} (Gleichung (6), jeweils für gerade und ungerade Faltungskerne). $\begin{matrix}{C}_{YL , even} \left(x, {Δ}_{m}, {A}_{m}, n, m\right) = {\int }_{- T / 4}^{T / 4} {A}_{m} ⋅ cos \left(m⋅ω⋅\left(-x+{Δ}_{m}\right)\right) ⋅ {c}_{k , n} ⋅ cos \left(n⋅ω⋅x\right) dx \\ {C}_{YL , odd} \left(x, {Δ}_{m}, {A}_{m}, n, m\right) = {\int }_{- T / 4}^{T / 4} {A}_{m} ⋅ cos \left(m⋅ω⋅\left(-x+{Δ}_{m}\right)\right) ⋅ {s}_{l , n} ⋅ sin \left(n⋅ω⋅x\right) dx \\ {C}_{YR , even} \left(x, {Δ}_{m}, {A}_{m}, n, m, δ\right) = {\int }_{- T / 4}^{T / 4} {A}_{m} ⋅ cos \left(m⋅ω⋅\left(-x+{Δ}_{m}+δ\right)\right) ⋅ {c}_{k , n} ⋅ cos \left(n⋅ω⋅x\right) dx \\ {C}_{YR , odd} \left(x, {Δ}_{m}, {A}_{m}, n, m, δ\right) = {\int }_{- T / 4}^{T / 4} {A}_{m} ⋅ cos \left(m⋅ω⋅\left(-x+{Δ}_{m}+δ\right)\right) ⋅ {s}_{l , n} ⋅ sin \left(n⋅ω⋅x\right) dx \\ mit : ω = \frac{2 π}{T}\end{matrix}$

Aus diesen Komponenten der Faltungsergebnisse wird für jedes n und m die Differenz der Faltungsergebnisse (ARLₑᵥₑₙ)_{n,m} = (C_{YR,even})_{n,m} - (C_{YL,even})_{n,m} und (ΔRL_{odd})_{n,m} = (C_{YR,odd})_{n,m} - (C_{YL,odd})_{n,m} gebildet.

Nach Substitution der Differenzen der Winkelfunktionen durch Produkte, können die Faltungsergebnisse in Matrixform zusammengefasst werden.

Für das Ausführungsbeispiel mit mₘₐₓ=4 und nₘₐₓ=4 zeigen Gleichung (7) die Koeffizientenmatrizen AEV bzw. AOD, Gleichung (8) die Matrixschreibweise der geraden Signaldifferenzen ΔRLₑᵥₑₙ auf Basis der Koeffizientenmatrix AEV und des Signalvektors Sₑᵥₑₙ und Gleichung (9) die ungeraden Signaldifferenzen ΔRL_{odd} auf Basis der Koeffizientenmatrix AOD und des Signalvektors S_{odd}. Bei einer anderen Auswahl des Ortsfrequenzbereiches als im Ausführungsbeispiel ändern sich die Koeffizientenmatrizen AEV und AOD entsprechend. Die Koeffizientenmatrizen AEV und AOD werden zur Vereinfachung normiert, so dass diese unabhängig von T werden. Die Konstanten Kₑᵥₑₙ und K_{odd} mit der zusätzlichen Bedingung Kₑᵥₑₙ²=K_{odd}² gleichen dies in Gleichung (8) und (9) aus. Da sich Kₑᵥₑₙ² und K_{odd}² später in Gleichung (11) herauskürzen, ist eine weitere Betrachtung nicht erforderlich. $AEV = {\left[\begin{matrix}\frac{1}{4} & \frac{1}{3 π} & 0 & - \frac{1}{15 π} \\ \frac{1}{3 π} & \frac{1}{4} & \frac{3}{5 π} & 0 \\ 0 & \frac{3}{5 π} & \frac{1}{4} & \frac{3}{7 π} \\ - \frac{1}{15 π} & 0 & \frac{3}{7 π} & \frac{1}{4}\end{matrix}\right]}^{{\to }^{m}} ↓ n AOD = {\left[\begin{matrix}\frac{1}{4} & \frac{2}{3 π} & 0 & - \frac{4}{15 π} \\ \frac{2}{3 π} & \frac{1}{4} & \frac{2}{5 π} & 0 \\ 0 & \frac{2}{5 π} & \frac{1}{4} & \frac{4}{7 π} \\ - \frac{4}{15 π} & 0 & \frac{4}{7 π} & \frac{1}{4}\end{matrix}\right] ↓ n}^{{\to }^{m}}$ $\begin{matrix}\left[Δ{RL}_{even}\right] = {K}_{even} ∗ \left[\begin{matrix}\frac{1}{4} & \frac{1}{3 π} & 0 & - \frac{1}{15 π} \\ \frac{1}{3 π} & \frac{1}{4} & \frac{3}{5 π} & 0 \\ 0 & \frac{3}{5 π} & \frac{1}{4} & \frac{3}{7 π} \\ - \frac{1}{15 π} & 0 & \frac{3}{7 π} & \frac{1}{4}\end{matrix}\right] \left[\begin{matrix}{A}_{1} ⋅ sin \left(ω⋅\left({Δ}_{1}+\frac{δ}{2}\right)\right) ⋅ sin \left(\frac{ωδ}{2}\right) \\ {A}_{2} ⋅ sin \left(2ω⋅\left({Δ}_{2}+\frac{δ}{2}\right)\right) ⋅ sin \left(ωδ\right) \\ {A}_{3} ⋅ sin \left(3ω⋅\left({Δ}_{3}+\frac{δ}{2}\right)\right) ⋅ sin \left(\frac{3 ωδ}{2}\right) \\ {A}_{4} ⋅ sin \left(4ω⋅\left({Δ}_{4}+\frac{δ}{2}\right)\right) ⋅ sin \left(2ωδ\right)\end{matrix}\right] \\ = {K}_{even} ∗ AEV ∗ {S}_{even}\end{matrix}$ $\begin{matrix}\left[Δ{RL}_{odd}\right] = {K}_{odd} ∗ \left[\begin{matrix}\frac{1}{4} & \frac{2}{3 π} & 0 & - \frac{4}{15 π} \\ \frac{2}{3 π} & \frac{1}{4} & \frac{2}{5 π} & 0 \\ 0 & \frac{2}{5 π} & \frac{1}{4} & \frac{4}{7 π} \\ - \frac{4}{15 π} & 0 & \frac{4}{7 π} & \frac{1}{4}\end{matrix}\right] \left[\begin{matrix}{A}_{1} ⋅ cos \left(ω⋅\left({Δ}_{1}+\frac{δ}{2}\right)\right) ⋅ sin \left(\frac{ωδ}{2}\right) \\ {A}_{2} ⋅ cos \left(2ω⋅\left({Δ}_{2}+\frac{δ}{2}\right)\right) ⋅ sin \left(ωδ\right) \\ {A}_{3} ⋅ cos \left(3ω⋅\left({Δ}_{3}+\frac{δ}{2}\right)\right) ⋅ sin \left(\frac{3 ωδ}{2}\right) \\ {A}_{4} ⋅ cos \left(4ω⋅\left({Δ}_{4}+\frac{δ}{2}\right)\right) ⋅ sin \left(2ωδ\right)\end{matrix}\right] \\ = {K}_{odd} ∗ AOD ∗ {S}_{odd}\end{matrix}$

Um vom bisher zur Illustration verwendeten Fall spektral reiner Faltungskerne zum Fall allgemeiner Faltungskerne zurückzukommen, werden die Signaldifferenzen ΔRLₑᵥₑₙ und ΔRL_{odd} im nächsten Schritt mit den Koeffizientenvektoren cₖ bzw. sₗ skalar multipliziert. Die Summe der mit c_{k,n} bzw. s_{l,n} gewichteten Komponenten der Vektoren ΔRLₑᵥₑₙ und ΔRL_{odd} stellt die Featuredifferenz dar.

Die Featuredifferenz für einen bestimmten, allgemeinen geraden oder ungeraden Faltungskern nach Gleichung (5) ist somit die Differenz der jeweiligen Faltungsergebnisse der Signale YR_{Ideal} und YL_{Ideal} mit allgemeinen Amplituden Aₘ nach Gleichung (4) und mit den Gewichten c_{k,n} bzw. s_{l,n} dieses Faltungskerns.

Die Korrespondenzfunktion SSD(δ) wird nun definiert als die Summe der nichtlinear verarbeiteten, insbesondere potenzierten Featuredifferenzen, beziehungsweise Differenzen der Faltungsergebnisse, vorzugsweise werden Quadrate der Featuredifferenzen aller verwendeter Faltungskerne gebildet. Im Folgenden wird die Struktur von SSD(δ) analysiert. Es ist dafür zweckmäßig, zuerst nur den Fall mit einem Signalpaar YL_{ideal} und YR_{ideal} und mit kₘₐₓ geraden Faltungskernen und lₘₐₓ ungeraden Faltungskernen zu betrachten, wie in Gleichung (10) als SSDₒₙₑ(δ) dargestellt. ${SSD}_{one} \left(δ\right) = \left({\sum }_{m = 1}^{{m}_{max}} {\sum }_{k = 1}^{{k}_{max}} {\left({\sum }_{n = 1}^{{n}_{max}} {c}_{k , n} ⋅ {\left(Δ{RL}_{even}\right)}_{n , m}\right)}^{2}\right) + \left({\sum }_{m = 1}^{{m}_{max}} {\sum }_{l = 1}^{{l}_{max}} {\left({\sum }_{n = 1}^{{n}_{max}} {s}_{l , n} ⋅ {\left(Δ{RL}_{odd}\right)}_{n , m}\right)}^{2}\right)$

Nach Einsetzen der Glieder ΔRLₑᵥₑₙ und ΔRL_{odd} in der Produktform nach Gleichung (8) und Gleichung (9) und nach Expandieren der Quadratsummen entstehen Terme, die in eine Amplitudenquadrate (z.B. A₁²) enthaltene Teilsumme SSDᵢₙᵥ und eine aus Mischgliedern bestehende Teilsumme SSDᵥₐᵣ geteilt werden können. SSDᵢₙᵥ ist vom Vorzeichen der Amplituden Aₘ unabhängig und kann durch geeignete Wahl der Form der Faltungskerne, also der Gewichte c_{k,n} bzw. s_{l,n}, weiter so optimiert werden, dass nach dem trigonometrischen Pythagoras sich die Glieder mit entsprechenden Cosinus- und Sinus-Anteilen so addieren, dass die Abhängigkeit von Δₘ vollständig verschwindet.

In diesem Fall ist SSDᵢₙᵥ unabhängig von den Phasen Δₘ und damit invariant von einer lateralen Verschiebung des Messobjekts (also parallel zur Basis der Stereokamera). SSDᵢₙᵥ ist eine Funktion der Gruppendisparität, aus der unter bestimmten Bedingungen die gesuchte Gruppendisparität, also das gesuchte Signal S, berechnet werden kann.

Im Speziellen ist dabei in einer weiteren Ausführungsform vorgesehen, dass die Faltungskerne so ausgewählt sind, dass die Faltungsoperationen der kₘₐₓ geraden und lₘₐₓ ungeraden Faltungskerne jeweils Summen mit gewichteten Signalanteilen einer Gruppe von Ortsfrequenzen, im Folgenden bezeichnet durch unterschiedliche Werte für den Index m, mit den Amplituden Aₘ und Objektphasen Δₘ übertragen, so dass sich in der Berechnung der Korrespondenzfunktion SSD(δ) zwei Teilsummen für jedes Signal v und jede Ortsfrequenz mit Index m ausbilden, die erste mit durch quadratischen Amplituden Aₘ² gekennzeichneten Termen aus den Ergebnissen der Faltungsoperationen mit den geraden Funktionen, die zweite mit durch quadratischen Amplituden Aₘ² gekennzeichneten Termen aus den Ergebnissen der Faltungsoperationen mit den ungeraden Funktionen, und sich die erste Teilsumme und die zweite Teilsumme nach dem trigonometrischen Pythagoras zusammenfassen lassen so dass die Summe SSDᵢₙᵥ(δ) beider Teilsummen unabhängig von der Objektphase Δₘ ist.

Die Bedingung für diese Eigenschaft von SSDᵢₙᵥ ist, dass in den Termen von SSDᵢₙᵥ die vor den sin²- und cos²- Anteilen gleicher Ortsfrequenz stehenden Koeffizienten gleich sind. Verallgemeinert auf eine beliebige Anzahl an Faltungskernen und Ortsfrequenzen kann diese Bedingung für ein optimales ideales Disparitätssignal wie in Gleichung (11) gezeigt als ein nichtlineares Gleichungssystem für jedes m dargestellt werden. Die Gleichung (11) erfasst eine Teilsumme der SSDᵢₙᵥ mit kₘₐₓ+lₘₐₓ Summanden und stellt damit das vollständige, aus dem Signalpaar YL_{Ideal} und YR_{Ideal} gewonnene Signal dar. gₘ ist ein Gewichtsvektor und wird weiter unten genauer erklärt. ${g}_{m} = {\sum }_{k = 1}^{{k}_{max}} {\left({\sum }_{n = 1}^{{n}_{max}} {c}_{k , n} ⋅ {AEV}_{n , m}\right)}^{2} = {\sum }_{l = 1}^{{l}_{max}} {\left({\sum }_{n = 1}^{{n}_{max}} {s}_{l , n} ⋅ {AOD}_{n , m}\right)}^{2}$

Für eine ausreichend rauscharme Bestimmung der Disparität müssen die Koeffizienten der Matrizen AEV und AOD nicht exakt den in Gleichung (7) angegebenen Werten entsprechen und können jeweils um einen Faktor von 0,8 bis 1,2 abweichen. Ebenso reicht eine näherungsweise Lösung der Gleichungssysteme in Gleichung (11) (z.B. kann die Summe in Gleichung (11) für die ungeraden Faltungskerne um einen Faktor von 0,8 bis 1,2 von der Summe für die geraden Faltungskerne abweichen).

Mit laut der Vorschrift in Gleichung (11) optimierter Faltungskerne erhält man die in Gleichung (12) gezeigte Definition der Korrespondenzfunktion SSD(δ) und die in Gleichung (13) gezeigte Definition von SSDᵢₙᵥ(δ). $SSD \left(δ\right) = {SSD}_{inv} \left(δ\right) + {SSD}_{var} \left(δ, Δ\right)$ ${SSD}_{inv} \left(δ\right) = {\sum }_{m = 1}^{{m}_{max}} {g}_{m} ⋅ {A}_{m}^{2} ⋅ sin {\left(\frac{m ⋅ w ⋅ δ}{2}\right)}^{2}$

Gemäß einer besonders bevorzugten Ausführungsform sind demgemäß die Faltungskerne so gewählt, dass die Korrespondenzfunktion im Signalmodell gemäß der Beziehung (12) als Summe einer phasenunabhängigen Funktion SSDᵢₙᵥ(δ) und einer von Objektphasen Δ abhängigen Funktion SSDᵥₐᵣ(δ,Δ) darstellbar ist. Zunächst wird nun nur SSDᵢₙᵥ betrachtet. SSDᵥₐᵣ stellt eine Rauschquelle dar, deren Einfluss wie weiter unten beschrieben minimiert werden kann.

Das Verhältnis von der ersten Ableitung SSD'ᵢₙᵥ(δ) (Gleichung (14)) zur zweiten Ableitung SSD"ᵢₙᵥ(δ) (Gleichung (15)), jeweils nach δ, bildet unter den Annahmen in Gleichung (16) die Gruppendisparitätsfunktion (Gleichung (17)), welche die gesuchte Positionsinformation in kompakter Form enthält. ${SSD}_{inv}^{′} \left(δ\right) = {\sum }_{m = 1}^{{m}_{max}} \frac{{g}_{m} ⋅ {A}_{m}^{2} ⋅ m ⋅ w ⋅ sin \left(m⋅w⋅δ\right)}{2}$ ${SSD}_{inv}^{"} \left(δ\right) = {\sum }_{m = 1}^{{m}_{max}} \frac{{g}_{m} ⋅ {A}_{m}^{2} ⋅ {m}^{2} ⋅ {w}^{2} ⋅ cos \left(m⋅w⋅δ\right)}{2}$ $\begin{matrix}\left|δ\right| < 0.5 \\ sin \left(m⋅w⋅δ\right) ∼ m ⋅ w ⋅ δ \\ cos \left(m⋅w⋅δ\right) ∼ 1\end{matrix}$ $\frac{{SSD}_{inv}^{′} \left(δ\right)}{{SSD}_{inv}^{"} \left(δ\right)} = δ + O \left({δ}^{3}\right)$

Die einfache Taylorentwicklung nach Gleichung (17) der Gruppendisparitätsfunktion ergibt eine lineare Funktion von δ, sie ist jedoch nur in unmittelbarer Nähe einer Nullstelle der ersten Ableitung SSD'ᵢₙᵥ(δ) (bzw. in unmittelbarer Nähe eines lokalen Minimums von SSD'ᵢₙᵥ(δ)) im Subpixelbereich für kleine δ gültig, also wenn sin(m*ω*δ) mit ausreichender Qualität linear interpoliert werden kann. Der für die weitere Rechnung benötigte subpixelgenaue Funktionswert der Gruppendisparität δ_{sub} ergibt sich als Summe der ganzzahligen Disparität der Lage einer Nullstelle der ersten Ableitung SSD'ᵢₙᵥ(δ) und dem gebrochen rationalen Subpixelwert der Gruppendisparitätsfunktion, wie später auch in Gleichung (32) gezeigt.

Für die Gruppendisparitätsfunktion einer realen hochauflösenden Stereokamera ergibt sich eine typische Kennlinie (Fig. 8). Im Speziellen ist in den Diagrammen der Fig. 8 anhand von Gleichung (17) eine bestimmte Disparität als Funktion der tatsächlichen Disparität aufgetragen. Im Idealfall wären die Werte der nach Gleichung (17) bestimmten Gruppendisparität und der tatsächlichen Disparität gleich (linearer Zusammenhang). In Teilbild Fig. 8(b) ist zu erkennen, dass es bei größeren Subpixelpositionen, also bei einer Lage der Disparität zwischen zwei Pixeln, zu kleinen Abweichungen von einem idealerweise linearen Verlauf im Definitionsbereich [-0,5px, 0,5px] kommt. Die Abweichung ist auch vom Bildinhalt abhängig, wie das Diagramm in Fig. 8(a) zeigt, in dem die Verläufe für verschiedene zufällige Werte für Aₘ und Δₘ eingezeichnet sind. Teilbild Fig. 8(b) zeigt den mittleren Verlauf, der in Teilbild Fig. 8(a) gezeigten Kurven. Diese Linearitätsfehler der Kennlinie erzeugen multiplikatives Rauschen.

Erweitert man das bisherige Modell von einen Signalpaar YL_{Ideal} und YR_{Ideal} auf vₘₐₓ Signalpaare YL_{Ideal,v} und YR_{Ideal,v} (mit v=1..vₘₐₓ ), dann erweitern sich Gleichung (14) und Gleichung (15) zu Gleichung (18) bzw. Gleichung (19). ${SSD}_{inv}^{′} \left(δ\right) = {\sum }_{m = 1}^{{m}_{max}} \left(\frac{{g}_{m} ⋅ m ⋅ w ⋅ sin \left(m⋅w⋅δ\right)}{2}⋅{\sum }_{v = 1}^{{v}_{max}} {A}_{m , v}^{2}\right)$ ${SSD}_{inv}^{"} \left(δ\right) = {\sum }_{m = 1}^{{m}_{max}} \left(\frac{{g}_{m} ⋅ {m}^{2} ⋅ {w}^{2} ⋅ cos \left(m⋅w⋅δ\right)}{2}⋅{\sum }_{v = 1}^{{v}_{max}} {A}_{m , v}^{2}\right)$

Man sieht, dass Gleichung (17) auch nach einer Erweiterung auf mehrere Signalpaare somit immer noch Bestand hat, da vereinfacht die Summe aller Signale genutzt wird. Gleichung (11) ist von dieser Erweiterung nicht betroffen.

Nach der Erläuterung des für die Gruppendisparitätsfunktion genutzten Signals wird nun das Rauschen betrachtet. Das Ziel ist, das Rauschen N im Vergleich zum Signal S zu minimieren. Das Rauschen besteht im Wesentlichen aus Sensorrauschen, Rauschen durch den Einfluß von SSDᵥₐᵣ, Rauschen, das durch Unterschiede zwischen dem hier analysierten idealen Kameramodell und einer realen Stereokamera entsteht, und Linearitätsfehlern der Kennlinie der Gruppendisparitätsfunktion.

Unter das hochfrequente weiße Sensorrauschen fallen mehrere additive Rauschquellen, wie das Quantenrauschen (auch Wurzelrauschen), das thermische Rauschen, sowie DSNU und PRNU. Das Sensorrauschen und das Rauschen durch SSDᵥₐᵣ sind in guter Näherung dekorreliert und können deshalb getrennt betrachtet werden. Die Gleichungen (15) bis (17) beschreiben die mit gₘ gewichtete Akkumulation des Gruppendisparitätssignals im Ortsfrequenzbereich. Jede Signalkomponente des Gruppendisparitätssignals ist mit m²ω²A²ₘ auf der Ortsfrequenz mω vertreten, womit der Term (bzw. die Amplitude) mit dem größten Betrag bestimmend ist für die Übertragungsfunktion. Durch diese Terme kann die Gruppendisparitätsfunktion als adaptives (von der aktuellen Signalform abhängiges) Filter nach Wiener (1949) verstanden werden. Die gleichen Terme entstehen, wenn ein Signalpaar YL_{Ideal} und YR_{Ideal} mit einem idealen (langen) adaptiven Filter und damit im Ortsfrequenzbereich mit schmaler Bandbreite verarbeitet wird und die Ergebnisse mit den gemessenen Amplituden gewichtet zu einem Positionssignal zusammengefügt werden. Dies entspricht der Signalverarbeitung eines Optimalfilters. Damit erreicht das Signal/Rausch-Verhältnis von Gruppendisparitäts- zu Sensorrauschen ein Optimum für eine bestimmte Gewichtung durch gₘ. Diese Gewichtung kann auf das Spektrum der Signale YL_{Signal,v} und YR_{Signal,v} angepasst werden, wie weiter unten erklärt.

Der als Ausgangstiefpassfilter bezeichnete Tiefpassfilter wird auf die 3D-Daten oder die diesen 3D-Daten zugrundeliegenden Menge an Disparitäts-Messergebnissen angewendet, filtert also hohe Ortsfrequenzen in der räumlichen Änderung der Disparitäten. Dies geschieht somit nach der Berechnung der Gruppendisparität, verringert aber gewisse Anteile des Rauschens und beeinflusst damit die weitere Rauschoptimierung. Allgemein, ohne Beschränkung auf das dargestellte Beispiel ist daher gemäß einer Weiterbildung vorgesehen, dass die Recheneinrichtung eingerichtet ist, die errechneten Disparitätswerte mit einem Tiefpassfilter zu filtern.

Der Ausgangstiefpassfilter ist gemäß einer Ausführungsform so dimensioniert, dass dieser Rauschkomponenten mit Ortsfrequenzen oberhalb von 2ω, vorzugsweise oberhalb 3ω, also in einem Bereich, in dem auch die Signalanteile der Gruppendisparität gering sind, reduziert. Durch die Filterung nach Berechnung der Gruppendisparität werden hochfrequente Eingangssignale mit den Amplituden A₃ und A₄ zur Bildung des Gruppendisparitätssignals nicht beeinflusst. Damit ist der Korrespondenzanalysator ohne Beschränkung auf bestimmte Ausführungsbeispiele gemäß einer Ausführungsform so ausgebildet, dass dieser zur Berechnung der Disparitätswerte die Eingangsinformation ohne Begrenzung der (Signal-)Bandbreite berücksichtigt. Dies trägt somit zur Verbesserung des Signal/Rausch-Verhältnisses bei. Andererseits reduziert die Fenstergröße des Analysefensters im Ausführungsbeispiel (8x8 px²) die Übertragungsfunktion der Disparität ab einer Periode T/2 also 2ω. Deshalb wird die Grenzfrequenz des zweidimensionalen Ausgangstiefpassfilters in den Bereich 2ω gelegt.

Fig. 6 zeigt 3D-Daten für eine im Wesentlichen ebene weiße Strukturtapete in einem 100x100 px² großen Bildausschnitt mit einer objektseitigen Auflösung von 1mm² (x,y) und in der Distanz von 1850mm. Fig. 6, Teilbild (a) zeigt 3D-Daten vor der Ausgangstiefpassfilterung und Teilbild (b) 3D-Daten nach erfolgter Ausgangstiefpassfilterung. Zur besseren Darstellung wurde die Distanzauflösung auf 0,2mm erhöht.

Als nächstes wird SSDᵥₐᵣ optimiert, ohne die Optimierung des Sensorrauschens zu beeinflussen. SSDᵥₐᵣ(δ, Δ) ist von Vorzeichen der Phasen und Amplituden und damit von einer lateralen Verschiebung des Messobjekts abhängig und stellt eine pseudozufällige Störgröße dar, die als additives niederfrequentes Rauschen im Ortsfrequenzbereich ω bis 4ω (im Ausführungsbeispiel) aufgefasst werden kann. Der erste Schritt zur Minimierung des Rauschanteils von SSDᵥₐᵣ geschieht statistisch durch die Verwendung einer Mehrzahl vₘₐₓ an Signalpaaren YL_{Signal,v} und YR_{Signal,v}, wodurch eine Mittelung des Signals SSDᵢₙᵥ und des Signalsfehlers SSDᵥₐᵣ erfolgt. Für eine optimale Lösung müssen die Signalpaare weitgehend dekorreliert sein, was durch eine dafür günstige Faltung in y-Richtung erreicht wird. Unter dieser Voraussetzung reduziert sich das Rauschen um einen Faktor 1/(vₘₐₓ)^{1/2}.

Im zweiten Schritt wird die in Gleichung (17) auf SSDᵢₙᵥ beschränkte Betrachtung erweitert auf die Summe aus SSDᵢₙᵥ und SSDᵥₐᵣ. Das Rauschsignal ist somit SSDᵥₐᵣ', das analog zu SSDᵢₙᵥ' als Taylorreihe entwickelt wird. Der Ausgangstiefpassfilter reduziert das durch SSDᵥₐᵣ repräsentierte Rauschen im Ausführungsbeispiel ab der Ortsfrequenz 3ω, womit nur der Bereich ω bis 2ω weiter beachtet werden muss. Daraus ergibt sich nach umfangreicher trigonometrischer Rechnung im Ausführungsbeispiel eine Teilsumme SSD_{var,1} ' für die unterste Ortsfrequenz von SSDᵥₐᵣ', wie in Gleichung (20) gezeigt. Die Teilsumme für 2ω kann analog berechnet werden. ${SSD}_{var , 1}^{′} \left(δ, Δ\right) = {\sum }_{v = 1}^{{v}_{max}} \left(\begin{matrix}{const}_{1} ⋅ {A}_{1 , v} ⋅ {A}_{2 , v} ⋅ cos \left(\frac{w ⋅ \left(δ-2{Δ}_{1 , v}+4{Δ}_{2 , v}\right)}{4}\right) \\ + {const}_{2} ⋅ {A}_{2 , v} ⋅ {A}_{3 , v} ⋅ cos \left(\frac{w ⋅ \left(δ-4{Δ}_{2 , v}+6{Δ}_{3 , v}\right)}{4}\right) \\ + {const}_{3} ⋅ {A}_{3 , v} ⋅ {A}_{4 , v} ⋅ cos \left(\frac{w ⋅ \left(5δ-6{Δ}_{3 , v}+16{Δ}_{4 , v}\right)}{4}\right)\end{matrix}\right)$

Die Amplituden und Phasen in Gleichung (20) sind von der Bildstatistik abhängig und weitgehend dekorreliert, der Rauschanteil von SSDᵥₐᵣ wird deshalb minimal, wenn die hier nicht weiter ausgeführten Konstanten const₁, const₂ und const₃ in Gleichung (20) minimal sind. Dies ist wiederum der Fall, wenn die in Gleichung (21) gezeigten Bedingungen erfüllt sind. $\begin{matrix}{\sum }_{k = 1}^{{k}_{max}} \left({\sum }_{n = 1}^{{n}_{max}} {c}_{k , n} ⋅ {AEV}_{n , 1}\right) \left({\sum }_{n = 1}^{{n}_{max}} {c}_{k , n} ⋅ {AEV}_{n , 2}\right) - {\sum }_{l = 1}^{{l}_{max}} \left({\sum }_{n = 1}^{{n}_{max}} {s}_{l , n} ⋅ {AOD}_{n , 1}\right) \left({\sum }_{n = 1}^{{n}_{max}} {s}_{l , n} ⋅ {AOD}_{n , 2}\right) = 0 \\ {\sum }_{k = 1}^{{k}_{max}} \left({\sum }_{n = 1}^{{n}_{max}} {c}_{k , n} ⋅ {AEV}_{n , 2}\right) \left({\sum }_{n = 1}^{{n}_{max}} {c}_{k , n} ⋅ {AEV}_{n , 3}\right) - {\sum }_{l = 1}^{{l}_{max}} \left({\sum }_{n = 1}^{{n}_{max}} {s}_{l , n} ⋅ {AOD}_{n , 2}\right) \left({\sum }_{n = 1}^{{n}_{max}} {s}_{l , n} ⋅ {AOD}_{n , 3}\right) = 0 \\ {\sum }_{k = 1}^{{k}_{max}} \left({\sum }_{n = 1}^{{n}_{max}} {c}_{k , n} ⋅ {AEV}_{n , 3}\right) \left({\sum }_{n = 1}^{{n}_{max}} {c}_{k , n} ⋅ {AEV}_{n , 4}\right) - {\sum }_{l = 1}^{{l}_{max}} \left({\sum }_{n = 1}^{{n}_{max}} {s}_{l , n} ⋅ {AOD}_{n , 3}\right) \left({\sum }_{n = 1}^{{n}_{max}} {s}_{l , n} ⋅ {AOD}_{n , 4}\right) = 0\end{matrix}$

Diese Gleichungen sind allerdings nicht allgemein lösbar. Es ist ausreichend, die Quadratsumme der Differenzen in Gleichung (21) zu minimieren. Da angenommen werden kann, dass in Gleichung (20) der Betrag von A_{1,v}A_{2,v} größer ist als der Betrag von A_{2,v}A_{3,v}, welcher wiederum größer ist als der Betrag von A_{3,v}A_{4,v}, ist es vorteilhaft, sich primär der ersten Bedingung in Gleichung (21) anzunähern, dann nachgeordnet der zweiten, und dann der dritten. Eine gute Näherung erhält man bereits, wenn die Koeffizienten c_{1,3}, c_{1,4}, c_{2,1}, c_{2,2}, s_{1,3}, s_{1,4}, s_{2,1} und s_{2,2} auf null gesetzt werden (für das Ausführungsbeispiel siehe auch Gleichung (23)), und anschließend das Gleichungssystem in Gleichung (11) nach den verbleibenden Koeffizienten gelöst wird und damit die Optimierung von SSDᵢₙᵥ vorgenommen wird.

Insbesondere bei Implementierungen mit nur wenigen Signalpaaren, also kleinem vₘₐₓ, verbessert eine Optimierung der Koeffizienten der Faltungskerne das Rauschverhalten. Dazu wird mit vorbestimmten Koeffizienten c_{1,3}, c_{1,4}, c_{2,1}, c_{2,2}, s_{1,3}, s_{1,4}, s_{2,1} und s_{2,2} das Gleichungssystem in Gleichung (11) gelöst und anschließend die Konstanten const₁, const₂ und const₃ berechnet. Die Lösung mit den geringsten Konstanten const₁, const₂ und const₃ wird ausgewählt. Einfacher ist die statistische Bestimmung mithilfe eines Testbilds, wie weiter unten beschrieben.

Für all diese Verfahren gilt, dass Gleichung (11) immer erfüllt ist und nur nach Gleichung (11) verbleibende Freiheitsgrade für die weitere Rauschoptimierung genutzt werden. Damit ist eine Optimierung des Signal/Rausch-Verhältnisses bzgl. des Sensorrauschens immer gegeben.

Eine weitere Ursache für Rauschen in einer realen Stereokamera ist, dass diese sich nicht notwendigerweise wie das bisher betrachtete ideale System verhält. Es existieren Toleranzen des Offsets und Gains der Kamerakennlinien der linken und der rechten Kamera sowie Artefakte durch Reflexionen, sodass die Amplituden beider Kameras für identische Objektpunkte in den jeweiligen Bildbereichen nicht garantiert gleich sind. Außerdem können Toleranzen der Rektifizierung auftreten.

Offsettoleranzen der Kameras, die z.B. durch Temperaturschwankungen entstehen können, werden durch das Verfahren vollständig kompensiert. Dabei ist zu beachten, dass der sogenannte Kameraoffset auf einen geringfügig positiven Wert gesetzt wird, so dass z.B. negative Werte von Sensorrauschen nicht am Wert null abgeschnitten werden, was das Signal verfälschen würde. Offsets können durch die fragmentierten geraden Faltungskerne übertragen werden und zu Messfehlern der Disparität führen. Deshalb ist eine Mittelwertbereinigung der geraden Faltungskerne vorteilhaft, so dass die Ortsfrequenz null für die Disparitätsmessung nicht übertragen wird.

Kleinere Toleranzen des Gains der Kameras führen nicht zu Rauschen da diese automatisch durch die Division in Gleichung (17) korrigiert werden. Dabei ist zu beachten, dass nur gleiche Amplituden Aₘ zur Signalbildung beitragen. Wenn z.B. ein Aₘ der linken Kamera (ALₘ) größer ist als das entsprechende Aₘ der rechten Kamera (ARₘ), dann wird das Gruppendisparitätssignal aus ARₘ² gebildet, die Differenz ALₘ-ARₘ, erzeugt Rauschen. Nicht korrigiert werden damit größere Kontrastdifferenzen zwischen den Kameras in den Bildecken, insbesondere dann, wenn die OTF bzw. Distorsionskorrektur unterschiedlich steil verläuft. In diesem Fall werden die zusätzlichen Amplitudenanteile der kontrastreicheren Kamera nicht im Signal der Gruppendisparität erfasst und stattdessen dem Störsignal N hinzugefügt.

Das Signal/Rausch-Verhältnis kann abschließend durch einen Optimierungsprozess der Gewichtskoeffizienten g weiter verbessert werden. Die Gewichtskoeffizienten können durch eine Simulation des Signal/Rausch-Verhältnisses berechnet werden. Für eine Menge an zufälligen Gewichtsvektoren g werden jeweils die Koeffizienten der Faltungskerne nach Gleichung (11) und ggf. Gleichung (21) berechnet, und es wird mit einem weiteren Zufallsgenerator eine Stichprobe von Vektoren erzeugt, die jeweils die Amplituden A, die Phasen Δ und die Soll-Disparität δ_{Soll} enthalten. Hierbei werden die Verhältnisse Aₘ/A₁ auf die entsprechenden Werte der Ortsfrequenzübertragungsfunktion, die sich aus der OTF des Objektivs im Tiefenschärfebereich und Auflösungsverlusten in der Sensorelektronik zusammensetzt, begrenzt. Anschließend wird SSD(δ) analog zu Gleichung (10) berechnet und nach Gleichung (17) die Disparität δ für ein oder mehrere Minima von SSD(δ) ermittelt. Aus einem Soll/Istvergleich von δ_{Soll} zu δ kann der mittlere Messfehler über der Stichprobe für einen bestimmten Gewichtsvektor errechnet werden. Aus der Menge an Gewichtsvektoren wird dann der mit dem geringsten mittleren Fehler ausgewählt. Auf diese Weise erhält man für typische Übertragungsfunktionen optimale Gewichtsvektoren g.

Alternativ kann g auch über eine Testmessung wie in Fig. 6 bestimmt werden. Mit dieser kann das lokale Distanzrauschen ermittelter 3D-Daten σ_{z} über die Standardabweichung des Abstands von ermittelten Punkten in den 3D-Daten zur SollPositionen der abgebildeten Objekte im Raum bestimmt werden (z.B. zur Ebene die annähernd die Strukturtapete in Fig. 6 repräsentiert). Für die konkrete Aufnahmesituation kann nun das Minimum des Distanzrauschens σ_{z} als Funktion des Gewichtsvektors g und der daraus abgeleiteten Koeffizienten der Faltungskerne ermittelt werden. Aus einer Menge zufällig ausgewählter Gewichtsvektoren kann dann der mit dem geringsten Distanzrauschens σ_{z} ausgewählt werden. Der Gewichtsvektor g wird mit der Genauigkeit einer Konstanten bestimmt. Durch die Division in Gleichung (17) kürzt sich dieser, so dass m-1 relevante Komponenten von g verbleiben.

So wird der optimale Profil-, beziehungsweise Gewichtsvektor g, z.B. für das ausgewählte Objekt Strukturtapete, definiert. Das Spektrum der Strukturtapete kann in guter Näherung für typische Szenen mit natürlichen Objekten im Tiefenschärfebereich verwendet werden.

Es ist zweckmäßig, unterschiedliche Profile mit Gewichtsfaktoren auf der Stereokamera zu speichern und diese bei Bedarf an die Aufnahmesituation anzupassen. Fig. 7 zeigt dazu zwei Beispiele von Gewichtskoeffizienten g für zwei verschiedene Aufnahmesituationen und für verschiedene Ortsfrequenzen ω. Damit können z.B. Parameteranpassungen für optimale Bedingungen für hochkontrastierte Bilder bzw. für Bilder im Nebel vorgenommen werden.

Daher ist in einer Ausführungsform vorgesehen, dass in der Recheneinrichtung zumindest ein Profilvektor von Gewichtskoeffizienten g zur Beschreibung der optimalen Empfindlichkeit der Korrespondenzfunktion SSD(δ) im Ortsfrequenzbereich vorgegeben ist, wobei der Profilvektor über Gleichung (11) die Gewichtskoeffizienten c_{k,n} und s_{l,n} der Fourierreihen der Faltungskerne bestimmt. Anhand des Leistungsspektrums der Daten der Einzelbilder oder Bildbereiche und vorzugsweise unter Berücksichtigung der optischen Übertragungsfunktion kann nach einer Ausführungsform die Klasse oder ein Profilvektor ausgewählt werden, anhand derer von der Recheneinrichtung eine Mehrzahl von Korrespondenzfunktionen und deren Faltungskerne ausgewählt, beziehungsweise gebildet oder errechnet werden.

Wie im Beispiel der Fig. 7 können also vor allem auch mehrere Gewichts-, beziehungsweise Profilvektoren vorgesehen sein, die von der Recheneinrichtung abhängig vom Bildinhalt oder der Aufnahmesituation ausgewählt werden. Allgemein können also mehrere Profilvektoren g für gleiche oder unterschiedlich parametrierte Korrespondenzfunktionen im Korrespondenzanalysator 1 gespeichert sein und/oder der Korrespondenzanalysator 1 kann eingerichtet sein, einen oder mehrere Profilvektoren mit Gewichten g zur Laufzeit zu berechnen, wobei der Korrespondenzanalysator 1 weiter dazu eingerichtet ist, das lokale oder globale Leistungsspektrum der Bilddaten zu bestimmen und die Gewichte g in Abhängigkeit des lokalen oder globalen Leistungsspektrums im Bild einzusetzen, also zur Faltung der Bildsignale und Berechnung der Korrespondenzfunktion zu verwenden. Insbesondere kann auch eine Mehrzahl an unterschiedlich parametrierten Korrespondenzfunktionen und deren Faltungskerne sowie vorzugsweise den diesen jeweils entsprechenden Profilvektor gₘ im Korrespondenzanalysator gespeichert sein oder zur Laufzeit ermittelt werden, wobei der Korrespondenzanalysator weiter dazu eingerichtet ist, anhand der vorliegenden Klassen an Einzelbildern oder Bildbereichen oder anhand der für die weitere Bearbeitung vorteilhaften Klassen an Einzelbildern oder Bildbereichen einen Teil dieser Mehrzahl von Korrespondenzfunktionen und deren Faltungskernen auszuwählen. Vorzugsweise sind dabei die Parameter mindestens einer Korrespondenzfunktion und deren Faltungskerne so gewählt, dass der Gewichtskoeffizient des jeweils entsprechenden Profilvektors gₘ für die höchste Ortsfrequenz kleiner ist, als mindestens einer der anderen Gewichtskoeffizienten dieses Profilvektors.

Der Gewichtskoeffizient für die höchste Ortsfrequenz, im Ausführungsbeispiel mit 4 Pixel Periode, ist wegen der Aufweitung der Kennlinie bei |δ|~0.5px oder 1/4π kompromissbehaftet. Aus diesem Grund ergibt sich bei einer experimentellen Bestimmung von g über die Messung des Signal/Rausch-Verhältnisses eine Absenkung des Gewichts für die höchste Ortsfrequenz. Das Gewicht ist jedoch verschieden von null, weil kleinere Werte δ korrekt gemessen werden.

In Analogie zur x- Richtung können die Faltungskerne für die Faltung in y-Richtung in Analogie zur Fourierreihe in Gleichung (4) und der Vorschrift zur Bildung optimaler Faltungskerne (Gleichung (11)) nach dem gleichen Prinzip gebildet und durch einen zweiten Profilvektor gyₘ definiert werden. Die Summe der quadrierten Faltungsergebnisse in y-Richtung bildet ebenfalls eine von der Objektphase in y-Richtung unabhängige invariante Teilsumme, die mit gyₘ gewichtete Amplitudenquadrate der Fourierreihe nach Gleichung (4) enthält, aus. Ferner wird eine von der Objektphase in y-Richtung abhängige Teilsumme gebildet. Eine Verbesserung des Signal/Rauschverhältnisses wird insbesondere bei Rektifizierungsfehlern realer Stereokameras erreicht, wie sie z.B. durch Temperaturgradienten, mechanische Belastung oder in den Bildecken entstehen können. So optimierte Faltungskerne in y-Richtung reduzieren durch die definierte Gewichtung der Ortsfrequenzen ferner Fehler, die bei der Verarbeitung periodischer Strukturen entstehen können. Das Gewicht für die höchste Ortsfrequenz wird nicht abgesenkt, da in y-Richtung keine Messung der Disparität vorgenommen werden soll.

Anstelle des bisher betrachteten Signalmodells mit stetigen Funktionen wird nun die Umsetzung in ein reales diskretes System im Ausführungsbeispiel beschrieben. Zunächst wird das Analyseintervall T und die Fenstergröße der Faltungskerne festgelegt. Hierbei sind zwei Fälle zu unterscheiden:
Die Stereoinformation entsteht durch Textur oder Bruchkanten, die mit der im Fenster vorherrschenden OTF übertragen und durch einen hochfrequenten Prozess erfasst werden.

Die Stereoinformation entsteht durch die Winkelabhängigkeit der diffusen Reflexion auf im Wesentlichen homogenen Körpern oder durch gegebenenfalls vorhandene niederfrequente Texturen auf Objekten und wird durch einen niederfrequenten Prozess erfasst.

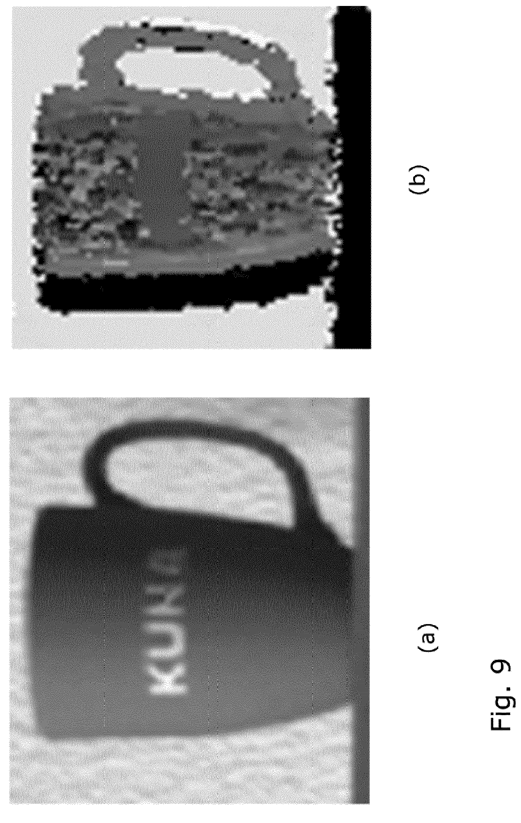

Im ersten Fall ist der Kontrast durch die Objektiveigenschaften im oberen Ortsfrequenzbereich bestimmt, im zweiten Fall durch das Beleuchtungsszenario sowie Krümmungsradien und Neigungswinkel der Objekte im unteren Ortsfrequenzbereich. Fig. 9 zeigt dazu ein Kamerabild (Teilbild (a)) und die zugehörigen 3D-Daten (Teilbild (b)). Teilbild (a) ist dabei das linke Bild des Stereobildpaares, aus dem die 3D-Daten des Teilbilds (b) errechnet wurden. Die 3D-Daten sind in Teilbild (b) als Graustufen dargestellt (helle Pixel zeigen einen großen Abstand zur Kamera an, dunkelgraue Pixel einen kleineren Abstand, schwarze Pixel haben keine Abstandsinformation). Das Beispiel einer Keramiktasse mit homogener glänzender Oberfläche mit einer Aufnahmedistanz von 1850mm und einer Auflösung (x,y) von 1mm² zeigt, dass Bereiche mit hochfrequenter Stereoinformation mit hoher Subpixelinterpolationsgüte detektiert werden können. Glänzende Bereiche ohne Kontrast können ebenfalls, jedoch mit geringerer Qualität in einem niederfrequenten Bereich erfasst werden. Zunächst soll das System für den ersten Fall so optimiert werden, dass eine hohe Empfindlichkeit für schwach kontrastierte hochfrequente Texturbeläge entsteht, so dass z.B. die weiße Strukturtapete im Hintergrund mit hoher Messgenauigkeit lückenfrei erfasst werden kann.

Die Dimensionierung des Analyseintervalls T ist für den ersten Fall dann optimal, wenn das Spektrum des Signals vollständig erfasst wird, d.h. wenn einerseits die Signalanteile mit Ortsfrequenzen von im Tiefenschärfebereich unscharf abgebildeten Kanten mit der Untergrenze 2π/T erfasst und andererseits Signale von optimal fokussierten Texturen eine Obergrenze mit einer Periode von 3 bis 4 px nicht signifikant übersteigen. Für eine typische Farbkamera mit BAYER- Filter kann der Bereich von ca. 16 ... 70 LP/mm verwendet werden. Bei Einsatz eines Sensors mit einem Pixelabstand von 3.75µm wird T=16px und es werden 4 Ortsfrequenzen benötigt. Im nächsten Schritt wird die Fensterbreite als Kompromiss zwischen 3D-Auflösung und Rauschen ermittelt. Es wird eine Fensterbreite 8 px gewählt. Es ist jedoch auch eine andere ganzzahlige Fensterbreite möglich. Mit steigender Fensterbreite sinkt die 3D-Auflösung und das Signal/Rausch-Verhältnis steigt. Die Matrizen AEV und AOD sind anzupassen, wenn das Verhältnis zwischen dem Analyseintervall und der Fensterbreite ungleich zwei ist.

Im nächsten Schritt kann die Anzahl der Faltungskerne k und 1 ausgewählt werden. Die beste Genauigkeit bei akzeptablem Rechenaufwand wird mit 2 geraden und 2 ungeraden Faltungskernen erreicht, als Kompromiss sind auch 1 gerader und 2 ungerade Faltungskerne mit reduzierter Genauigkeit, aber auch reduziertem Rechenaufwand möglich. Bei nur einem geraden und einem ungeraden Faltungskern steigt das Rauschen erheblich. Im Ausführungsbeispiel sind k=2 und 1=2. Eine größere Anzahl an Faltungskernen ist auch möglich.

Dann werden die Faltungskerne berechnet. Ausgehend vom Gewichtsvektor g= [0,917; 1,22; 2,25; 1,3] , der einen typischen OTF Verlauf kompensiert und einen Kompromiss bezüglich der höchsten Ortsfrequenz abbildet, wird das Gleichungssystem zur Bestimmung der optimalen Form der Faltungskerne mit den Koeffizienten c_{k,n} und s_{l,n} der Faltungskerne aufgestellt (Gleichung (22)). Das Gleichungssystem ist unterbestimmt, deshalb werden zunächst nicht benötigte hochfrequente Glieder auf null gesetzt (Gleichung (23)). $\begin{matrix}{g}_{m} = {{\sum }_{k = 1}^{2} \left({\sum }_{n = 1}^{4} {c}_{k , n} {\left(AEV\right)}_{n , m}\right)}^{2} \\ {g}_{m} = {{\sum }_{l = 1}^{2} \left({\sum }_{n = 1}^{4} {s}_{l , n} {\left(AOD\right)}_{n , m}\right)}^{2}\end{matrix}$ $\begin{matrix}{c}_{1} = \left[{c}_{1 , 1} {c}_{1 , 2} 0 0\right] \\ {c}_{2} = \left[0 0 {c}_{2 , 3} {c}_{2 , 4}\right] \\ {s}_{1} = \left[{s}_{1 , 1} {s}_{1 , 2} 0 0\right] \\ {s}_{2} = \left[0 0 {s}_{2 , 3} {s}_{2 , 4}\right]\end{matrix}$

Für jedes der nichtlinearen Gleichungssysteme erhält man 16 Lösungen, aus denen zunächst die reellen ausgewählt werden, anschließend werden Lösungen gestrichen, die sich ausschließlich durch ein Vorzeichen unterscheiden. Gibt es keine reellen Lösungen, kann der Gewichtsvektor angepasst werden. Man erhält sowohl für den Koeffizientenvektor c als auch für s zwei verschiedene Lösungen (Gleichung (24)). Aus diesen Lösungen werden die mit der kleinsten Varianz der Koeffizienten ausgewählt (Gleichung (24), Zeile 1 und Zeile 3), weil diese das geringste thermische Rauschen inklusive DSNU und PRNU übertragen. $\begin{matrix}{c}_{1 , 1} = 3 , 4954 ; {c}_{1 , 2} = 0 , 7818 ; {c}_{2 , 3} = 4 , 9652 ; {c}_{2 , 4} = 1 , 8416 \\ {c}_{1 , 1} = 6 , 9245 ; {c}_{1 , 2} = - 7 , 3419 ; {c}_{2 , 3} = 0 , 47969 ; {c}_{2 , 4} = - 4 , 7844 \\ {s}_{1 , 1} = 4 , 0476 ; {s}_{1 , 2} = - 0 , 2559 ; {s}_{2 , 3} = 6 , 0228 ; {s}_{2 , 4} = - 0 , 0332 \\ {s}_{1 , 1} = 11 , 725 ; {s}_{1 , 2} = - 10 , 809 ; {s}_{2 , 3} = 8 , 5106 ; {s}_{2 , 4} = - 8 , 4171\end{matrix}$

Bereits mit dieser 1. Näherung ohne weitere Optimierung des Rauschanteils der SSDᵥₐᵣ'(δ) wird das Signal/Rausch-Verhältnis spürbar verbessert. Da im beschriebenen praktisch relevanten Ausführungsbeispiel nicht genügend Koeffizienten für die vollständige Kompensation des Rauschens von SSDᵥₐᵣ'(δ) zur Verfügung stehen, kommt eine statistische Optimierung in Betracht. Im System ist das bereits beschriebene schwache Ausgangstiefpassfilter vorgesehen, welches thermisches Rauschen und Rauschen der Korrespondenzfunktion für höhere Ortsfrequenzen sicher unterdrückt. Deshalb besteht das Ziel darin, die Amplituden von durch das Filter nicht erfassten unteren Ortsfrequenzen ω und 2ω zu reduzieren. Für jede der Lösungen in Gleichung (24) existieren 3 weitere Lösungen mit anderen Vorzeichenkombinationen. Aus diesen wird dann die Lösung mit der Vorzeichenkombination ausgewählt, die die kleinsten Störungen von SSDᵥₐᵣ'(δ) im unteren Ortsfrequenzbereich erzeugt. Zusätzlich können in Gleichung (23) die mit null belegten Koeffizienten durch kleine von null verschiedene Konstanten ersetzt werden. Dadurch wird der Anteil von SSDᵥₐᵣ(δ) verändert, ohne dass SSDᵢₙᵥ(δ) beeinflusst wird. Die Gleichung (22) kann dann numerisch gelöst werden und die Lösungen bezüglich der unteren Ortsfrequenzen getestet und die beste Lösung ausgewählt werden.

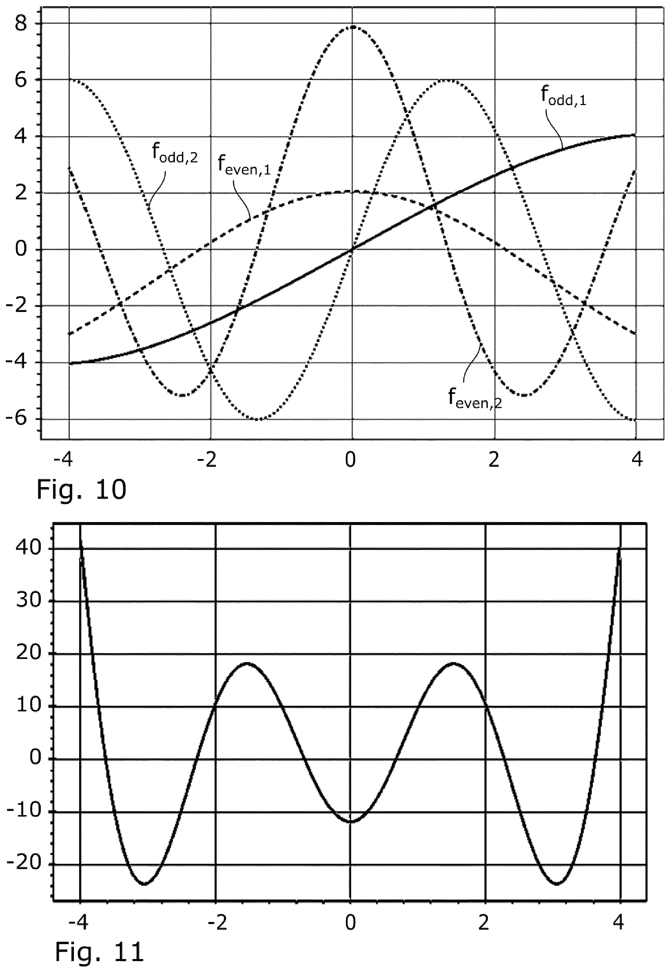

Nach dem vorstehenden Beispiel erhält man mögliche Funktionen der Faltungskerne in x-Richtung, f_{even,k} und f_{odd,l} (Gleichung (25)). Deren Funktionswerte werden in Fig. 10 veranschaulicht und in Tabelle 2 als diskrete Faltungskerne dargestellt. Die resultierenden Faltungsfunktionen sollten gemäß einer bevorzugten Ausführungsform mittelwertfrei sein, deshalb werden off_{even,1} und off_{even,2} so gewählt dass Gleichung (26) erfüllt ist. Dies ist günstig, um Rauschen durch Gain- und OffsetToleranzen realer Kameras zu vermeiden. $\begin{matrix}{f}_{even , 1} \left(x\right) = 3 , 4954 cos \left(\frac{πx}{8}\right) + 0 , 7818 cos \left(\frac{πx}{4}\right) + {off}_{even , 1} \\ {f}_{even , 2} \left(x\right) = 4 , 9652 cos \left(\frac{3 πx}{8}\right) + 1 , 8416 cos \left(\frac{πx}{2}\right) + {off}_{even , 2} \\ {f}_{odd , 1} \left(x\right) = 4 , 0476 sin \left(\frac{πx}{8}\right) - 0 , 2559 sin \left(\frac{πx}{4}\right) \\ {f}_{odd , 2} \left(x\right) = 6 , 0228 sin \left(\frac{3 πx}{8}\right) - 0 , 0332 sin \left(\frac{πx}{2}\right)\end{matrix}$ $\begin{matrix}{\int }_{- T / 4}^{T / 4} {f}_{even , 1} \left(x\right) dx = 0 \\ {\int }_{- T / 4}^{T / 4} {f}_{even , 2} \left(x\right) dx = 0\end{matrix}$

**Tabelle 2**

| *x* | -3,5 | -2,5 | -1,5 | -0,5 | 0,5 | 1,5 | 2,5 | 3,5 |
|---|---|---|---|---|---|---|---|---|
| *f*_{odd,1} | -3,85 | -3,11 | -2,00 | -0,69 | 0,69 | 2,00 | 3,11 | 3,85 |
| *f*_{even,1} | -2,25 | -0,59 | 0,96 | 1,88 | 1,88 | 0,96 | -0,59 | -2,25 |
| *f*_{odd,2} | 4,7 | -1,13 | -5,55 | -3,13 | 3,13 | 5,55 | 1,13 | -4,7 |
| *f*_{even,2} | -0,38 | -4,71 | -1,03 | 6,12 | 6,12 | -1,03 | -4,71 | -0,38 |

Wie anhand von Gleichung (25) ersichtlich, enthalten die vier Faltungskerne jeweils eine gewichtete Summe von mehreren harmonischen Funktionen unterschiedlicher Ortsfrequenzen. Dabei enthalten die geraden Faltungskerne f_{even, 1, 2} eine gewichtete Summe von Cosinus-Funktionen, also geraden Funktionen mit den Gewichtskoeffizienten 3,4954 und 0,7818 (f_{even, 1}), beziehungsweise 4,9652 und 1,8416 (f_{even, 2}). Die ungeraden Faltungskerne (f_{odd, 1, 2}) stellen eine gewichtete Summe ungerader Sinus-Funktionen dar. Im Beispiel weisen diese die Gewichtskoeffizienten 4,0476 und -0,2559, beziehungsweise 6,0228 und -0,0332 auf. Gemäß einer Ausführungsform ist also vorgesehen, dass die Recheneinrichtung eingerichtet ist, die Signalpaare YL_{Signal,v} und YR_{Signal,v} für v von 1 bis vₘₐₓ mit zwei geraden und zwei ungeraden zweiten Faltungskernen zu falten, welche gegeben sind durch die Gleichungen (25) und (26). Allgemeiner gesagt werden die Signalpaare YL_{Signal,v} und YR_{Signal,v} für v von 1 bis vₘₐₓ mit zwei geraden und zwei ungeraden zweiten Faltungskernen gefaltet, welche die in Gleichung (25) gelisteten Funktionen enthalten. Dabei können die Koeffizienten (3.4954, 0,7818, ...) vor den sin- und cos-Funktionen auch leicht, d.h. um 10% der angegebenen Werte nach oben oder unten abweichen. Demnach kann zumindest einer der Koeffizienten 3,4954, 0,7818, 4,9652, 1,8416, 4,0476, 0,2559, 6,0228, 0,0332 auch um bis zu 10% größer oder kleiner sein. Vorzugsweise werden dabei die Faltungskerne auch so gewählt, dass diese annähernd oder vollständig mittelwertfrei sind.

Es ist vorteilhaft, aber nicht notwendig, die Koordinatenursprünge der geraden bzw. ungeraden Funktionen, die von den Faltungskernen umfasst werden, in die Nähe des Schwerpunkts des jeweiligen Bildbereichs zu legen. Mit dem Schwerpunkt ist in diesem Sinne der geometrische Schwerpunkt des jeweiligen Bildbereichs gemeint.

Die leichten Abweichungen der Koeffizienten der Filterkerne können auch dergestalt sein, dass diese von diskretisierten Werten perfekt gerader oder ungerader Funktionen leicht abweichen. Diese Abweichung kann beispielsweise bis zu 15%, vorzugsweise bis zu 10% von Werten ideal gerader oder ungerader Funktionen abweichen. Im Folgenden werden zur Verdeutlichung mögliche Abweichungen der diskretisierten Koeffizienten von Koeffizienten idealer gerader oder ungerader Funktionen aufgeführt. Sofern ein ungerader Filterkern mit Koeffizienten einer diskretisierten idealen ungeraden Funktion gegeben sei durch die Werte -2; -1; 1; 2, könnte ein Filterkern, der nur unerheblich erhöhtes Rauschen ergibt, gegeben sein durch -2; -1; 1,1; 2. Hier ist der zur Mitte des Kerns benachbarte positive Koeffizient um 10% erhöht. Weiterhin wird die Symmetrie eines ideal geraden oder ungeraden Filterkerns auch nur wenig gestört, wenn zusätzliche Koeffizienten mit niedrigem Gewicht hinzugefügt werden. Ein solcher etwas abweichender Kern könnte beispielsweise lauten: -2; -1; 1; 2; 0,1. Hier enthält der Filterkern einen zusätzlichen Koeffizienten 0,1, der die ideale Symmetrie bezüglich der Mitte des Kerns zwischen den Koeffizienten 1 und -1 stört, aber andererseits aufgrund des geringen Gewichts auch das gefaltete Ergebnis nur unwesentlich ändert.

Die Koeffizienten vor den sin- und cos-Funktionen müssen in einer Variante auch nicht exakt mit den Koeffizienten der Gleichungen (24) und (25) übereinstimmen, sondern können auch mit immer noch guter Rauschunterdrückung um einen Faktor im Bereich von 0,8 bis 1,2, vorzugsweise im Bereich von 0,9 bis 1,1 abweichen.

Anstelle von 2 geraden Faltungskernen kann mit geringfügig erhöhtem Rauschen auch ein einzelner gerader Faltungskern verwendet werden. Die Funktion eines solchen geraden Faltungskerns ist in Fig. 11 gezeigt und als diskreter Faltungskern in Tabelle 3 dargestellt. In Weiterbildung dieser Ausführungsform, die auch bei dem Beispiel der Fig. 11 und Tabelle 3 realisiert ist, enthält dieser Faltungskern gewichtete Frequenzen aller Ortsfrequenzen ω bis 4ω, stellt also eine gewichtete Summe harmonischer Funktionen dieser Ortsfrequenzen ω bis 4ω dar. Es werden 25% des Rechenaufwands eingespart. Lösungen für k=1 und l=1 sind hingegen nur mit erheblichen Digitalisierungsfehlern, also mit hohem Rauschen, digitalisierbar und somit unbrauchbar. Bei nur einem geraden oder nur einem ungeraden Kern ist keine Kompensation des Rauschens möglich, damit sind diese Optionen auch unbrauchbar. Eine Berechnung für nur 2 oder 3 Ortsfrequenzen ist analog möglich, hat aber typischerweise eine geringere Messgenauigkeit zur Folge.

**Tabelle 3**

| *x* | -3,5 | -2,5 | -1,5 | -0,5 | 0,5 | 1,5 | 2,5 | 3,5 |
|---|---|---|---|---|---|---|---|---|
| *f*_{even,1} | -3,45 | -8,37 | 15,37 | -3,55 | -3,55 | 15,37 | -8,37 | -3,45 |

Im Ausführungsbeispiel werden vₘₐₓ=5 Signalpaare verwendet, die durch Faltung von YL_{Image} und YR_{Image} in y-Richtung mit Faltungskernen f_{y,v} mit den Ortsfrequenzen 0 und ω bis 4ω berechnet werden. Eine optimale Rauschreduktion entsteht, wenn die 5 Signalpaare optimal dekorreliert sind und ähnliche Amplituden aufweisen. In diesem Fall vergrößert sich in SSDᵢₙᵥ(δ) das Signal, aufgrund zufälliger Phasen Δ reduziert sich aber gleichzeitig der Anteil von SSDᵥₐᵣ(δ), womit das Signal/Rausch-Verhältnis steigt. Dekorrelierte Signale entstehen nach Faltung mit orthogonalen Funktionen, z.B. mit der WFT. Die Anpassung der Amplituden der Signalpaare wird durch Normierung mit der OTF realisiert, so dass der Einfluss von Signalpaaren mit Ortsfrequenzen höherer Ordnung vergrößert wird. Es ist vorteilhaft, die gleichen, schon auf geringes Rauschen optimierten Faltungskerne wie für die Faltung in x-Richtung zu verwenden (d.h., z.B. bei k=2 und l=2 die Faltungskerne in Gleichung (25) und Gleichung (26) für f_{y,2} bis f_{y,5} zu nehmen und f_{y,1}=1 zu setzen). In diesem Fall wird ein besonders rauscharmes Signal generiert, das zur Berechnung eines Konfidenzsignals (s.u.) verwendet werden kann. Zusätzlich ist es vorteilhaft, die Faltungskerne zwar nach demselben Ansatz wie für die Faltungskerne in x-Richtung zu bestimmen, aber wie schon beschrieben das Gewicht für die höchste Ortsfrequenz nicht abzusenken.

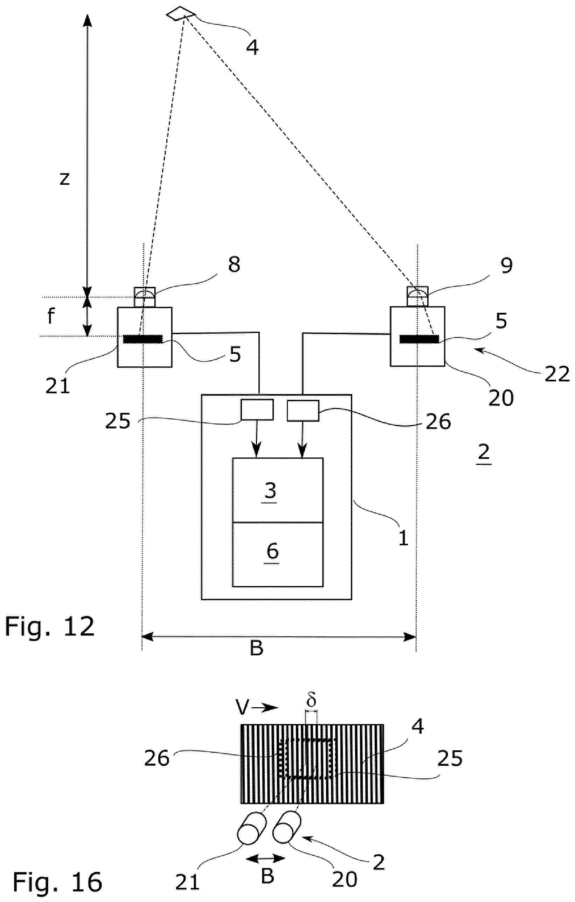

Im Folgenden wird die Ausführung des Verfahrens zur Bestimmung von Disparitäten mittels des Korrespondenzanalysators beschrieben. Fig. 12 zeigt dazu den schematischen Aufbau einer Stereokamera 2 mit einem Korrespondenzanalysator 1. Die Stereokamera 2 umfasst eine Aufnahmevorrichtung 22 mit zwei Kameras 20, 21 mit Kamerasensoren 5 und zwei Objektiven 8, 9 zur Abbildung eines Objekts 4. Die Hauptpunkte der Objektive 8, 9 sind um die Basisbreite B zueinander beabstandet. Zur Bestimmung der Disparität δ werden die Digitalbilder 25, 26 an den Korrespondenzanalysator 1 übertragen und von dessen Recheneinrichtung 3 analysiert. Die Gegenstandsweite Z kann dann aus der mit dem Korrespondenzanalysator 3 bestimmten Disparität und der Brennweite f gemäß Gleichung (1) bestimmt werden. Dazu werden die im Speicher 6 des Korrespondenzanalysators abgespeicherten Profilvektoren (oder die diesen Profilvektoren entsprechenden Faltungskerne) mit den rektifizierten Bildsignalen gefaltet. Die Faltungsergebnisse von aus den beiden Digitalbilder 25, 26 mit variierendem relativen Abstand ausgewählten Bildbereichen werden dazu von der Recheneinrichtung 3 voneinander subtrahiert und nichtlinear verarbeitet, vorzugsweise quadriert. Die Summe dieser nichtlinear verarbeiteten Differenzen ergibt für den ausgewählten relativen Abstand δ einen Wert der Korrespondenzfunktion SSD(δ).

Es werden die Bilddaten beider Kameras 20, 21 vorzugsweise subpixelgenau rektifiziert, so wie es oben anhand von Fig. 2 beschrieben wurde. Bei hohen Anforderungen an das Signal/Rausch-Verhältnis ist eine Justage der Komplanarität der optischen Achsen der Kameras vorteilhaft. Dazu wird zunächst im Objektraum die Lage der Schnittpunkte der optischen Achsen beider Kameras mit einem planaren Testbild in mindesten zwei Distanzen ermittelt und durch Verbindung dieser Schnittpunkte die Lage der optischen Achsen im Raum ermittelt. Bei korrekter Justage sind die optischen Achsen komplanar und liegen in der Epipolarebene. Die Verbindungsgeraden der Schnittpunkte für sämtliche gemessenen Distanzen sind deshalb ebenfalls komplanar. Eine der beiden Kameras ist mit einer exzentrischen Justageeinrichtung versehen, Fig.1. Ein Komplanaritätsfehler besteht dann, wenn die Verbindungsgeraden windschief zu einander stehen. Die Korrektur erfolgt durch Drehen des Objektivs. Der Exzenter bewirkt ein feine Lageveränderung der optischen Achse gegenüber der mechanischen Achse. Die Drehung wird ausgeführt bis die Komplanarität der optischen Achsen erreicht ist. Während der Nutzungsdauer der Stereokamera können ebenfalls Justagefehler der Komplanarität auftreten, z.B. durch Temperaturschwankungen oder mechanische Schockbelastung. Dieser Fehler kann kompromissbehaftet für eine vorgegebene Distanz Z korrigiert werden, indem nach dem weiter unten beschriebenen Verfahren die Disparität δ_{y} annähernd senkrecht zur Epipolarlinie, also in y-Richtung, berechnet wird. Der subpixelgenau gemessene mittlere Disparitätsfehler δ_{y} wird abschließend in die Rektifizierung einer der beiden Kameras einbezogen, so dass der dem Disparitätsfehler δ_{y} entsprechende Offset korrigiert wird. Das Verfahren funktioniert in einem eingeschränkten Disparitätsbereich, ist jedoch für viele Applikationen mit Genauigkeitsanforderungen abhängig von der Objektlage, z.B. für Positionieraufgaben in der Robotik hilfreich. Gemäß einer Ausführungsform ist im Speziellen vorgesehen, dass die Stereokamera eingerichtet ist, während der Laufzeit des Korrespondenzanalysators zur Korrektur von Justagefehlern der Komplanarität die Disparität δ_{y} korrespondierender Bildbereiche zusätzlich in einer Richtung annähernd senkrecht zur Epipolarlinie auszuwerten, und die mittlere Abweichung dieser Disparität von null, also eine Abweichung von der idealen Epipolargeometrie durch eine gegenläufige Verschiebung eines der Bilder annähernd senkrecht zur Epipolarlinie, insbesondere mithilfe einer Korrektur der Rektifizierungsparameter zu korrigieren. Es ist vorteilhaft, damit das Signal/Rausch-Verhältnis im Bereich großer Gegenstandsweiten Z zu verbessern. Bei kleinen Gegenstandsweiten genügt das Signal/Rausch-Verhältnis oft.

Mit dem oben beschriebenen Verfahren werden geeignete Faltungskerne bestimmt. Insbesondere können die Gewichte g nach den Gleichungen (11) und (21) berechnet werden. Die Faltungskerne sind in einem Speicher des Korrespondenzanalysators 1 abgespeichert. Gemäß einer Ausführungsform ist der Korrespondenzanalysator eingerichtet, applikationsabhängig zunächst die Bildstatistik zu bewerten, z.B. durch Kontrastbewertung oder Bewertung des Leistungsspektrums. Anschließend wählt der Korrespondenzanalysator 1 ein der Bildstatistik entsprechendes Profil aus, z.B. beim autonomen Fahren das Profil für guten Kontrast unter Normalbedingungen oder für reduzierten Kontrast bei Nebel. Durch das ausgewählte Profil wird mindestens ein Satz von Faltungskernen definiert. Allgemein können also mehrere Profilvektoren g für gleiche oder unterschiedlich parametrierte Korrespondenz- und Faltungsfunktionen im Korrespondenzanalysator 1 gespeichert sein und/oder der Korrespondenzanalysator 1 kann eingerichtet sein, einen oder mehrere Profilvektoren g zur Laufzeit zu berechnen, wobei der Korrespondenzanalysator 1 weiter dazu eingerichtet ist, das lokale oder globale Leistungsspektrum der Bilddaten zu bestimmen und vorteilhafte Profilvektoren g in Abhängigkeit des lokalen oder globalen Leistungsspektrums im Bild einzusetzen. Es können auch Berechnungen mit mehreren Sätzen von unterschiedlich parametrierten Profilvektoren vorgenommen und die Ergebnisse verglichen werden. So kann die Korrespondenzanalyse mit zwei oder mehr unterschiedlich parametrierten Korrespondenzfunktionen und Faltungskernen durchgeführt werden, wobei die Recheneinrichtung die zwei oder mehr resultierenden Ergebnisse kombiniert oder aus diesen Ergebnissen Teilergebnisse auswählt, vorzugsweise anhand der bestimmten Konfidenzvektoren. Unabhängig vom jeweiligen Profilvektor gilt für den Satz von Faltungskernen insbesondere, dass die Faltungskerne so ausgewählt sind, dass bei der Bestimmung der Disparität für ein Objekt mit einer sinusförmig modulierten Intensitätsverteilung diese Disparität weitgehend unabhängig von einer seitlichen Verschiebung des Objekts in der Bildebene der Einzelbilder ist. Dies gilt speziell für eine Modulation mit Ortsfrequenzen innerhalb des durch die Größe der Suchbildbereiche bestimmten abgetasteten Ortsfrequenzbereichs.

Fig. 16 zeigt zur Verdeutlichung ein solches von den Kameras 20, 21 einer Stereokamera 2 aufgenommenes Objekt 4 in Form eines ebenen Gegenstands, dessen Oberfläche eine sinusförmige Helligkeitsmodulation aufweist. Die Modulation verläuft entlang der Richtung der relativen Bildverschiebung in den digitalen Einzelbildern 25, 26 und damit auch in Richtung der zu bestimmenden Disparität δ. Im Bild der Fig. 16 ist die Modulation durch ein einfaches Streifenmuster symbolisiert. Die dargestellte Modulation ist also statt sinusförmig einfach rechteckförmig, aber mit der gleichen Orientierung wie die sinusförmige Modulation. Die Disparität ist abhängig vom Abstand des Objekts 4 zur Stereokamera 2. Wird nun das Objekt 4 in der Richtung V der sinusförmigen Modulation, also auch in Richtung der Disparität, aber mit konstantem Abstand zur Stereokamera 2 verschoben, so bleibt die Disparität davon im Wesentlichen unbeeinflusst, vorausgesetzt, dass das Muster keine Ambiguitäten verursacht. Die Invarianz gegenüber einer Verschiebung V kann auch mit errechneten Digitalbildern überprüft werden, um den Effekt an idealisierten Bilddaten ohne zusätzliches Rauschen verifizieren zu können.

Im Folgenden wird ein Test beschrieben, mit welchem die geringe Schwankung der mit dem hier beschriebenen Korrespondenzanalysator errechneten Disparität gegenüber einer solchen Intensitätsmodulation auf einem Objekt demonstriert werden kann. Wie oben bereits dargelegt, liegen solche Schwankungen, ausgedrückt als Standardabweichung (STD) bei Abständen von typischerweise im Bereich von unter 0,2 Pixel, vorzugsweise bei höchstens 0,1 Pixel, während Systeme nach dem Stand der Technik Schwankungsbreiten von mehr als 0,2, typischerweise im Bereich von 0,2 bis 0,5 Pixel aufweisen. Allgemein, ohne Beschränkung auf das hier beschriebene Beispiel sind die Faltungskerne vorzugsweise so ausgewählt, dass bei der Bestimmung der Disparität an einem ebenen Objekt, das bei gleichbleibender Distanz Z zur Kamera entlang der Epipolarlinie verschoben wird, eine örtliche Standardabweichung der Messungen der Disparität von kleiner als 0,2 Pixel, oder sogar von 0,1 Pixeln bei der Verschiebung eines ebenen Objekts erzielt wird, wenn das Objekt eine Intensitätsmodulation entlang der Richtung der Epipolarlinie, insbesondere inklusive einer Ortsfrequenz im Ortsfrequenzbereich, oder eine entsprechende Textur aufweist.

Es werden nun zwei Messungen mit einem planaren physikalischen Messobjekt, das eine Textur trägt, die in der Bildebene Ortsfrequenzen enthält, die innerhalb des Ortfensters (mit Ortsfrequenzen ω=2Pi/9 bis 2Pi/5 für eine 8x8 Umgebung), durchgeführt. Die Textur ist senkrecht zur Epipolarebene angebracht, z.B. cos ωx, das Objekt ist mit ca. 80% Amplitude im Bild korrekt ausgesteuert. Das Messobjekt ist eben.

Am ruhenden Objekt werden mehrere Messungen, zum Beispiel 100 Messungen an einer ersten Stelle des Messobjekts ausgeführt. Es entsteht Rauschen durch den Sensor. Anhand der Messung kann daraus die Standardabweichung σ_{δ} und der Mittelwert δ_{mean,1} berechnet werden. Die Messung kann an einer anderen Stelle des gleichen Messobjekts wiederholt werden.

Das Objekt wird nun mehrfach um einen kleinen Betrag parallel zur Abbildungsebene und entlang der Epipolarlinie verschoben, so dass sich die Distanz zur Stereokamera 2 im Messfeld nicht ändert. Anschließend werden an dieser zweiten und den weiteren Stellen des Messobjekts z.B. 100 Messungen ausgeführt und σδ und der Mittelwert δ_{mean,n} n=2..10, berechnet. Dies wird für weitere Stellen wiederholt.

Anschließend wird die STD σ für δ_{mean,n} n=2..10 berechnet. Wenn dieser Wert der Standardabweichung σ kleiner als 0,2 Pixel, oder sogar unter guten Bedingungen kleiner als 0,1 Pixel ist, dann ist dies ein typisches Charakteristikum des hier beschriebenen Korrespondenzanalysators, beziehungsweise der mit dem Korrespondenzanalysator ausgestatteten Stereokamera.

Der Korrespondenzanalysator führt die Faltungen wie weiter oben bereits ausgeführt, durch diskrete Multiplikationen/Additionen aus. Im Ausführungsbeispiel wird eine Faltung in einer 8x8 px² Umgebung mit uₘₐₓ=4 Faltungskernen in x-Richtung (Tabelle 4) und vₘₐₓ=5 Faltungskernen in y-Richtung (Tabelle 5) beschrieben. uₘₐₓ ist gleich der Summe aus kₘₐₓ und lₘₐₓ, welche im Ausführungsbeispiel jeweils den Wert 2 haben. Die Faltungskerne in Tabelle 4 entsprechen den Faltungskernen in Tabelle 2. Die Faltungskerne in Tabelle 5 setzen sich zusammen aus den uₘₐₓ Faltungskernen aus Tabelle 4 und einem Faltungskern f_{y,1} für die Ortsfrequenz 0.

**Tabelle 4**

| *x* | -4 | -3 | -2 | -1 | 0 | 1 | 2 | 3 |
|---|---|---|---|---|---|---|---|---|
| *f*_{*x*,1} | -3,85 | -3,11 | -2,00 | -0,69 | 0,69 | 2,00 | 3,11 | 3,85 |
| *f*_{*x*,2} | -2,25 | -0,59 | 0,96 | 1,88 | 1,88 | 0,96 | -0,59 | -2,25 |
| *f*_{*x,*3} | 4,7 | -1,13 | -5,55 | -3,13 | 3,13 | 5,55 | 1,13 | -4,7 |
| *f*_{*x*,4} | -0,38 | -4,71 | -1,03 | 6,12 | 6,12 | -1,03 | -4,71 | -0,38 |

**Tabelle 5**

| *y* | -4 | -3 | -2 | -1 | 0 | 1 | 2 | 3 |
|---|---|---|---|---|---|---|---|---|
| *f*_{*y,*1} | 1 | 1 | 1 | 1 | 1 | 1 | 1 | 1 |
| *f*_{*y*,2} | -3,85 | -3,11 | -2,00 | -0,69 | 0,69 | 2,00 | 3,11 | 3,85 |
| *f*_{*y*,3} | -2,25 | -0,59 | 0,96 | 1,88 | 1,88 | 0,96 | -0,59 | -2,25 |
| *f*_{*y*,4} | 4,7 | -1,13 | -5,55 | -3,13 | 3,13 | 5,55 | 1,13 | -4,7 |
| *f*_{*y*,5} | -0,38 | -4,71 | -1,03 | 6,12 | 6,12 | -1,03 | -4,71 | -0,38 |

In den digitalen Kamerabildern geben Pixel an der Position x und y Werte in der Pixel-Umgebung von x+0,5 und y+0,5 wieder, weshalb die Indizes der Faltungskerne entsprechend von -3,5 bis 3,5 auf -4 bis 3 angepasst werden. Bei wie im Ausführungsbeispiel geradzahligen Größen der Faltungskerne verschiebt sich der effektive Messpunkt, weshalb bei der Berechnung der 3D-Daten mittels Gleichung (1) x' und y' um einen halben Pixel verschoben sind im Vergleich zur Position der Messung. Eine ähnliche Korrektur ist bei einer Zuordnung der Farb- oder Grauwerte aus YL_{Image} zu den 3D-Daten zu beachten.

Die Recheneinrichtung berechnet mittels der Faltungskerne für jede Bildkoordinate x,y im linken bzw. rechten rektifizierten Kamerabild (YL_{Image} bzw. YR_{Image}) eine Menge uₘₐₓ*vₘₐₓ Features (FL_{u,v} bzw. FR_{u,v}), wie in Gleichung (27) gezeigt. $\begin{matrix}{YL}_{Signal , υ} \left(x, y\right) = {\sum }_{o = - 4}^{3} {f}_{y , υ} \left(o\right) ⋅ {YL}_{Image} \left(x,y+o\right) \\ {YR}_{Signal , υ} \left(x, y\right) = {\sum }_{o = - 4}^{3} {f}_{y , υ} \left(o\right) ⋅ {YR}_{Image} \left(x,y+o\right) \\ {FL}_{u , υ} \left(x, y\right) = {\sum }_{o = - 4}^{3} {f}_{x , u} \left(o\right) ⋅ {YL}_{Signal , υ} \left(x+o,y\right) \\ {FR}_{u , υ} \left(x, y\right) = {\sum }_{o = - 4}^{3} {f}_{x , u} \left(o\right) ⋅ {YR}_{Signal , υ} \left(x+o,y\right)\end{matrix}$

Diese Menge an Features pro Bildkoordinate wird im Folgenden Featurevektor genannt. Die Featurevektoren enthalten im Ortsfrequenzbereich die für die subpixelgenaue Disparitätsmessung benötigten Signale. Bedingt durch die nachfolgende Differentiation SSD'(δ) in Richtung der Epipolarlinie, fehlen Informationen, die dazu führen, dass neben dem korrekten Messwert auch mehrere falsch positive Messwerte (Kandidaten) erzeugt werden können. Aus diesem Grund wird die Verarbeitung in 2 Schritten ausgeführt:
- rauschoptimale Berechnung der Disparität
- rauschoptimierte Auswahl der Kandidaten des korrekten Messwerts

Die rauschreduzierte Auswahl der Kandidaten erfolgt gemäß einer Ausführungsform durch zusätzlich oder simultan berechnete Konfidenzvektoren KLᵥ und KRᵥ, wie in Gleichung (28) gezeigt. $\begin{matrix}{KL}_{υ} \left(x, y\right) = {\sum }_{o = - 4}^{3} {f}_{Konf} \left(o\right) ⋅ {YL}_{Signal , υ} \left(x+o,y\right) \\ {KR}_{υ} \left(x, y\right) = {\sum }_{o = - 4}^{3} {f}_{Konf} \left(o\right) ⋅ {YR}_{Signal , υ} \left(x+o,y\right)\end{matrix}$

Diese Konfidenzvektoren enthalten keine Disparitätsinformationen sondern werden genutzt um die Güte von Disparitätsmessungen abzuschätzen. Der Faltungskern f_{Konf} kann beispielsweise aus einer Gauss-Funktion gebildet werden, um benachbarte Signale mit in die Konfidenzvektoren einfließen zu lassen. Anstatt oder zusätzlich zu der Berechnung der Konfidenzvektoren mittels der vₘₐₓ Signale, wie beispielhaft in Gleichung (28) gezeigt, können auch weitere Informationen aus dem Referenzbildbereich und den Suchbildbereichen genutzt werden, wie z.B. dem normierten Kreuzkorrelationskoeffizienten zwischen den Luminanzdaten des Referenzbildbereichs und des jeweiligen Suchbildbereichs.

Das Auswählen von Kandidaten der Disparität anhand von Konfidenzvektoren kann auch unabhängig von der Art und Weise der Bestimmung einer Korrespondenzfunktion eingesetzt werden. Wesentlich ist, dass aus dem Referenzbildbereich und den Suchbildbereichen mehrere Kandidaten der Disparität ermittelt und diese dann anhand der Konfidenzvektoren hinsichtlich ihrer Gültigkeit bewertet werden. Daher ist unabhängig von der speziellen Weise der Berechnung der Disparität ein Korrespondenzanalysator 1 zur Bestimmung der Disparität korrespondierender Bildelemente in zwei digitalen Einzelbildern 25, 26 vorgesehen, welcher eine Recheneinrichtung 3 umfasst, die eingerichtet ist,
- aus den beiden Einzelbildern 25, 26 jeweils Bildbereiche auszuwählen, wobei zumindest ein Bildbereich eines der Einzelbilder als Referenzbildbereich ausgewählt wird, und im anderen Einzelbild Suchbildbereiche ausgewählt werden, und aus den Bildbereichen mehrere Kandidaten eines Disparitätswerts zu berechnen, wobei die Recheneinrichtung 3 weiter eingerichtet ist, aus dem Referenzbildbereich und den Suchbildbereichen Informationen auszuwählen, die insbesondere nicht von der Korrespondenzfunktion oder ihrer 1. Ableitung übertragen werden, und anhand dieser Informationen Konfidenzvektoren für Ergebnisse der Korrespondenzfunktion, beziehungsweise mögliche Disparitätswerte auszuwählen, die geeignet sind abzuschätzen, ob das jeweilige Ergebnis eine tatsächliche Korrespondenz des jeweiligen Suchbildbereiches mit dem Referenzbildbereich anzeigt. Die Auswahl eines Kandidaten eines Disparitätswerts kann dann anhand der Werte der Konfidenzwerte erfolgen. Demgemäß ist in Weiterbildung vorgesehen, dass die Recheneinrichtung 3 eingerichtet ist, eine Liste von Kandidaten des Disparitätswerts für einen bestimmten Referenzbildbereich zu erstellen, vorzugsweise für jeden Kandidaten einen Konfidenzvektor auszuwählen, und anhand der Konfidenzvektoren und/oder anderer Auswahlkriterien alle oder einen Teil dieser Kandidaten als gültig auszuwählen, oder auszuwählen, dass für den bestimmten Referenzbildbereich keiner der Kandidaten als gültig erachtet wird. Es können auch anderweitig ermittelte Konfidenzvektoren weiter verwendet oder erweitert werden.

In Weiterbildung dieser Ausführungsform ist die Recheneinrichtung 3 eingerichtet, die Werte von zumindest einem Element des Konfidenzvektors mittels Funktionen auszuwählen, die zumindest für manche Klassen von Referenz- und Suchbildbereichen Kandidaten mit höherer Wahrscheinlichkeit als gültig oder ungültig klassifizieren können als dies allein durch die Korrespondenzfunktion möglich ist. Alleine durch die Korrespondenzfunktion ließe sich ein Kandidat insbesondere dadurch als korrekt feststellen, indem die Werte der Minima der Korrespondenzfunktion verglichen und das deutlichste Minimum ausgewählt wird. Die Korrespondenzfunktion ist vorzugsweise darauf ausgerichtet, Informationen die nicht für die Berechnung von Disparitäten nötig sind zu unterdrücken, um potentielle Rauschquellen zu vermeiden. Mittels der Konfidenzfunktion können dann z.B. solche unterdrückten Informationen wieder bei der Auswahl von Kandidaten beachtet werden, ohne dass sie die Disparitätsberechnung stören. Im Speziellen kann die Recheneinrichtung Werte von Elementen eines Konfidenzvektors mittels einem oder mehrerer der folgenden Merkmale auswählen:
- Relation oder Differenz der Korrespondenzfunktion SSD(δₚ) des Kandidaten an Stelle δₚ zu einem Schwellwert der von den Extrema der Korrespondenzfunktion aller Kandidaten des Referenzbildbereichs abgeleitet ist,
- Grauwertrelationen, vorzugsweise Grauwertdifferenzen zwischen einem Teil des Referenzbildbereich und einem Teil des jeweiligen Suchbildbereiches oder ein von diesen Grauwertdifferenzen abgeleitetes Merkmal,
- Farbrelationen, vorzugsweise Farbdifferenzen zwischen einem Teil des Referenzbildbereich und einem Teil des jeweiligen Suchbildbereiches oder ein von diesen Farbdifferenzen abgeleitetes Merkmal,
- Relation der Signalstärke im Referenzbildbereich im Vergleich zur Signalstärke im jeweiligen Suchbildbereich,
- normierter Kreuzkorrelationskoeffizient zwischen den Daten eines Teils des Referenzbildbereichs und den Daten eines Teils des jeweiligen Suchbildbereiches, jeweils annähernd senkrecht zur Epipolarlinie, wobei
diese Merkmale zur Vermeidung von Rauschen vorzugsweise annähernd entlang der Epipolarlinie, beziehungsweise in x-Richtung des Bildes schwach tiefpassgefiltert sind.

Die Relationen können auch nichtlinear sein. Demgemäß können die jeweiligen Größen, wie Farbe oder Grauwert auch nichtlinear verarbeitet werden. Beispielsweise könnte anstelle einer linearen Differenz der Grauwerte eine Differenz der Quadrate der Grauwerte errechnet werden. Weiterhin können die Eingangsdaten bereits nichtlinear verarbeitet werden, und/oder eine nichtlineare Verarbeitung bei der Ermittlung der Werte des Konfidenzvektors erfolgen.

Die Recheneinrichtung 3 kann vorteilhaft außerdem eingerichtet sein, einem Nutzer des Korrespondenzanalysators, beziehungsweise der Recheneinrichtung die Listen der Kandidaten, vorzugsweise nur der gültigen Kandidaten, und vorzugsweise zusammen mit den jeweiligen Konfidenzvektoren verfügbar zu machen. Dies kann beispielsweise über geeignete Schnittstellen, wie etwa einen Datenausgang oder einen Bildschirm erfolgen. Auf diese Weise können unter anderem die verschiedenen Konfidenzkriterien mit der Qualität der Bestimmung der 3D-Koordinaten abgeglichen und angepasst werden. Gemäß einer Ausführungsform können weiterhin die Konfidenzwerte vorteilhaft entsprechend den Werten der SSD mit einem Ausgangstiefpassfilter gefiltert werden. Der Ausgangstiefpassfilter kann insbesondere der gleiche Filter sein, wie er gemäß einer Ausführungsform auch für die Werte der Korrespondenzfunktion SSD(δ) verwendet wird. Dies ermöglicht es, die gleiche Hardware-Struktur für beide Tiefpass-Filterungen zu verwenden. Weiterhin kann der Ausgangstiefpassfilter für die Werte der Korrespondenzfunktion die jeweils entsprechenden Konfidenzwerte als Gewichtung für diese Filterung mit einbeziehen. Die Disparitätswerte können auch vor der Tiefpassfilterung mit Konfidenzwerten gewichtet werden. Daher ist noch eine Möglichkeit, durch Konfidenzwerte gewichtete Disparitätswerte mit einem Tiefpassfilter zu filtern. Demgemäß ist vorgesehen, dass die Recheneinrichtung eingerichtet ist, die errechneten Disparitätswerte und/oder Konfidenzwerte mit einem Tiefpassfilter zu filtern.

Die Featurevektoren und Konfidenzvektoren werden für diskrete Bildpositionen an ganzzahligen Pixelkoordinaten berechnet. Die Recheneinrichtung 3 akkumuliert die SSD(x,y,δₚ) ebenso an ganzzahligen Werten δₚ der Disparität, wie für das Ausführungsbeispiel in Gleichung (29) gezeigt, und bildet damit die Quadratsumme der Differenzen der Features. $SSD \left(x, y, {δ}_{p}\right) = {\sum }_{u = 1}^{4} {\sum }_{υ = 1}^{5} {\left({FR}_{u , υ}\left(x+{δ}_{p},y\right)-{FL}_{u , υ}\left(x, y\right)\right)}^{2}$

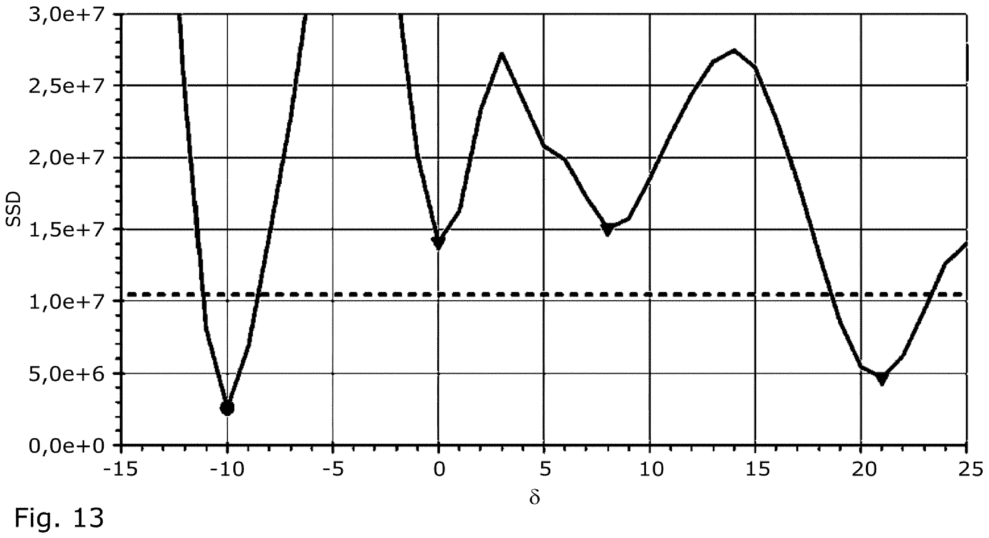

Diese Berechnung der Korrespondenzfunktion SSD(x,y,δₚ) wird für mehrere, insbesondere alle möglichen ganzzahligen Werte der Disparität δₚ im zu erwartenden Disparitätsbereich von der Recheneinrichtung durchgeführt und es werden die lokalen Extrema der Korrespondenzfunktion SSD(x,y,δₚ) ermittelt. Ein typischer, beispielhafter Verlauf der SSD(x,y,δₚ) ist in Fig. 13 dargestellt. Die erste Ableitung SSD'(x,y,δₚ) und die zweite Ableitung SSD"(x,y,δₚ) der diskreten Funktion SSD(x,y,δₚ) werden wie in Gleichung (30) gezeigt definiert. Gemäß einer Ausführungsform wird ein Wert δₚ als lokales Minimum erkannt, wenn die Bedingung in Gleichung (31) erfüllt ist. $\begin{matrix}SSD ′ \left(x, y, {δ}_{p}\right) = SSD \left(x, y, {δ}_{p}\right) - SSD \left(x,y,{δ}_{p}-1\right) \\ SSD " \left(x, y, {δ}_{p}\right) = SSD ′ \left(x,y,{δ}_{p}+1\right) - SSD ′ \left(x, y, {δ}_{p}\right)\end{matrix}$ $SSD ′ \left(x, y, {δ}_{p}\right) < 0 ∧ SSD ′ \left(x,y,{δ}_{p}+1\right) \geq 0$

Weiterhin ermittelt der Korrespondenzanalysator 1, beziehungsweise dessen Recheneinrichtung die Differenzen SSD'(x,y,δₚ) und lokale Minima die durch Vorzeichenwechsel dieser Differenzen angezeigt werden. Aus lokalen Extrema, insbesondere Minima der Korrespondenzfunktion SSD(x,y,δₚ) an einer Disparität δₚ, kann dann in einer bevorzugten Ausführungsform von der Recheneinrichtung ein subpixelgenauer Wert einer Gruppendisparität δ_{sub} berechnet werden, wie in den Formeln in Gleichung (32) gezeigt. $\begin{matrix}{δ}_{sub} \left(x, y, {δ}_{p}\right) = {δ}_{p} - \frac{1}{2} ⋅ \frac{SSD ′ \left(x, y, {δ}_{p}\right) + SSD ′ \left(x,y,{δ}_{p}+1\right)}{SSD " \left(x, y, {δ}_{p}\right)} \\ = {δ}_{p} - \frac{1}{2} ⋅ \frac{SSD ′ \left(x, y, {δ}_{p}\right) + SSD ′ \left(x,y,{δ}_{p}+1\right)}{SSD ′ \left(x,y,{δ}_{p}+1\right) - SSD ′ \left(x, y, {δ}_{p}\right)} \\ = {δ}_{p} - \frac{1}{2} ⋅ \frac{SSD \left(x,y,{δ}_{p}+1\right) - SSD \left(x,y,{δ}_{p}-1\right)}{SSD \left(x,y,{δ}_{p}-1\right) + SSD \left(x,y,{δ}_{p}+1\right) - 2 ⋅ SSD \left(x, y, {δ}_{p}\right)}\end{matrix}$

Die in Gleichung (32) genutzte Parabelinterpolation ist möglich auf Grund der schon beschriebenen Optimierungen der Gruppendisparitätsfunktion. Es ist vorteilhaft, einen subpixelgenauen Wert der Korrespondenzfunktion an der Stelle δ_{sub} zu berechnen, zum Beispiel analog zu Gleichung (32). $SSD ′ \left(x, y, {δ}_{p}\right) = {\sum }_{u = 1}^{4} {\sum }_{v = 1}^{5} \left(\begin{matrix}\left({FR}_{u , v}\left(x+{δ}_{p},y\right)-{FR}_{u , v}\left(x+{δ}_{p}-1,y\right)\right) \\ ⋅ \left({FR}_{u , v}\left(x+{δ}_{p},y\right)+{FR}_{u , v}\left(x+{δ}_{p}-1,y\right)-2⋅{FL}_{u , v}\left(x, y\right)\right)\end{matrix}\right)$

δ_{sub} kann aus Werten von SSD'(x,y,δₚ) ermittelt werden, die wiederum wie in Gleichung (33) gezeigt direkt aus Features berechnet werden können. Dies kann vorteilhaft sein, da für diese Berechnung kleinere Wortbreiten bzw. kleinere Genauigkeiten bei Verwendung von Gleitkommazahlen ausreichend sind bei Vergleich mit einer Berechnung nach Gleichung (29). Demgemäß ist nach dieser Ausführungsform die Recheneinrichtung 3 eingerichtet, den subpixelgenauen Wert δ_{sub} einer Gruppendisparität in der Nachbarschaft eines lokalen Extremums anhand der Beziehung (33) zu berechnen, wobei δₚ ein pixelgenaues lokales Extremum der Korrespondenzfunktion und SSD'(x,y, δₚ) die Ableitung der Korrespondenzfunktion SSD(x,y, δₚ) darstellen.

Gemäß einer Ausführungsform speichert der Korrespondenzanalysator eine Liste von Kandidaten der tatsächlichen Disparität δ_{sub} ab, die von der Recheneinrichtung für lokale Minima an Positionen δₚ ermittelt wurden. Diese Kandidaten, jeweils für ein Minimum an Position δ_{K}, werden vorzugsweise mit Attributen wie der durch SSD"(x,y,δ_{K}) darstellbaren Signalstärke des Disparitätssignals, dem Wert der in Gleichung (34) gezeigten Konfidenzfunktion KSSD(x,y,δ_{K}) und durchschnittlichen Helligkeits- oder Farbunterschieden zwischen den jeweiligen Umgebungen im linken und rechten Kamerabild ergänzt. KSSD(x,y,δ_{K}) nutzt nur die Signale v die durch Faltung mit den Faltungskernen für die x-Richtung in Tabelle 4 ermittelt wurden. f_{Konf} ist dabei ein Faltungskern der nur gering durch Verschiebung in x-Richtung beeinflusst wird, beispielsweise ein Gauß-Filter. $KSSD \left(x, y, {δ}_{p}\right) = {\sum }_{υ = 2}^{{υ}_{max}} {\left({KR}_{υ}\left(x+{δ}_{p},y\right)-{KL}_{υ}\left(x, y\right)\right)}^{2}$

Allgemein ist in einer Ausführungsform vorgesehen, den Kandidaten der Disparität eine Konfidenz zuzuordnen und die Konfidenzen zu vergleichen, wobei ein oder mehrere Kandidaten mit hohen Konfidenzwerten als gültig angesehen und weiterverarbeitet werden. Umgekehrt wird ggf. zumindest ein Kandidat der Disparität, welcher eine verglichen mit einem oder mehreren anderen Kandidaten niedrigere Konfidenz hat, aussortiert, also nicht weiterverarbeitet. So kann die Recheneinrichtung 3 eingerichtet sein, für die Kandidaten die Konfidenz zu bestimmen, welche auf einem Kriterium, das auf der SSD(δ) im Vergleich zum Leistungsspektrum des jeweiligen Referenzpunktes, der 2. Ableitung der SSD(δ), Grauwert- oder Farbwert-Durchschnitte in einer Umgebung des Kandidaten im Vergleich zur Umgebung des Referenzpunktes, und optional anderen Messwerten basiert, und diese Konfidenzwerte dann mit den Konfidenzwerten anderer Kandidaten, die widersprüchliche Messergebnisse darstellen, zu vergleichen, und in diesen Vergleichen nur Kandidaten mit signifikant höheren Konfidenzwerten als gültig betrachtet werden. Die errechneten Konfidenzwerte werden also miteinander verglichen und anhand des Vergleichs zumindest ein Kandidat der Disparität als gültig festgelegt. Die Festlegung kann durch die Weiterverarbeitung dieses Disparitätswerts oder dem Aussortieren eines oder mehrerer anderer Kandidaten des Disparitätswerts erfolgen.

Gemäß einer Ausführungsform umfasst die Recheneinrichtung 3 des Korrespondenzanalysators zumindest einen FPGA und/oder zumindest eine GPU, gegebenenfalls auch mehrere solcher Einheiten. Statt rekonfigurierbaren FPGA können auch einmalig rekonfigurierbare Recheneinrichtungen (eASIC) oder nicht rekonfigurierbare Recheneinrichtungen (ASIC) verwendet werden.

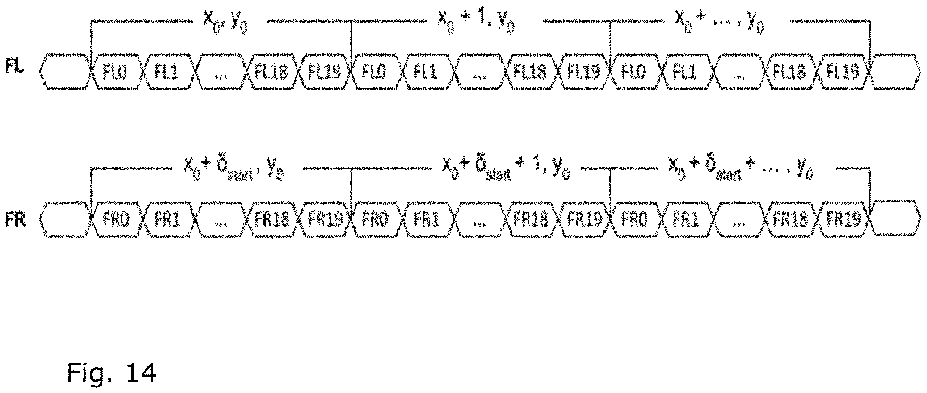

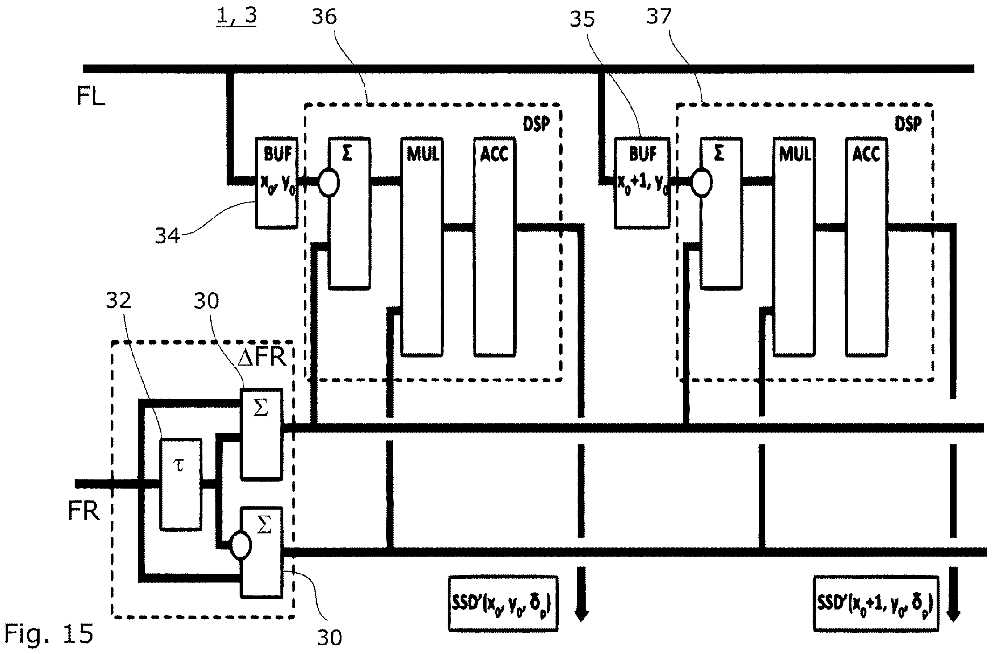

Fig. 14 und Fig. 15 zeigen das Prinzip einer beispielhaften Implementierung des Korrespondenzanalysators 1 auf einem FPGA als Bestandteil der Recheneinrichtung 3. In den rektifizierten Bildern YL_{Image} und YR_{Image} wird auf der gleichen Zeile y₀ jeweils ein Fenster in Zeilenrichtung synchron verschoben. Daraus ergeben sich zwei synchrone Datenströme FL und FR, wie in Fig. 14 gezeigt. Diese Datenströme bestehen für jede Position x aus uₘₐₓ*vₘₐₓ Features (Gleichung (27)), illustriert als FL0 bis FL19 bzw. FR0 bis FR19. δₛₜₐᵣₜ ist gleich der unteren Grenze des zu erwartenden Disparitätsbereiches. Die Behandlung von Fällen in denen YR_{Image} nicht den gesamten Disparitätsbereich für einen Pixel an Position x₀ in YL_{Image} abdeckt ist trivial und wird nicht weiter betrachtet.

Im Block ΔFR in Fig. 15 werden durch 2 Adder 30 und eine Verzögerungseinheit τ, Bezugszeichen 32, aus dem Datenstrom FR die Terme FR_{u,v}(x₀+δₚ,y₀)+FR_{u,v}(x₀+δₚ-1,y₀) und FR_{u,v}(x₀+δₚ,y₀₎-FR_{u,v}(x₀+δₚ-1,y₀) gebildet. Nachfolgend wird ein Block des Korrespondenzanalysators 1 bzw. dessen Recheneinrichtung 3 erläutert. Aus dem Datenstrom FL wird ein Vektor mit im Beispiel 20 Features von der Adresse x₀ zum Startzeitpunkt in den DualPort RAM 34 (BUF), kopiert und anschließend wiederholend ausgelesen. Zum Startzeitpunkt liefert der Datenstrom FR Features von der Adresse x₀. Ein DSP 36 (z.B. XILINX DSP48E1) berechnet ab dem Startzeitpunkt Funktionswerte SSD'(x₀,y₀,δₚ) analog zu Gleichung (33) für jedes ganzzahlige δₚ im zu erwartenden Disparitätsbereich. Für die benachbarte Adresse x₀+1 und jede weitere wird ein DualPort RAM 35 und ein weiterer DSP 37 verwendet, der analog zum ersten DSP 36 aber für andere Koordinaten auf der Zeile in YL_{Image} arbeitet. DSPs, die den Disparitätsbereich durchlaufen haben, können erneut verwendet werden.

Die Funktionswerte SSD'(x₀,y₀,δₚ) werden anschließend von einem ersten Filterprozessor ausgewertet. Wenn die Konjunktion in Gleichung (31) (mit x=x₀ und y=y₀) wahr ist, dann liegt ein Minimum von SSD(x₀,y₀,δₚ) an Position δₚ vor. Für solche Minima wird der subpixelgenaue Gruppendisparitätswert δ_{sub} ermittelt. Diese Minima stellen Kandidaten für den Gruppendisparitätswert dar.

Demgemäß ist in einer Ausführungsform vorgesehen, dass die Recheneinrichtung eingerichtet ist, eine Liste von Kandidaten des Disparitätswerts zu erstellen. Anschließend kann dann die entsprechend eingerichtete Recheneinrichtung anhand mindestens eines Auswahlkriteriums einen Disparitätswert als gültig auswählen.

Ein zweiter möglicher Filterprozessor verwendet in Weiterbildung dieser Ausführungsform dazu die Signalstärke des Disparitätssignals, also die 2. Ableitung der Korrespondenzfunktion SSD"(x₀,y₀,δₚ). Die zu erwartende Signalstärke kann auch einzeln als ACFL(x₀,y₀) und ACFR(x₀,y₀,δₚ) für YL_{Image} bzw. YR_{Image} (Gleichung (35)) bestimmt werden, so dass der Erwartungswert der Signalstärke vor Berechnung der Korrespondenzfunktion in guter Näherung bekannt ist. Die Signalstärke wird über sämtliche vₘₐₓ Signalpaare akkumuliert. Nachfolgend werden die Relationen der ACFL, ACFR und SSD"(x₀,y₀,δₚ) (Gleichung (36)) mit Schwellwerten thr_{L1}, thr_{L2}, thr_{R1}, thr_{R2}, thr_{A1} und thr_{A2} getestet. $\begin{matrix}ACFL \left(x, y\right) = {\sum }_{u = 1}^{{u}_{max}} {\sum }_{v = 1}^{{v}_{max}} \left(\begin{matrix}{\left({FL}_{u , v}\left(x+1,y\right)-{FL}_{u , v}\left(x, y\right)\right)}^{2} \\ + {\left({FL}_{u , v}\left(x-1,y\right)-{FL}_{u , v}\left(x, y\right)\right)}^{2}\end{matrix}\right) \\ ACFR \left(x, y, {δ}_{p}\right) = {\sum }_{u = 1}^{{u}_{max}} {\sum }_{v = 1}^{{v}_{max}} \left(\begin{matrix}{\left({FR}_{u , v}\left(x+{δ}_{p}+1,y\right)-{FR}_{u , v}\left(x+{δ}_{p},y\right)\right)}^{2} \\ + {\left({FR}_{u , v}\left(x+{δ}_{p}-1,y\right)-{FR}_{u , v}\left(x+{δ}_{p},y\right)\right)}^{2}\end{matrix}\right)\end{matrix}$ $\begin{matrix}{thr}_{L 1} < \frac{SSD " \left({x}_{0}, {y}_{0}, {δ}_{p}\right)}{ACFL \left({x}_{0}, {y}_{0}\right)} < \frac{1}{{thr}_{L 2}} \\ {thr}_{R 1} < \frac{SSD " \left({x}_{0}, {y}_{0}, {δ}_{p}\right)}{ACFR \left({x}_{0}, {y}_{0}, {δ}_{p}\right)} < \frac{1}{{thr}_{R 2}} \\ {thr}_{A 1} < \frac{ACFL \left({x}_{0}, {y}_{0}\right)}{ACFR \left({x}_{0}, {y}_{0}, {δ}_{p}\right)} < \frac{1}{{thr}_{A 2}}\end{matrix}$

Diese Tests können vereinfacht als Test der akkumulierten Signalstärke der Gruppendisparität aufgefasst werden bzw. als Tests der akkumulierten Signalstärke in beiden Kamerabildern. Gemäß dieser Ausführungsform ist demgemäß die Recheneinrichtung eingerichtet, Relationen der Signalstärken des Disparitätssignals und der Bildbereiche zu bilden und diese als Auswahlkriterium mit Schwellwerten zu vergleichen.

Unter Berücksichtigung realer Toleranzen der Kameras filtern die Tests beispielsweise beim Setzen aller Schwellwerte auf den Wert 2 einen großen Teil von falschen Kandidaten an Positionen δₚ, ohne einen großen Teil korrekter Werte zu unterdrücken.

Ein dritter möglicher Filterprozessor ermittelt einen im Vergleich zur Signalstärke normierten Wert SSDₙₒᵣₘ(x₀,y₀,δₚ) (Gleichung (37)), welcher dann gegen einen Schwellwert verglichen werden kann. ${SSD}_{norm} \left(x, y, {δ}_{p}\right) = \frac{SSD \left(x, y, {δ}_{p}\right)}{{\sum }_{u = 1}^{{u}_{max}} {\sum }_{v = 1}^{{v}_{max}} {FL}_{u , v} {\left(x, y\right)}^{2}}$

Der Schwellwert kann als eine Grenze für Rauschen aufgefasst werden, beispielsweise ergibt sich bei 20 Features und einer angenommenen mittleren Abweichung von 10% pro Feature ein Schwellwert von 0,2. Kandidaten an Position δₚ, die den Schwellwert überschreiten, werden entfernt. Statt FL_{u,v}(x,y) in Gleichung (37) kann auch FR_{u,v}(x,y,δₚ) analog verwendet werden. Ebenso kann ein Test mit einem analog normierten Wert von KSSD(x₀,y₀,δₚ) zur Filterung verwendet werden. Das hier angewendete Auswahlkriterium ist also der Vergleich der auf die lokale Signalstärke am Ort der zum Kandidaten der Disparität korrespondierenden Bildpositionen normierten Korrespondenzfunktion mit einem Schwellwert. Allgemein basiert diese Ausführungsform also darauf, dass die Recheneinrichtung eingerichtet ist, die auf die Signalstärke zumindest eines der Einzelbilder an der jeweiligen Bildposition normierte Korrespondenzfunktion zu bilden, beziehungsweise die Korrespondenzfunktion mit der Signalstärke zu normieren und den normierten Wert der Korrespondenzfunktion für einen Kandidaten der Disparität mit einem Schwellwert zu vergleichen. Der Kandidat wird bei Überschreiten des Schwellwerts aussortiert.

Ein vierter möglicher Filterprozessor nutzt die Konfidenzfunktion KSSD(x₀,y₀,δₚ) aus Gleichung (34). Diese ist durch die vorgenannte geeignete Wahl von f_{Konf} nur gering von kleinen Änderungen von δₚ, also in x-Richtung, abhängig. Durch die Verwendung der für die Gruppendisparität rauschoptimierten Faltungskerne in x-Richtung für die Faltungen in y-Richtung in KSSD(x₀,y₀,δₚ) misst KSSD(x₀,y₀,δₚ) somit rauschoptimiert eine Disparität in y-Richtung. Da YL_{Image} und YR_{Image} rektifiziert sind, muss in einem idealen System die Disparität in y-Richtung null sein wenn die Disparität in x-Richtung korrekt ermittelt wurde. Übertragen auf die reale Stereokamera und das Ausführungsbeispiel bedeutet das, dass KSSD(x₀,y₀,δ_{K}) für einen korrekten Kandidaten an Position δ_{K} minimal sein muss im Vergleich zu KSSD(x₀,y₀,δ_{A}) für andere Kandidaten an Position δ_{A}. Dies kann zur Filterung der Kandidaten und zur Auswahl des richtigen Kandidaten verwendet werden. Diesem Filterprozessor liegt demgemäß die Ausführungsform zugrunde, dass die Recheneinrichtung eingerichtet ist, eine Liste von Kandidaten des Disparitätswerts zu erstellen und anhand mindestens eines Auswahlkriteriums einen Disparitätswert als gültig auszuwählen, wobei die Werte einer Konfidenzfunktion für die Kandidaten berechnet und ein Kandidaten mit dem geringsten Wert der Konfidenzfunktion als gültig ausgewählt wird. Das Auswahlkriterium ist demnach der Wert einer Konfidenzfunktion, welcher von der Disparität in y-Richtung, also senkrecht zur Richtung der Epipolarlinie abhängt.

Noch ein mögliches Auswahlkriterium ist auch die Farbdifferenz oder ein von der Farbdifferenz abgeleitetes Merkmal. Generell können mehrere Auswahlkriterien kumulativ ermittelt werden, um eine hohe Sicherheit in der Bestimmung der tatsächlichen Disparität zu erhalten.

Die von der Korrespondenzfunktion SSD(x₀,y₀,δₚ) getrennte Verarbeitung der Konfidenzfunktion KSSD(x₀,y₀,δₚ) ist für die Rauschoptimierung der Gruppendisparität relevant. Die senkrecht zum Vektor der Kamerabasis berechnete Konfidenzfunktion liefert keinen eigenen Signalbeitrag zur Messung der Gruppendisparität und würde bei einer gemeinsamen isotropen Verarbeitung ähnlich der Kreuzkorrelation einen zusätzlichen Rauschbeitrag liefern.

Ein fünfter möglicher Filterprozessor nimmt weitere der vorgenannten Attribute von Kandidaten an Positionen δ_{K} und vergleicht diese mit Schwellwerten. Beispielsweise können so angenommene maximale Helligkeits- oder Farbunterschiede zwischen den Bildbereichen in beiden Kamerabildern als Filter verwendet werden.

Ein sechster möglicher Filterprozessor ermittelt das globale Minimum der Korrespondenzfunktion für alle Suchbildbereiche eines Referenzbildbereichs, also das Minimum von SSD(δ_{K}) für alle Kandidaten an Positionen D_{K}, leitet daraus einen Schwellwert ab, und sortiert Kandidaten aus deren SSD(δ_{K}) diesen Schwellwert überschreitet. Im in Fig. 13 dargestellten Beispiel ist der Schwellwert durch eine gestrichelte Linie gekennzeichnet.

Die vorgenannten Filterprozessoren können in beliebiger Reihenfolge geschaltet sein oder parallel ausgeführt werden und reduzieren die Anzahl der Kandidaten auf einen ausreichend geringen Wert, sodass die Disparitätswerte, vorzugsweise die subpixelgenauen Werte δ_{sub}, für eine gesamte Zeile in einem Speicher abgelegt und zusammengefasst werden können. Filterprozessoren, die unabhängig von der Berechnung der Korrespondenzfunktion sind, können auch bereits vor der Berechnung der Korrespondenzfunktion angewendet werden und gegebenenfalls Suchbildbereiche ausfiltern bevor für diese der Wert der Korrespondenzfunktion oder der 1. Ableitung dieser ermittelt wird.

Die von den vorgenannten Filterprozessoren verwendeten Werte, wie beispielsweise SSDₙₒᵣₘ(x₀,y₀,δₚ), können gewichtet zusammen mit KSSD(x₀,y₀,δₚ) zu einem Konfidenzwert bzw. Konfidenzvektor K pro Kandidat zusammengefasst werden. Wenn mehrere Kandidaten für dieselben oder unterschiedliche Koordinaten im Bild zueinander widersprüchliche Messergebnisse haben, kann ein solcher Konfidenzvektor K genutzt werden, um den wahrscheinlich richtigen Kandidaten zu finden und Kandidaten mit geringerer Konfidenz auszufiltern. Wenn beispielsweise K aus SSDₙₒᵣₘ(x₀,y₀,δₚ) und KSSD(x₀,y₀,δₚ) gebildet wird, ist der Kandidat mit dem K mit geringstem Betrag der wahrscheinlich beste Kandidat, und andere widersprüchliche Kandidaten können entfernt werden.

Der subpixelgenaue Wert δ_{sub} einer Gruppendisparität in der Nachbarschaft eines lokalen Extremums oder der Nullstelle der 1. Ableitung der Korrespondenzfunktion an der Position des Suchbildbereichs mit der Disparität δₚ kann von der Recheneinrichtung 3 anhand einer der folgenden Beziehungen $\begin{matrix}{δ}_{sub} \left({δ}_{p}\right) = {δ}_{p} - \frac{1}{2} ⋅ \frac{SSD ′ \left({δ}_{p}\right) + SSD ′ \left({δ}_{p + 1}\right)}{SSD " \left({δ}_{p}\right)} \\ = {δ}_{p} - \frac{1}{2} ⋅ \frac{SSD ′ \left({δ}_{p}\right) + SSD ′ \left({δ}_{p + 1}\right)}{SSD ′ \left({δ}_{p + 1}\right) - SSD ′ \left({δ}_{p}\right)} \\ = {δ}_{p} - \frac{1}{2} ⋅ \frac{SSD \left({δ}_{p + 1}\right) - SSD \left({δ}_{p - 1}\right)}{SSD \left({δ}_{p - 1}\right) + SSD \left({δ}_{p + 1}\right) - 2 ⋅ SSD \left({δ}_{p}\right)}\end{matrix}$ bestimmt werden. Dieser subpixelgenaue Wert kann dann zur Weiterverarbeitung oder Anzeige vom Korrespondenzanalysator ausgegeben werden. Dabei ist δₚ₋₁ die Disparität des Vorgängers in der Abfolge der Suchbildbereiche zum Suchbildbereich von δₚ. δₚ₊₁ ist die Disparität des Nachfolgers in der Abfolge der Suchbildbereiche zum Suchbildbereich von δₚ.

Insbesondere ist δₚ₋₁ der Vorgänger von δₚ, bezeichnet also die Disparität des Suchbildbereiches der auf der Epipolarlinie vor dem Suchbildbereich mit Disparität δₚ liegt, und δₚ₊₁ ist der Nachfolger von δₚ ist, also die Disparität des Suchbildbereiches bezeichnet der auf der Epipolarlinie nach dem Suchbildbereich mit Disparität δₚ liegt.

Anstelle oder zusätzlich zur Berechnung der Korrespondenzfunktion SSD(δₚ) kann, wie weiter oben bereits genannt, auch deren Ableitung SSD'(δₚ) berechnet und die Disparität δ aus dieser Ableitung bestimmt werden. Demgemäß ist in einem weiteren Aspekt dieser Offenbarung ein Korrespondenzanalysator vorgesehen, welcher eingerichtet ist, die 1. Ableitung der Korrespondenzfunktion SSD'(δₚ) anhand der Beziehung $SSD ′ \left({δ}_{p}\right) = {\sum }_{u = 1}^{{u}_{max}} {\sum }_{v = 1}^{{v}_{max}} \left(\begin{matrix}\left({FR}_{u , v}\left({δ}_{p}\right)-{FR}_{u , v}\left({δ}_{p - 1}\right)\right) \\ ⋅ \left({FR}_{u , v}\left({δ}_{p}\right)+{FR}_{u , v}\left({δ}_{p - 1}\right)-2⋅{FL}_{u , v}\right)\end{matrix}\right)$ zu bestimmen, wobei δₚ₋₁ die Disparität des Vorgängers in der Abfolge der Suchbildbereiche zum Suchbildbereich von δₚ ist, insbesondere die Disparität des Suchbildbereiches bezeichnet der auf der Epipolarlinie vor dem Suchbildbereich mit Disparität δₚ liegt, und FL_{u,v} das Ergebnis der Faltung des Signals YL_{Signal,v} mit dem Faltungskern mit dem Index u aus der Menge der uₘₐₓ Faltungskerne mit dem die Signale gefaltet werden bezeichnet, und FR_{u,v}(δ) das Ergebnis der Faltung des Signals YR_{Signal,v} eines Suchbildbereiches mit der Disparität δ mit dem Faltungskern mit dem Index u bezeichnet. Dies reduziert den Rechenaufwand, insbesondere bei der Verwendung von FPGA-Prozessoren und auch für GPU-Implementierungen wesentlich. Auch die Wortbreite reduziert sich erheblich (insbesondere bei MAC mit 9 Bit).

Nachfolgend wird die Verarbeitung mit einem aus zwei Korrespondenzanalysatoren bestehenden Systems mit einem hochfrequenten Prozess zur präzisen Erfassung von Oberflächendetails auf der Grundlage von Texturen und einen niederfrequenten Prozess zur näherungsweisen Erfassung der Oberfläche auf der Grundlage der Auswertung der diffusen Reflexion bei fehlender Textur geteilt.

### Niederfrequenter Prozess

In einem ersten parallelen Prozess wird gemäß einer Weiterbildung des Korrespondenzanalysators 1 von der Recheneinrichtung 3 ein nach vorangegangener Tiefpassfilterung auflösungsreduziertes Bildpaar verarbeitet, im Ausführungsbeispiel mit ¼ Auflösung, die Pixelzahl ist um den Faktor 16 reduziert. Dieser Prozess nutzt einen oder mehrere Gewichtsvektoren g_{LF}, die auf die Erfassung von im Wesentlichen niederfrequenten Ortsfrequenzen der diffusen Reflexion ("low frequency", LF) optimiert wurden, und speichert mindestens einen Satz Faltungskerne für die Faltung in x-Richtung und y-Richtung. Beide Bilder werden wie weiter oben beschrieben gefaltet, so dass die Featurevektoren bzw. Datenströme FL und FR des niederfrequenten Prozesses entstehen. Die Datenströme werden mit dem Korrespondenzanalysator gemäß Fig. 15 verarbeitet. Mithilfe der vorgenannten Filterprozessoren, sowie falls benötigt eines weiteren Nachbarschaftsfilters, werden die gültigen Kandidaten der Disparität δ an Koordinaten x,y ermittelt und damit eine LF-Disparitätskarte mit verminderter Auflösung, z.B. von ¼ Pixel und verminderter Messgenauigkeit gebildet. Die LF-Disparitätskarte wird anschließend zur Prädiktion des Disparitätsbereichs für die nachfolgende hochauflösende Analyse verwendet.

### Hochfrequenter Prozess

In einem zweiten parallelen Prozess wird gemäß einer Weiterbildung des Korrespondenzanalysators von einer zweiten, gleich aufgebauten Teil der Recheneinrichtung 3 das hochaufgelöste Bildpaar direkt verarbeitet. Der zweite Prozess ist vorzugsweise gegenüber dem ersten Prozess zeitlich verzögert, so dass die Rechenergebnisse des ersten Prozesses in Form der LF-Disparitätskarte zur Prädiktion des Disparitätsbereichs genutzt werden können. Dazu kann die Recheneinrichtung eingerichtet sein, durch eine Korrespondenzanalyse mit einer ersten Korrespondenzfunktion ermittelte oder geschätzte Disparitätswerte zur Prädiktion des Ergebnisses oder der Steuerung einer Korrespondenzanalyse mit einer zweiten Korrespondenzfunktion zu verwenden, wobei die zweite Korrespondenzfunktion durch geeignet ausgewählte Parameter oder Faltungsfunktionen höherfrequente Signalanteile aus den Bildbereichen überträgt als die erste Korrespondenzfunktion.

Bei typischen Kameratoleranzen wird der hochfrequente Prozess mithilfe der Prädiktion in einem Disparitätsbereich +/- 4 Pixel zu Disparitätswerten der LF-Disparitätskarte ausgeführt. Wenn die LF-Disparitätskarte für eine Koordinate keine gültigen Kandidaten oder nur Kandidaten mit einer niedrigen Konfidenz enthält, kann der hochfrequente Prozess für diese Koordinate den maximal erwartbaren Disparitätsbereich analysieren. Der zweite Prozess nutzt einen oder mehrere Gewichtsvektoren g_{HF}, die auf die Erfassung von Texturen unter Berücksichtigung der OTF der Kameras optimiert wurden, und speichert mindestens ein Satz Faltungskerne für die Faltung in x-Richtung und y-Richtung. Beide Bilder werden wie weiter oben beschrieben gefaltet, so dass die Datenströme FL und FR des hochfrequenten 2. Prozesses entstehen. Die weitere Verarbeitung erfolgt analog zum ersten Prozess.

Abschließend werden die Ergebnisse des ersten und zweiten Prozesses unter Berücksichtigung der jeweilig erreichten Konfidenz zu einer kombinierten Disparitätskarte zusammengefasst. Ein geeignetes Konfidenzmaß ist dabei der schon erwähnte Konfidenzvektor K, insbesondere ist es vorteilhaft dabei die akkumulierte Signalstärke (z.B. ACFR(x₀,y₀,δₚ), Gleichung (35)) mit einzubeziehen, so dass Messergebnisse bei Koordinaten mit geringer Signalstärke auch eine verringerte Konfidenz aufweisen. Wenn die Messergebnisse für eine Koordinate eine hohe Konfidenz sowohl im ersten niederfrequenten als auch im zweiten hochfrequenten Prozess aufweisen, werden die Ergebnisse des zweiten Prozesses genutzt, da sie wahrscheinlich eine höhere Messgenauigkeit haben. Wenn für eine Koordinate nur der erste Prozess eine hohe Konfidenz liefert, werden dessen Ergebnisse genutzt. Wenn für eine Koordinate der erste Prozess nur eine niedrige Konfidenz liefert, kann wie schon erwähnt der zweite Prozess den vollen zu erwartenden Disparitätsbereich analysieren und das Ergebnis genutzt werden, wenn es eine hohe Konfidenz aufweist. Zusätzlich können wie schon erwähnt widersprüchliche Messergebnisse auf Basis der Konfidenz gefiltert werden.

Im letzten Schritt wird eine Ausgangstiefpassfilterung vorgenommen. Hierzu wird zunächst die kombinierte Disparitätskarte, vorteilhaft bestehend aus Ergebnissen δ_{sub}, in kartesische Koordinaten nach Gleichung (1) umgerechnet und anschließend mit einem Gaußfilter interpoliert. Dadurch entsteht ein in der x,y-Ebene äquidistantes Raster, Fig. 6a vor und Fig. 6b nach Anwendung des Filters. Dieser Vorgang wird auch als Resampling bezeichnet.

Im bisherigen Ausführungsbeispiel wurde der Einfachheit halber angenommen, dass die Informationen der Bildbereiche die zur Disparitätsbestimmung verwendet werden, gleich gewichtet werden, unabhängig davon wo diese in den jeweiligen Bildbereichen zu verorten sind. Eine gegebenenfalls ungleichmäßige Gewichtung mittels einer Gewichtungsfunktion W(x) ist aber ebenso möglich, und kann im Signalmodell wie in Gleichung (40) gezeigt integriert werden, als Erweiterung zu Gleichung (6). $\begin{matrix}{C}_{YL , even} \left(x, {Δ}_{m}, {A}_{m}, n, m\right) = {\int }_{- T / 4}^{T / 4} W \left(x\right) ⋅ {A}_{m} ⋅ cos \left(m⋅ω⋅\left(-x+{Δ}_{m}\right)\right) ⋅ {c}_{k , n} ⋅ cos \left(n⋅ω⋅x\right) dx \\ {C}_{YL , odd} \left(x, {Δ}_{m}, {A}_{m}, n, m\right) = {\int }_{- T / 4}^{T / 4} W \left(x\right) ⋅ {A}_{m} ⋅ cos \left(m⋅ω⋅\left(-x+{Δ}_{m}\right)\right) ⋅ {s}_{l , n} ⋅ sin \left(n⋅ω⋅x\right) dx \\ {C}_{YR , even} \left(x, {Δ}_{m}, {A}_{m}, n, m, δ\right) = {\int }_{- T / 4}^{T / 4} W \left(x\right) ⋅ {A}_{m} ⋅ cos \left(m⋅ω⋅\left(-x+{Δ}_{m}+δ\right)\right) ⋅ {c}_{k , n} ⋅ cos \left(n⋅ω⋅x\right) dx \\ {C}_{YR , odd} \left(x, {Δ}_{m}, {A}_{m}, n, m, δ\right) = {\int }_{- T / 4}^{T / 4} W \left(x\right) ⋅ {A}_{m} ⋅ cos \left(m⋅ω⋅\left(-x+{Δ}_{m}+δ\right)\right) ⋅ {s}_{l , n} ⋅ sin \left(n⋅ω⋅x\right) dx \\ mit : ω = \frac{2 π}{T}\end{matrix}$

Die Gewichtungsfunktion kann beliebige Formen oder Werte annehmen, es kann zum Beispiel die in Gleichung (41) gezeigte Funktion genutzt werden, die einem Gauß-Filter gleicht. Diese wichtet Signale im Zentrum des Bildbereichs stärker als Signale am Rand des Bildbereichs, womit erstere einen größeren relativen Einfluß auf die Disparitätsbestimmung haben als letztere. Für eine gleichmäßige Gewichtung hat W(x) zum Beispiel den konstanten Wert eins. $W \left(x\right) = exp \left(-\frac{0.693 {x}^{2}}{{ρ}^{2}}\right)$

Bei geeigneter Wahl der Gewichtungsfunktion können die nötigen Faltungskerne nach dem schon beschriebenen Verfahren bestimmt werden, bei Bedarf mit numerischer Berechnung der Integrale. Zum Beispiel ändern sich bei Verwendung von Gleichung (41) die Matrixen AEV und AOD in Abhängigkeit von der Wahl des Parameters ρ, aber die weiteren Schritte sind ähnlich. Zu beachten ist dabei insbesondere, dass die Faltungskerne weiterhin eine gewichtete Summe von mehreren geraden beziehungsweise ungeraden harmonischen Funktionen umfassen, aber durch die Nutzung der Gewichtungsfunktion eben auch so bestimmt sind, dass sie gleichzeitig zusätzlich die ausgewählte Gewichtungsfunktion umfassen. Ohne Beschränkung auf bestimmte Ausführungsbeispiele, wie etwa die spezielle Gewichtung nach Gleichung (41) ist demgemäß in einer Weiterbildung vorgesehen, dass zumindest einer, vorzugsweise alle Faltungskerne eine Gewichtungsfunktion umfassen, insbesondere eine Gewichtungsfunktion, die geeignet ist, Informationen aus unterschiedlichen Teilen der Bildbereiche unterschiedlich stark in die Korrespondenzanalyse, insbesondere in die Bestimmung der Disparität, einfliessen zu lassen.

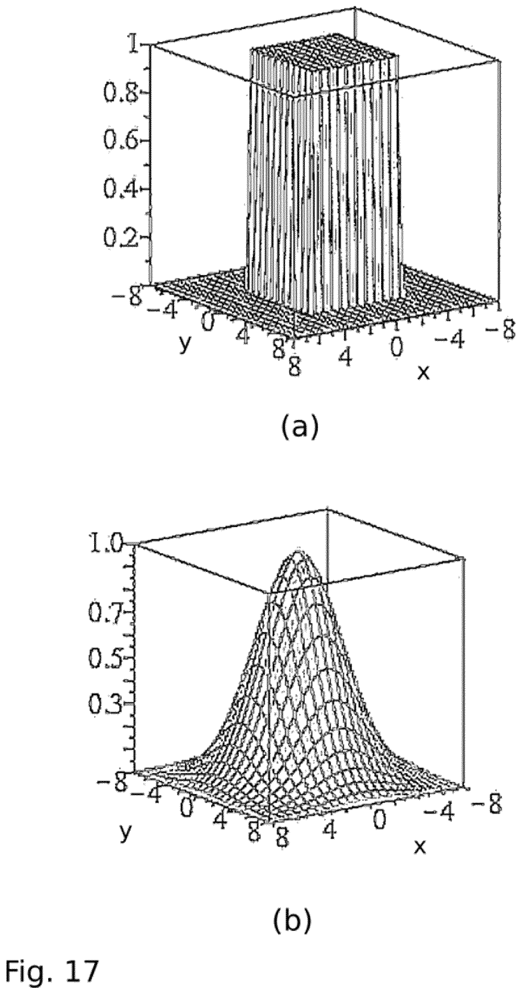

Bei der Bestimmung der Signale aus den Daten der Bildbereiche kann ebenso eine Gewichtung stattfinden. Fig. 17 illustriert eine daraus resultierende Gewichtung der Informationen der Bildbereiche, wobei Teilbild (a) eine gleichmäßige Gewichtung zeigt, die zur besseren Darstellung auf einen 8x8 Bildbereich zugeschnitten wurde, und Teilbild (b) eine Gewichtung anhand von Gleichung (41) mit einer Halbwertsbreite ρ von 3,5 Pixeln zeigt, sowohl bei der Bestimmung der Signale als auch bei der weiteren Verarbeitung der Signale.

Praktische Bedeutung hat eine Gauß-förmige Gewichtungsfunktion zur Erhöhung des 3D-Kontrasts, also vereinfacht gesagt der Fokussierung der Messung auf Teile der Bildbereiche, zum Beispiel das Zentrum. Damit sind durch die Gewichtung mit zum Beispiel der Gewichtungsfunktion aus Fig. 17 Teilbild (b) weniger beziehungsweise weniger starke Informationen zur Disparitätsbestimmung vorhanden, aber die genutzten Information liegen im Beispiel näher am gewünschten Messort. Das kann eingesetzt werden wenn das Signal/Rausch-Verhältnis gut ist, zum Beispiel wenn Objekte gut ausgeleuchtet ist und eine Textur haben und die Kamerabilder gut fokussiert sind, und kann dann zu einer genaueren Disparitätsmessung bei unebenen Objektflächen oder in der Nähe von Objektkanten führen. Die Gewichtungsfunktion kann daher auf Basis von Wissen über Objekt- oder Aufnahmeeigenschaften auch passend gewählt werden, zum Beispiel über eine geeignete Auswahl der Halbwertsbreiten oder des Parameters ρ. Je kleiner ρ ist, desto stärker wird die Messung auf einen Teilbereich fokussiert. Dagegen ist eine gleichmäßige Gewichtungsfunktion oder einer großer Wert für den Parameter ρ vorteilhaft in Bildbereichen mit einem weniger guten Signal/Rausch-Verhältnis, zum Beispiel bei Nebel.

Eine wie oben beschriebene Gauß-förmige Gewichtung ist eine mögliche Ausführungsform, bei welcher nahe am Schwerpunkt des gewichteten Bildbereichs liegende Bildelemente ein höheres Gewicht haben, als randseitige Bildteile. Allgemein ist daher nach noch einer Ausführungsform vorgesehen, dass zumindest einer der Filterkerne eine Gewichtungsfunktion umfasst, welche Teile eines Bildbereichs die nah zum Schwerpunkt dieses mit dieser Gewichtsfunktion gewichteten Bildbereichs liegen, stärker gewichtet als Teile die weiter weg von diesem Schwerpunkt liegen. Der Schwerpunkt kann hier insbesondere wieder der geometrische Schwerpunkt des Bildbereichs sein. Wie ebenfalls oben beschrieben kann die Wichtung anhand der Bildeigenschaften variiert oder ausgewählt werden. Dazu ist allgemein in einer Weiterbildung vorgesehen, dass die Recheneinrichtung eingerichtet ist, eine Gewichtungsfunktion abhängig von Bildeigenschaften, insbesondere dem Signal-Rausch-Verhältnis oder eines durch vorhergehende Messungen festgestellten oder plausibel erscheinenden Sprungs der Tiefeninformation in der Nähe oder innerhalb des Bildbereichs auszuwählen. Die Plausibilität eines Sprungs in der Tiefeninformation kann beispielsweise dann gegeben sein und für den Bildbereich festgelegt werden, wenn ein solcher Sprung bereits für eine Mindestzahl an benachbarten Bildbereichen oder Pixeln anhand des Verlaufs der Disparität festgestellt wurde. Beispielsweise kann eine Änderung der Wichtung erfolgen wenn zumindest zwei benachbarte Pixel einen solchen Sprung der Tiefeninformation aufweisen.

Falls eine Gewichtungsfunktion so gewählt wurde, dass der Schwerpunkt der Gewichtungsfunktion in einem Bildbereich abweicht vom Schwerpunkt des Bildbereichs, dann ist es vorteilhaft, bei der Ermittlung der Korrespondenzfunktion SSD(δₚ) den Abstand δₚ von Referenzbildbereichen zu Suchbildbereichen anhand der Schwerpunkte der Gewichtungsfunktionen in diesen Bildbereichen zu bestimmen. Bei der Berechnung des Schwerpunkts der Gewichtungsfunktion gehen die Funktionswerte der Gewichtungsfunktion entsprechend der Massen oder lokalen Dichten bei der Berechung des Massenschwerpunkts ein. Mit anderen Worten entspricht der Schwerpunkt der Gewichtungsfunktion dem Gewichtsschwerpunkt des gewichteten Bildbereichs.

Für eine Wichtung mit einer Gauß-Verteilung ist für Bildbereiche der Größe 8 × 8 Pixeln besonders der Bereich um ρ=3 interessant. Ohne Beschränkung auf das dargestellte Beispiel ist daher allgemein in Weiterbildung vorgesehen, dass zumindest einer der Faltungskerne eine Gewichtungsfunktion enthält, deren Funktionswerte eine Halbwertsbreite aufweisen, wobei die Halbwertsbreite kleiner ist als 2/3 der Breite der Bildbereiche, vorzugsweise kleiner als die Hälfte der Breite der Bildbereiche. Hierbei ist die Breite derjenigen Richtung maßgeblich, entlang derer die Gewichtungsfunktion variiert. Bei dem Beispiel der Fig. 17 kann dies sowohl die x-, als auch die y-Richtung sein.

Wie bereits beschrieben, ist es von Vorteil, wenn eine Tiefpassfilterung der 3D-Daten, beziehungsweise der aus den Daten als gültig bestimmten Disparitäten vorgenommen wird. In einer alternativen oder zusätzlichen Ausführungsform der Erfindung hat es sich auch als günstig erwiesen, bereits vor der Bestimmung der Disparität δ eine gemittelte Korrespondenzfunktion zu errechnen durch eine gegebenfalls gewichtete Mittelung oder Tiefpass-ähnliche Filterung der errechneten Funktionswerte der Korrespondenzfunktion SSD(δₚ) für den jeweiligen Referenzbildbereich mit den Korrespondenzfunktionen von in der Nähe liegenden Referenzbildbereichen an den gleichen Stellen δₚ. Daher ist in einer Ausführungsform des Korrespondenzanalysators allgemein vorgesehen, dass die Recheneinrichtung 3 eingerichtet ist, für einen Referenzbildbereich eine Mittelung, insbesondere ein arithmetisches Mittel oder gewichtetes Mittel der Werte der Korrespondenzfunktion SSD(δₚ) dieses Referenzbildbereiches mit den Werten der Korrespondenzfunktionen SSD(δₚ) einer Mehrzahl von anderen, insbesondere benachbarten Referenzbildbereichen vorzunehmen, und diese gemittelte Korrespondenzfunktion gemäß dieser Offenbarung weiterzuverarbeiten, insbesondere einen subpixelgenauen Wert der Disparität an der Stelle δₚ zu errechnen und auszugeben.

Gleichung (42) zeigt als Ausführungsbeispiel eine gemittelte Korrespondenzfunktion SSD_{Avg}, die eine 3x3-Umgebung an Referenzbildbereichen nutzt und diese gleichmäßig gewichtet einfließen lässt. In den weiteren Ausführungsschritten wird dann die Funktion SSD_{Avg} statt der Funktion SSD genutzt. ${SSD}_{Avg} \left(x, y, {δ}_{p}\right) = {\sum }_{{d}_{x} = - 1}^{1} {\sum }_{{d}_{y} = - 1}^{1} \left(\frac{SSD \left(x+{d}_{x},y+{d}_{y},{δ}_{p}\right)}{9}\right)$

Solche Kombinationen der Korrespondenzfunktionen mehrerer Referenzbildbereiche können den erreichbaren 3D-Kontrast auf krummen oder unebenen Flächen zwar leicht senken, allerdings enthalten Korrespondenzfunktionen auch zumindest teilweise dekorrellierte Störungen wie Quantenrauschen oder Pixelartefakte, die vorteilhaft durch diese Mittelung oder Tiefpassfilterung im linearen Teil der Signalverarbeitung abgeschwächt werden. Unter anderem durch die Anwendung der Filterung nach der Anwendung der Faltungskerne für die Gruppendisparität und der Berechnung der Korrespondenzfunktion, unterscheidet sich diese Filterung von einer Tiefpassfilterung vor einer Berechnung der SSD, wie etwa beim Verfahren nach Gabor. Diese Filterung findet insbesondere auch vor einer Subpixelinterpolation statt, mit welcher die genaue Lage der Disparität ermittelt wird, und unterscheidet sich damit von einem Ausgangstiefpassfilter.

Zusätzlich existieren Störungen in SSDᵥₐᵣ, dem varianten Teil der Korrespondenzfunktion. Diese können besonders effektiv durch eine Mittelung mehrerer Korrespondenzfunktionen abgesenkt werden, weil sie an dieser Stelle der Signalverarbeitung noch partiell korreliert sind. Damit ist eine Tiefpassfilterung besonders effektiv. Diese Eigenschaft existiert nicht mehr nach der Berechnung der Disparität, da eine Subpixelinterpolation typischerweise nicht-linear ist, und liegt auch nicht in dieser Ausprägung vor der Berechnung der Korrespondenzfunktionen vor, stellt also eine besondere Eigenschaft dieser Filterung dar. Das Tiefpassfilter wird in Weiterbildung optimal so konfiguriert, dass die Ortsfrequenz 4ω nur gering und der Ortsfrequenzanteil oberhalb 4ω stark reduziert wird.

Abweichungen von den offenbarten vorteilhaften Ausgestaltungen führen typischerweise zu mehr Rauschen oder einer andersartigen geringeren Qualität der Disparitätsmessung. Beispiele dafür sind die schon erwähnten Abweichungen von Koeffizienten der Faltungskerne, eine Faltung der Signale des Referenzbildbereichs und der Signale von einer Mehrzahl der Suchbildbereiche mit unterschiedlichen Faltungskernen, das Nutzen einer Gewichtungsfunktion deren Schwerpunkt nicht dem gewünschten Messpunkt innerhalb der Bildbereiche entspricht, oder die Nutzung von Faltungskernen, die gerade beziehungsweise ungerade Funktionen umfassen, deren Koordinatenursprung nicht an der Stelle des Schwerpunkts der Gewichtungsfunktion im Bildbereich liegt, oder bei gleichmäßiger Gewichtung nicht im Schwerpunkt des Bildbereichs liegt. Solche Abweichungen führen typischerweise zu Verfälschungen der Disparitätsmessung. In Kombination mit einer Mittelung oder Tiefpassfilterung der Korrespondenzfunktion können Abweichungen dieser oder ähnlicher Art aber unter Umständen konstruktiv genutzt werden. Dabei werden beispielsweise für verschiedene Referenzbildbereiche unterschiedliche Faltungskerne, unterschiedliche Schwerpunkte der Gewichtsfunktion, oder Faltungskerne mit unterschiedlichen Koordinatenursprüngen genutzt. Allgemein muss, wie bei der vorstehend beschriebenen Ausführungsform der Koordinatenursprung, bezüglich dem die Funktionen der Faltungskerne gerade und ungerade sind, nicht in der Mitte der jeweiligen Bildbereiche liegen, sondern kann allgemein außerhalb der Mitte der Bildbereiche liegen. Dabei ist es vorteilhaft, diese Abweichungen so zu wählen, dass die einzelnen dadurch zu erwartenden Messfehler der Disparität statistisch in Summe Null ergeben, beziehungsweise in Summe und gewichtet entsprechend einer etwaigen Gewichtung der Mittelung der Korrespondenzfunktion Null ergeben. Das Rauschen der Korrespondenzfunktion, insbesondere von SSDᵥₐᵣ, ist unter anderem abhängig von der jeweiligen Disparität, womit bei geeigneter Wahl solche Abweichungen partiell dekorreliert sein können. Die hier offenbarte Anordnung und das Signalmodell sind so konstruiert, dass SSDᵥₐᵣ in der Nähe von Extrema der Korrespondenzfunktion typischerweise im Wesentlichen ungeraden Funktionen ähnelt. Damit ist die Mittelung von Korrespondenzfunktionen besonders geeignet, das Rauschen durch statistische Akkumulation von Fehlern zu verringern.

Wie weiter oben beschrieben, führen kleinere Toleranzen des Gains der Kameras im Allgemeinen nicht zu Rauschen, wobei aber größere Kontrastdifferenzen zwischen den Kameras, besonders bei unterschiedlicher OTF, nicht kompensiert werden. Da eine reale Stereokamera im Allgemeinen also Toleranzen der Übertragungsfunktionen der Kameras aufweist, sind die Amplituden der Faltungsergebnisse der Signale eines Referenzbildbereichs nicht notwendigerweise gleich den Amplituden der Faltungsergebnisse der Signale eines korrespondierenden Suchbildbereichs. Der Wert der Korrespondenzfunktion SSD an dieser Stelle ist dann von Null verschieden, was zu zusätzlichem Rauschen in der ermittelten Disparität führen kann. Der Vektor der Amplituden der Faltungsergebnisse der Signale eines Bildbereichs kann durch die Signalstärke des Bildbereichs abgeschätzt werden. Eine Normierung dieser Faltungsergebnisse mittels der Signalstärke, also zum Beispiel eine Division der Faltungsergebnisse durch die Signalstärke, ist somit vorteilhaft, da dies die Unterschiede zwischen den Amplituden verringert.

Daher ist in einer Ausführungsform des Korrespondenzanalysators allgemein vorgesehen, dass die Recheneinrichtung eingerichtet ist, zumindest eines, vorzugsweise alle Faltungsergebnisse der Signale eines, vorzugsweise aller Bildbereiche mit einem Wert zu normieren, der mit der Signalstärke des jeweiligen Bildbereichs korreliert, insbesondere der Signalstärke der zur Korrespondenzanalyse genutzten Signale dieses Bildbereichs.

Im Ausführungsbeispiel mit digitalen Bildern kann die Signalstärke mithilfe der 2. Ableitung des Vergleichs eines Bildes mit sich selbst mittels der Korrespondenzfunktion abgeschätzt werden. Anhand der Gleichungen (30) und (29) kann die Signalstärke somit als Wurzel von ACFL beziehungsweise ACFR aus Gleichung (35) bestimmt werden.

Gemäß einer Weiterbildung der Erfindung ist nun die Recheneinrichtung eingerichtet, zumindest eines, vorzugsweise alle der aus den Bilddaten der linken und rechten Kamera errechneten Features mit der jeweiligen Signalstärke an der entsprechenden Stelle im Bild dieser Kamera zu normieren und insbesondere dann die weiteren Berechnungen mit den so normierten Features durchzuführen. Diese weitere Berechnung beinhaltet insbesondere auch die Bestimmung des oder der Minima der Korrespondenzfunktion. Dadurch steigt die Ähnlichkeit der Signale, das Signal/RauschVerhältnis verbessert sich, und das relative Minimum der SSD nähert sich dem Zielwert 0. Anstelle der Wurzel können auch Näherungslösungen eingesetzt werden. Ferner konvergiert SSD" gegen 1 wenn die Features wie oben gezeigt normiert wurden, und wenn keine weiteren Störungen vorliegen. Diese Eigenschaft kann auch in einer späteren Konfidenzanalyse genutzt werden.

**Bezugszeichenliste**

| | |
|---|---|
| 1 | Korrespondenzanalysator |
| 2 | Stereokamera |
| 3 | Recheneinrichtung |
| 4 | Objekt |
| 5 | Kamerasensor |
| 6 | Speicher |
| 8, 9 | Objektiv |
| 10 | Objektivhalterung |
| 11, 12 | Exzenterelement |
| 13 | Schraube |
| 20, 21 | Kamera |
| 22 | Aufnahmevorrichtung |
| 25, 26 | Digitalbild |
| 30 | Adder |
| 32 | Verzögerungseinheit |
| 34, 35 | DualPort RAM |
| 36, 37 | DSP |
| 98, 99 | Epipol |
| 101 | 3D-Punkt |
| 102 | Epipolarebene |
| 103, 106 | Bildpunkt |
| 104, 105 | Bild |
| 107 | Epipolarlinie |

## Patentansprüche

1. Korrespondenzanalysator (1) zur Bestimmung der Disparität δ, somit der Verschiebung korrespondierender Bildelemente in zwei digitalen Einzelbildern (25, 26), umfassend
- eine Recheneinrichtung (3), die eingerichtet ist,
- aus den beiden Einzelbildern (25, 26) Bildbereiche auszuwählen, wobei der Bildbereich eines der Einzelbilder als Referenzbildbereich ausgewählt wird, und im anderen Einzelbild eine Abfolge von Suchbildbereichen ausgewählt wird, und
- aus dem Referenzbildbereich eine Mehrzahl von Signalen YL_{Signal,v} und aus den Suchbildbereichen jeweils eine Mehrzahl von Signalen YR_{Signal,v} zu erzeugen, und
- die Mehrzahl der Signale YL_{Signal,v} des Referenzbildbereichs mit in einem Speicher (6) gespeicherten geraden und ungeraden Faltungskernen zu falten, wobei die geraden Faltungskerne eine gewichteten Summe von mehreren geraden harmonischen Funktionen unterschiedlicher Ortsfrequenzen und die ungeraden Faltungskerne eine gewichtete Summe von mehreren ungeraden harmonischen Funktionen unterschiedlicher Ortsfrequenzen umfassen,
- und für jeden der Suchbildbereiche die Signale YR_{Signal,v} mit den im Speicher (6) gespeicherten Faltungskernen zu falten und
- für jedes Signalpaar YL_{Signal,v} und YR_{Signal,v} die Differenzen der jeweiligen Faltungsergebnisse zu bilden, und
- für jeden der Suchbildbereiche die Differenzen der Faltungsergebnisse nichtlinear zu verarbeiten und zu einem Funktionswert einer Korrespondenzfunktion SSD(δₚ) an der Stelle δₚ zu akkumulieren oder aus den Differenzen der Faltungsergebnisse die erste Ableitung SSD'(δₚ) der Korrespondenzfunktion SSD(δₚ) nach δₚ an der Stelle δₚ zu ermitteln, und damit einen Funktionswert einer Korrespondenzfunktion SSD(δₚ) oder deren Ableitung an der Stelle δₚ zu bilden, wobei δₚ den Abstand des Referenzbilds vom Suchbild bezeichnet, wobei der Referenzbildbereich und die Suchbildbereiche auf einer Epipolarlinie liegen, so dass die Disparität für einen Suchbildbereich der Abstand dieses Suchbildbereichs zum Referenzbildbereich auf der Epipolarlinie darstellt, und
- lokale Extrema der Korrespondenzfunktion SSD(δₚ) oder Nulldurchgänge der Ableitung SSD'(δₚ) der Korrespondenzfunktion SSD(δₚ) zu ermitteln, und
- die Stelle δₚ von einem der lokalen Extrema oder von einem der Nulldurchgänge als Disparität δ auszugeben, oder
- einen subpixelgenauen Wert der Disparität an der Stelle δₚ zu errechnen und auszugeben.

2. Korrespondenzanalysator (1) gemäß dem vorstehenden Anspruch, wobei für die im Speicher (6) gespeicherten Faltungskerne zumindest eines der folgenden Merkmale gilt:
- die Faltungskerne sind so ausgewählt, dass diesein einem Signalmodell für jedes Signal im Ortsfrequenzbereich die Faltungsoperationen der kₘₐₓ geraden und lₘₐₓ ungeraden Funktionen jeweils Summen mit gewichteten Signalanteilen einer Gruppe von Ortsfrequenzen mit den Amplituden Aₘ übertragen, so dass sich in der Korrespondenzfunktion SSD(δ) zwei Teilsummen für jedes Signal und jede Ortsfrequenz mit Index m ausbilden, die erste mit durch quadratischen Amplituden Aₘ² gekennzeichneten Termen aus den Ergebnissen der Faltungsoperationen mit den geraden Funktionen, die zweite mit durch quadratischen Amplituden Aₘ² gekennzeichneten Termen aus den Ergebnissen der Faltungsoperationen mit den ungeraden Funktionen, und sich die erste Teilsumme und die zweite Teilsumme nach dem trigonometrischen Pythagoras zusammenfassen lassen so dass die Summe SSDᵢₙᵥ(δ) beider Teilsummen unabhängig von der Objektphase Δₘ ist,
- die Faltungskerne sind so ausgewählt, dass bei der Bestimmung der Disparität eine örtliche Standardabweichung der Messungen der Disparität von kleiner als 0,2 Pixel, sogar von 0,1 Pixeln bei der Verschiebung eines ebenen Objekts erzielt wird, welches eine Intensitätsmodulation entlang der Richtung der Epipolarlinie, insbesondere inklusive einer Ortsfrequenz im Ortsfrequenzbereich, oder eine entsprechende Textur aufweist, und wobei die Verschiebung des Objekts bei gleichbleibender Distanz Z zur Kamera und entlang der Epipolarlinie erfolgt.

3. Korrespondenzanalysator (1) gemäß einem der vorstehenden Ansprüche, **gekennzeichnet durch** zumindest eines der folgenden Merkmale:
- die Faltungskerne sind im Ortsbereich so ausgewählt, dass für jedes Signal im Ortsfrequenzbereich die Faltungsoperationen der kₘₐₓ geraden und lₘₐₓ ungeraden Funktionen jeweils Summen mit gewichteten Signalanteilen einer Gruppe von Ortsfrequenzen mit den Amplituden Aₘ übertragen, so dass sich in der Korrespondenzfunktion SSD(δ) zwei Terme für jedes Signal und jede Ortsfrequenz mit Index m ausbilden, wobei der erste Term ein Produkt einer quadratischen Amplitude Aₘ², einer ersten Konstanten und einer quadrierten Sinus-Funktion ist, und der zweite Term ein Produkt einer quadratischen Amplitude Aₘ², einer zweiten Konstanten und einer quadrierten Cosinus-Funktion ist, und die Werte der ersten und der zweiten Konstante gleich sind oder innerhalb einer Toleranz von +/-20% gleich sind,
- zumindest einer, vorzugsweise alle Faltungskerne umfassen eine Gewichtungsfunktion die geeignet ist, Informationen aus unterschiedlichen Teilen der Bildbereiche unterschiedlich stark in die Korrespondenzanalyse, insbesondere in die Bestimmung der Disparität, einfliessen zu lassen,
- zumindest einer der Filterkerne umfasst eine Gewichtungsfunktion, welche Teile eines Bildbereichs die nah zum geometrischen Schwerpunkt des Bildbereichs liegen, stärker gewichtet als Teile die weiter weg von diesem Schwerpunkt liegen,
- die Recheneinrichtung ist eingerichtet, eine Gewichtungsfunktion abhängig von Bildeigenschaften auszuwählen.

4. Korrespondenzanalysator (1) gemäß einem der vorstehenden Ansprüche, wobei die Recheneinrichtung (3) eingerichtet ist,
- aus dem Referenzbildbereich eine Mehrzahl von vₘₐₓ Signalen YL_{Signal,v} durch Faltungsoperationen der Daten des Referenzbildbereichs senkrecht zur Epipolarlinie zu erzeugen, und aus den Suchbildbereichen jeweils eine Mehrzahl von vₘₐₓ Signalen YR_{Signal,v} durch Faltungsoperationen der Daten des jeweiligen Suchbildbereichs senkrecht zur Epipolarlinie zu erzeugen, wobei die Faltungsoperationen die die Signale erzeugen und die Faltungsoperationen der kₘₐₓ geraden und lₘₐₓ ungeraden Funktionen im Signalmodell so ausgewählt sind, dass letztere Faltungsoperationen jeweils Summen mit gewichteten Signalanteilen einer Mehrzahl von Ortsfrequenzen übertragen, im Folgenden bezeichnet durch unterschiedliche Werte für den Index m, und dass
- für jedes Signal sich in der Korrespondenzfunktion SSD(δ) eine erste Teilsumme bildet, deren Terme unabhängig sind von den Objektphasen Δₘ und sich eine zweite Teilsumme bildet deren Terme abhängig sind von den Objektphasen Δₘ, wobei
- sich bei einer Akkumulation der ersten Teilsummen jedes der vₘₐₓ Signale eine konstruktive Akkumulation ausbildet bei der sich die einzelnen Terme nicht gegenseitig kompensieren und
- sich bei einer Akkumulation der zweiten Teilsummen jedes der vₘₐₓ Signale eine statistische Akkumulation ausbildet bei der sich diese rauschbehafteten Anteile statistisch zumindest teilweise kompensieren.

5. Korrespondenzanalysator (1) gemäß einem der vorstehenden Ansprüche, **dadurch gekennzeichnet, dass**
- die Signalformen der geraden Faltungskerne der Anzahl kₘₐₓ durch Fourierreihen mit den Fourierkoeffizienten c_{k,n} und die Signalformen der ungeraden Faltungskerne der Anzahl lₘₐₓ durch Fourierreihen mit den Fourierkoeffizienten s_{l,n} beschrieben werden, wobei n der Index der jeweiligen Ortsfrequenz der jeweiligen Fourrierreihe ist, und dass
- für jede so übertragene Ortsfrequenz m und das entsprechende Profilvektor-Gewicht gₘ die Fourierkoeffizienten c_{k,n} und s_{l,n} Lösungen des folgenden nichtlinearen Gleichungssystems sind: ${g}_{m} = {\sum }_{k = 1}^{{k}_{max}} {\left({\sum }_{n = 1}^{{n}_{max}} {c}_{k , n} ⋅ {AEV}_{n , m}\right)}^{2} = {\sum }_{l = 1}^{{l}_{max}} {\left({\sum }_{n = 1}^{{n}_{max}} {s}_{l , n} ⋅ {AOD}_{n , m}\right)}^{2}$ , wobei die Koeffizienten AEV_{n,m} und AOD_{n,m} bei jeweils 4 Werten für die Indizes m und n durch die nachfolgenden Matrizen bestimmt sind oder von den Werten dieser Matrizen $AEV = {\vec{\left[\begin{matrix}\frac{1}{4} & \frac{1}{3 π} & 0 & - \frac{1}{15 π} \\ \frac{1}{3 π} & \frac{1}{4} & \frac{3}{5 π} & 0 \\ 0 & \frac{3}{5 π} & \frac{1}{4} & \frac{3}{7 π} \\ - \frac{1}{15 π} & 0 & \frac{3}{7 π} & \frac{1}{4}\end{matrix}\right]}}^{m} ↓ n AOD = {\vec{\left[\begin{matrix}\frac{1}{4} & \frac{2}{3 π} & 0 & - \frac{4}{15 π} \\ \frac{2}{3 π} & \frac{1}{4} & \frac{2}{5 π} & 0 \\ 0 & \frac{2}{5 π} & \frac{1}{4} & \frac{4}{7 π} \\ - \frac{4}{15 π} & 0 & \frac{4}{7 π} & \frac{1}{4}\end{matrix}\right]}}^{m} ↓ n$ jeweils um einen Faktor 0,8 bis 1,2 abweichen, und wobei die geraden Faltungskerne f_{even,k} und die ungeraden Faltungskerne f_{odd,k} gegeben sind durch ${f}_{even , k} = {\sum }_{n = 1}^{{n}_{max}} {c}_{k , n} ⋅ cos \left(n⋅ω⋅x\right)$ ${f}_{odd , l} = {\sum }_{n = 1}^{{n}_{max}} {s}_{l , n} ⋅ sin \left(n⋅ω⋅x\right) .$

6. Korrespondenzanalysator (1) gemäß einem der vorstehenden Ansprüche, **dadurch gekennzeichnet, dass** die 1. Ableitung der Korrespondenzfunktion SSD'(δₚ) anhand der Beziehung $SSD ′ \left({δ}_{p}\right) = {\sum }_{u = 1}^{{u}_{max}} {\sum }_{υ = 1}^{{υ}_{max}} \left(\begin{matrix}\left({FR}_{u , υ}\left({δ}_{p}\right)-{FR}_{u , υ}\left({δ}_{p - 1}\right)\right) \\ ⋅ \left({FR}_{u , υ}\left({δ}_{p}\right)+{FP}_{u , υ}\left({δ}_{p - 1}\right)-2⋅{FL}_{u , υ}\right)\end{matrix}\right)$ bestimmt wird, wobei δₚ₋₁ die Disparität des Vorgängers in der Abfolge der Suchbildbereiche zum Suchbildbereich von δₚ auf der Epipolarlinie ist, und FL_{u,v} das Ergebnis der Faltung des Signals YL_{Signal,v} mit dem Faltungskern mit dem Index u aus der Menge der uₘₐₓ Faltungskerne mit dem die Signale gefaltet werden bezeichnet, und FR_{u,v}(δ) das Ergebnis der Faltung des Signals YR_{Signal,v} eines Suchbildbereiches mit der Disparität δ mit dem Faltungskern mit dem Index u bezeichnet, und wobei vₘₐₓ die Anzahl der Signalpaare YL_{Signal,v} , YR_{Signal,v} bezeichnet.

7. Korrespondenzanalysator (1) gemäß einem der vorstehenden Ansprüche, **dadurch gekennzeichnet, dass** die Recheneinrichtung (3) eingerichtet ist, den subpixelgenauen Wert δ_{sub} in der Nachbarschaft eines lokalen Extremums oder der Nullstelle der 1. Ableitung der Korrespondenzfunktion an der Position des Suchbildbereichs mit der Disparität δₚ anhand einer der folgenden Beziehungen $\begin{matrix}{δ}_{sub} \left({δ}_{p}\right) = {δ}_{p} - \frac{1}{2} ⋅ \frac{SSD ′ \left({δ}_{p}\right) + SSD ′ \left({δ}_{p + 1}\right)}{SSD " \left({δ}_{p}\right)} \\ = {δ}_{p} - \frac{1}{2} ⋅ \frac{SSD ′ \left({δ}_{p}\right) + SSD ′ \left({δ}_{p + 1}\right)}{SSD ′ \left({δ}_{p + 1}\right) - SSD ′ \left({δ}_{p}\right)} \\ = {δ}_{p} - \frac{1}{2} ⋅ \frac{SSD \left({δ}_{p + 1}\right) - SSD \left({δ}_{p - 1}\right)}{SSD \left({δ}_{p - 1}\right) + SSD \left({δ}_{p + 1}\right) - 2 ⋅ SSD \left({δ}_{p}\right)}\end{matrix}$ zu bestimmen, wobei δₚ₋₁ die Disparität des Vorgängers in der Abfolge der Suchbildbereiche zum Suchbildbereich von δₚ auf der Epipolarlinie ist, und wobei δₚ₊₁ die Disparität des Nachfolgers in der Abfolge der Suchbildbereiche zum Suchbildbereich von δₚ ist, und δ_{sub} als Disparität δ auszugeben.

8. Korrespondenzanalysator (1) nach Anspruch 5, **dadurch gekennzeichnet, dass** eine Mehrzahl an unterschiedlich parametrierten Korrespondenzfunktionen und deren Faltungskerne sowie den diesen jeweils entsprechenden Profilvektor gₘ im Korrespondenzanalysator (1) gespeichert sind oder zur Laufzeit ermittelt werden, wobei der Korrespondenzanalysator (1) weiter dazu eingerichtet ist, anhand der vorliegenden Bildbereiche oder anhand der für die weitere Bearbeitung vorteilhaften Bildbereichen einen Teil dieser Mehrzahl von Korrespondenzfunktionen und deren Faltungskernen auszuwählen.

9. Korrespondenzanalysator gemäß dem vorstehenden Anspruch, **dadurch gekennzeichnet, dass** die Parameter mindestens einer Korrespondenzfunktion und deren Faltungskerne so gewählt sind, dass der Gewichtskoeffizient des jeweils entsprechenden Profilvektors gₘ für die höchste Ortsfrequenz kleiner ist, als mindestens einer der anderen Gewichtskoeffizienten dieses Profilvektors.

10. Korrespondenzanalysator (1) nach einem der zwei vorstehenden Ansprüche, **dadurch gekennzeichnet, dass** der Korrespondenzanalysator (1) dazu eingerichtet ist, das lokale oder globale Leistungsspektrum der Bilddaten zu bestimmen und die Gewichte in Abhängigkeit des lokalen oder globalen Leistungsspektrums im Bild einzusetzen.

11. Korrespondenzanalysator (1) nach einem der vorstehenden Ansprüche, **dadurch gekennzeichnet, dass** die Recheneinrichtung (3) eingerichtet ist, zumindest eine der folgenden Größen mit einem Tiefpassfilter zu filtern:
- die errechneten Disparitätswerte,
- Konfidenzwerte,
- durch Konfidenzwerte gewichtete Disparitätswerte.

12. Korrespondenzanalysator (1) nach einem der vorstehenden Ansprüche, **dadurch gekennzeichnet, dass** die Anzahl der geraden Faltungskerne kₘₐₓ gleich 2 ist und die geraden Faltungskerne die folgenden Funktionen f_{even,1} und f_{even,2} enthalten und die Anzahl lₘₐₓ der ungeraden Faltungskerne gleich 2 ist und die ungeraden Faltungskerne die folgenden Funktionen f_{odd,1} und f_{odd,2} enthalten, wobei f_{even,1} und f_{even,2} so ausgewählt sind dass die geraden Faltungskerne mittelwertfrei sind und zumindest einer der Koeffizienten 3,4954, 0,7818, 4,9652, 1,8416, 4,0476, 0,2559, 6,0228 oder 0,0332 auch um bis zu 10% größer oder kleiner sein kann: ${f}_{even , 1} \left(x\right) = 3 , 4954 cos \left(\frac{πx}{8}\right) + 0 , 7818 cos \left(\frac{πx}{4}\right) + {off}_{even , 1}$ ${f}_{even , 2} \left(x\right) = 4 , 9652 cos \left(\frac{3 πx}{8}\right) + 1 , 8416 cos \left(\frac{πx}{2}\right) + {off}_{even , 2}$ ${f}_{odd , 1} \left(x\right) = 4 , 0476 sin \left(\frac{πx}{8}\right) - 0 , 2559 sin \left(\frac{πx}{4}\right)$ ${f}_{odd , 2} \left(x\right) = 6 , 0228 sin \left(\frac{3 πx}{8}\right) - 0 , 0332 sin \left(\frac{πx}{2}\right) .$

13. Korrespondenzanalysator (1) nach einem der vorstehenden Ansprüche, **gekennzeichnet dadurch, dass** die Recheneinrichtung (3) eingerichtet ist, für einen Referenzbildbereich eine Mittelung der Werte der Korrespondenzfunktion SSD(δₚ) dieses Referenzbildbereiches mit den Werten der Korrespondenzfunktionen SSD(δₚ) einer Mehrzahl von anderen, benachbarten Referenzbildbereichen vorzunehmen, und mit dieser gemittelten Korrespondenzfunktion einen subpixelgenauen Wert der Disparität an einer Stelle δₚ zu errechnen und auszugeben.

14. Korrespondenzanalysator (1) nach einem der vorstehenden Ansprüche, **dadurch gekennzeichnet, dass** die Recheneinrichtung (3) eingerichtet ist alle Faltungsergebnisse der Signale aller Bildbereiche mit einem Wert zu normieren, der mit der Signalstärke des jeweiligen Bildbereichs korreliert.

15. Stereokamera (2) mit zwei Kameras (20, 21), welche jeweils einen Kamerasensor (5) und ein Objektiv (8,9) umfassen, wobei die Hauptpunkte der Objektive (8, 9) mit den Kamerasensoren (5) um eine Basisbreite B zueinander beabstandet angeordnet sind, und wobei die Stereokamera (2) einem Korrespondenzanalysator (1) gemäß einem der vorstehenden Ansprüche umfasst.

16. Stereokamera (2) nach vorstehendem Anspruch, **dadurch gekennzeichnet, dass** eines der Objektive (8, 9) in einem justierbaren Exzenter gehaltert ist, so dass ein Komplanaritätsfehler durch Drehen des Objektivs (8, 9) im Exzenter gegenüber einem Testbild korrigiert und die Komplanarität der optischen Achsen der Objektive (8, 9) justiert werden kann.

17. Stereokamera (2) nach einem der zwei vorstehenden Ansprüche, **dadurch gekennzeichnet, dass** die Stereokamera eingerichtet ist, während der Laufzeit zur Korrektur von Justagefehlern der Komplanarität die Disparität korrespondierender Bildbereiche zusätzlich in einer Richtung annähernd senkrecht zur Epipolarlinie auszuwerten, und die mittlere Abweichung dieser Disparität von null, also eine Abweichung von der idealen Epipolargeometrie, zu korrigieren durch eine gegenläufige Verschiebung eines der Bilder senkrecht zur Epipolarlinie mithilfe einer Korrektur der Rektifizierungsparameter.

18. Stereokamera (2) nach einem der drei vorstehenden Ansprüchen, **dadurch gekennzeichnet, dass** die Recheneinrichtung (3) des Korrespondenzanalysators (1) eingerichtet ist, zumindest eines, vorzugsweise alle der aus den Bilddaten der linken und rechten Kamera errechneten Features mit der jeweiligen Signalstärke dieser Kamera zu normieren.

19. Verfahren zur Bestimmung der Disparität korrespondierender Bildelemente in zwei vorzugsweise auf den Stereonormalfall rektifizierten digitalen Einzelbildern (25, 26), insbesondere mittels eines Korrespondenzanalysators (1) gemäß einem der Ansprüche 1 bis 19, bei welchem zur Bestimmung der Disparität δ, somit der Verschiebung korrespondierender Bildelemente in zwei digitalen Einzelbildern (25, 26) mittels einer Recheneinrichtung (3)
- aus den beiden Einzelbildern (25, 26) Bildbereiche ausgewählt werden, wobei der Bildbereich eines der Einzelbilder als Referenzbildbereich ausgewählt wird, und im anderen Einzelbild eine Abfolge von Suchbildbereichen ausgewählt wird, und
- aus dem Referenzbildbereich eine Mehrzahl von vmax Signalen YLSignal,v und aus den Suchbildbereichen jeweils eine Mehrzahl von vmax Signalen YRSignal,v erzeugt wird, und
- die Mehrzahl der Signale YLSignal,v des Referenzbildbereichs mit in einem Speicher (6) gespeicherten geraden und ungeraden Faltungskernen gefaltet werden, wobei die geraden Faltungskerne eine gewichteten Summe von mehreren geraden harmonischen Funktionen unterschiedlicher Ortsfrequenzen und die ungeraden Faltungskerne eine gewichtete Summe von mehreren ungeraden harmonischer Funktionen unterschiedlicher Ortsfrequenzen umfassen,
- und für jeden der Suchbildbereiche die Signale YRSignal,v mit den im Speicher (6) gespeicherten Faltungskernen gefaltet und
- für jedes Signalpaar YLSignal,v und YRSignal,v die Differenzen der jeweiligen Faltungsergebnisse gebildet, und
- für jeden der Suchbildbereiche die Differenzen der Faltungsergebnisse nichtlinear verarbeitet und zu einem Funktionswert einer Korrespondenzfunktion SSD(δp) an der Stelle δp akkumuliert werden oder aus den Differenzen der Faltungsergebnisse die erste Ableitung SSD'(δₚ) der Korrespondenzfunktion SSD(δp) nach δp an der Stelle δp ermittelt wird und damit ein Funktionswert einer Korrespondenzfunktion SSD(δp) oder deren Ableitung an der Stelle δp gebildet wird, wobei δp den Abstand des Referenzbilds vom Suchbild bezeichnet, wobei der Referenzbildbereich und die Suchbildbereiche auf einer Epipolarlinie liegen, so dass die Disparität für einen Suchbildbereich der Abstand dieses Suchbildbereichs zum Referenzbildbereich auf der Epipolarlinie darstellt, und
- lokale Extrema der Korrespondenzfunktion SSD(δp) oder Nulldurchgänge der Ableitung SSD'(δp) der Korrespondenzfunktion SSD(δp) ermittelt, und
- die Stelle δp eines der lokalen Extrema oder von einem der Nulldurchgänge als Disparität δ ausgegeben wird, oder
- ein subpixelgenauer Wert der Disparität an der Stelle δp errechnet und ausgegeben wird.

## Claims

1. A correspondence analyser (1) for determining a disparity δ, that is a shift between corresponding image elements in two digital individual images (25, 26), comprising
- a computing device (3) configured
- to select image patches from the two individual images (25, 26) , the image patch of one of the individual images being chosen as a reference image patch, and a sequence of search image patches being selected in the other individual image; and
- to generate a plurality of signals YL_{signal,v} from the reference image patch and a plurality of signals YR_{signal,v} from each of the search image patches; and
- to perform a convolution of the plurality of signals YL_{signal,v} of the reference image patch with even and odd convolution kernels stored in a memory (6), wherein the even convolution kernels comprise a weighted sum of a plurality of even harmonic functions of different spatial frequencies and the odd convolution kernels comprise a weighted sum of a plurality of odd harmonic functions of different spatial frequencies;
- and to perform a convolution of the signals YR_{signal,v} for each of the search image patches with the convolution kernels stored in the memory (6); and
- to calculate the differences of the respective convolution results for each signal pair YL_{signal,v} and YR_{signal,v}; and
- to process the differences of the convolution results for each of the search image patches in a non-linear manner and to accumulate them to obtain a function value of a correspondence function SSD(δₚ) at the point δₚ, or to calculate, from the differences in the convolution results, the first derivative SSD'(δₚ) of the correspondence function SSD(δₚ) with respect to δₚ at the point δₚ, and thus to obtain a function value of a correspondence function SSD(δₚ) or of its derivative at the point δₚ, wherein δₚ denotes the distance of the reference image from the search image, wherein the reference image patch and the search image patches lie on an epipolar line, such that the disparity for a search image patch is the distance of this search image patch to the reference image patch on the epipolar line; and
- to determine local extrema of the correspondence function SSD(δₚ) or zero crossings of the derivative SSD'(δₚ) of the correspondence function SSD(δₚ); and
- to output the point δₚ of one of the local extrema or of one of the zero crossings as the disparity δ; or
- to calculate and output a subpixel-precise value of the disparity at the point δₚ.

2. The correspondence analyser (1) according to the preceding claim, wherein at least one of the following features applies to the convolution kernels stored in the memory (6):
- the convolution kernels are selected such that, in a signal model for each signal in the spatial frequency range, the convolution operations of the kₘₐₓ even and lₘₐₓ odd functions each transfer sums with weighted signal components of a group of spatial frequencies having amplitudes Aₘ, so that in the correspondence function SSD(δ) two partial sums are obtained for each signal and each spatial frequency with index m, the first one with terms **characterized by** squared amplitudes Aₘ² from the results of the convolution operations using the even functions, the second one with terms **characterized by** squared amplitudes Aₘ² from the results of the convolution operations using the odd functions, and such that the first partial sum and the second partial sum can be combined according to trigonometric Pythagoras such that the sum SSDᵢₙᵥ(δ) of the two partial sums is independent of the object phase Δₘ;
- the convolution kernels are chosen in such a way that in the determination of the disparity, a local standard deviation of the measurements of the disparity of less than 0.2 pixels is achieved, even 0.1 pixels in the case of a shift of a planar object which has an intensity modulation along the direction of the epipolar line, in particular including a spatial frequency in the spatial frequency range, or which has a corresponding texture, and wherein the shift of the object occurs at a constant distance Z from the camera and along the epipolar line.

3. The correspondence analyser (1) according to any one of the preceding claims, **characterised by** at least one of the following features:
- the convolution kernels are selected in the spatial range in such a way that for each signal in the spatial frequency range the convolution operations of the kₘₐₓ even and lₘₐₓ odd functions each transfer sums with weighted signal components of a group of spatial frequencies with amplitudes Aₘ, so that in the correspondence function SSD(δ) two terms are obtained for each signal and each spatial frequency with index m, wherein the first term is a product of a squared amplitude Aₘ², a first constant, and a squared sine function, and the second term is a product of a squared amplitude Aₘ², a second constant, and a squared cosine function, and wherein the values of the first and second constants are equal or equal within a tolerance of +/-20 %;
- at least one, preferably all of the convolution kernels comprise a weighting function which is suitable to include information from different portions of the image patches to different extents in the correspondence analysis, in particular in the determination of the disparity;
- at least one of the filter kernels comprises a weighting function which weighs parts of an image patch that are close to the geometric centroid of the image patch stronger than parts that are further away from this centroid;
- the computing device is configured to select a weighting function depending on image properties.

4. The correspondence analyser (1) according to any one of the preceding claims, wherein the computing device (3) is configured
- to generate a plurality vₘₐₓ of signals YL_{signal,v} from the reference image patch by convolution operations of the data of the reference image patch perpendicular to the epipolar line, and to generate a plurality vₘₐₓ of signals YR_{signal,v} from each of the search image patches by convolution operations of the data of the respective search image patch perpendicular to the epipolar line, wherein the convolution operations generating the signals and the convolution operations of the kₘₐₓ even and lₘₐₓ odd functions are selected in such a way in the signal model, that the latter convolution operations each transfer sums with weighted signal components of a plurality of spatial frequencies, which are denoted by different values of the index m below; and such that
- for each signal, a first partial sum is obtained in the correspondence function SSD(δ), whose terms are independent of the object phases Δₘ, and a second partial sum is obtained, whose terms are dependent on the object phases Δₘ; wherein
- when accumulating the first partial sums of each of the vₘₐₓ signals, a constructive accumulation is obtained in which the individual terms do not compensate each other; and
- when accumulating the second partial sums of each of the vₘₐₓ signals, a statistical accumulation is obtained in which these noisy components at least partially compensate each other statistically.

5. The correspondence analyser (1) according to any one of the preceding claims, **characterised in that**
- the signal forms of the number kₘₐₓ of even convolution kernels are described by Fourier series with Fourier coefficients c_{k,n}, and the signal forms of the number lₘₐₓ of odd convolution kernels are described by Fourier series with Fourier coefficients s_{l,n}, where n is the index of the respective spatial frequency of the respective Fourier series, and that
- for each spatial frequency m transferred in this way and the corresponding profile vector weight gₘ, the Fourier coefficients c_{k,n} and s_{l,n} are solutions of the following non-linear equation system: ${g}_{m} = {\sum }_{k = 1}^{{k}_{max}} {\left({\sum }_{n = 1}^{{n}_{max}} {c}_{k , n} ⋅ {AEV}_{n , m}\right)}^{2} = {\sum }_{l = 1}^{{l}_{max}} {\left({\sum }_{n = 1}^{{n}_{max}} {s}_{l , n} ⋅ {AOD}_{n , m}\right)}^{2} ,$ wherein, in the case of 4 values for each of the indices m and n, the coefficients AEV_{n,m} and AOD_{n,m} are determined by the following matrices or deviate by a factor of 0.8 to 1.2 from the values of each of these matrices $AEV = {\vec{\left[\begin{matrix}\frac{1}{4} & \frac{1}{3 π} & 0 & - \frac{1}{15 π} \\ \frac{1}{3 π} & \frac{1}{4} & \frac{3}{5 π} & 0 \\ 0 & \frac{3}{5 π} & \frac{1}{4} & \frac{3}{7 π} \\ - \frac{1}{15 π} & 0 & \frac{3}{7 π} & \frac{1}{4}\end{matrix}\right]} ↓ n}^{m} AOD = {\vec{\left[\begin{matrix}\frac{1}{4} & \frac{2}{3 π} & 0 & - \frac{4}{15 π} \\ \frac{2}{3 π} & \frac{1}{4} & \frac{2}{5 π} & 0 \\ 0 & \frac{2}{5 π} & \frac{1}{4} & \frac{4}{7 π} \\ - \frac{4}{15 π} & 0 & \frac{4}{7 π} & \frac{1}{4}\end{matrix}\right]} ↓ n}^{m} ;$ and wherein the even convolution kernels f_{even,k} and the odd convolution kernels f_{odd,1} are given by ${f}_{even , k} = {\sum }_{n = 1}^{{n}_{max}} {c}_{k , n} ⋅ cos \left(n⋅ω⋅x\right)$ ${f}_{odd , l} = {\sum }_{n = 1}^{{n}_{max}} {s}_{l , n} ⋅ sin \left(n⋅ω⋅x\right) .$

6. The correspondence analyser (1) according to any one of the preceding claims, **characterised in that** the first derivative of the correspondence function SSD'(δₚ) is determined using the relationship $SSD ′ \left({δ}_{p}\right) = {\sum }_{u = 1}^{{u}_{max}} {\sum }_{v = 1}^{{v}_{max}} \left(\begin{matrix}\left({FR}_{u , v}\left({δ}_{p}\right)-{FR}_{u , v}\left({δ}_{p - 1}\right)\right) \\ ⋅ \left({FR}_{u , v}\left({δ}_{p}\right)+{FR}_{u , v}\left({δ}_{p - 1}\right)-2⋅{FL}_{u , v}\right)\end{matrix}\right) ,$ where δₚ₋₁ is the disparity of the predecessor in the sequence of the search image patches to the search image patch of δₚ on the epipolar line, and FL_{u,v} is the result of the convolution of the signal YL_{signal,v} with the convolution kernel with index u from among the set of uₘₐₓ convolution kernels which are used for the convolution of the signals, and FR_{u,v}(δ) is the result of the convolution of the signal YR_{signal,v} of a search image patch with disparity δ with the convolution kernel with index u, and where vₘₐₓ is the number of signal pairs YL_{signal,v}, YR_{signal,v} .

7. The correspondence analyser (1) according to any one of the preceding claims, **characterised in that** the computing device (3) is configured to determine the subpixel-precise value δ_{sub} in the neighbourhood of a local extremum or a zero crossing of the first derivative of the correspondence function at the location of the search image patch having the disparity δₚ using one of the following relationships $\begin{matrix}{δ}_{sub} \left({δ}_{p}\right) = {δ}_{p} - \frac{1}{2} ⋅ \frac{SSD ′ \left({δ}_{p}\right) + SSD ′ \left({δ}_{p + 1}\right)}{SSD " \left({δ}_{p}\right)} \\ = {δ}_{p} - \frac{1}{2} ⋅ \frac{SSD ′ \left({δ}_{p}\right) + SSD ′ \left({δ}_{p + 1}\right)}{SSD ′ \left({δ}_{p + 1}\right) - SSD ′ \left({δ}_{p}\right)} \\ = {δ}_{p} - \frac{1}{2} ⋅ \frac{SSD \left({δ}_{p + 1}\right) - SSD \left({δ}_{p - 1}\right)}{SSD \left({δ}_{p - 1}\right) + SSD \left({δ}_{p + 1}\right) - 2 ⋅ SSD \left({δ}_{p}\right)} ,\end{matrix}$ where δₚ₋₁ is the disparity of the predecessor in the sequence of search image patches to the search image patch of δₚ on the epipolar line, and where δₚ₊₁ is the disparity of the successor in the sequence of search image patches to the search image patch of δₚ; and to output δ_{sub} as the disparity δ.

8. The correspondence analyser (1) according to claim 5,
**characterised in that** a plurality of differently parameterized correspondence functions and the convolution kernels thereof and the profile vector gₘ corresponding to each one thereof are stored in the correspondence analyser (1) or are determined at runtime; wherein the correspondence analyser (1) is further configured to select part of said plurality of correspondence functions and convolution kernels thereof on the basis of the available image patches or on the basis of the image patches that are advantageous for further processing.

9. The correspondence analyser according to the preceding claim, **characterised in that** the parameters of at least one correspondence function and the convolution kernels thereof are selected such that the weighting coefficient of the respective corresponding profile vector gₘ for the highest spatial frequency is smaller than at least one of the other weighting coefficients of this profile vector.

10. The correspondence analyser (1) according to any one of the two preceding claims, **characterised in that** the correspondence analyser (1) is configured to determine the local or global power spectrum of the image data and to use the weights in dependence of the local or global power spectrum in the image.

11. The correspondence analyser (1) according to any one of the preceding claims, **characterised in that** the computing device (3) is configured to filter at least one of the following variables using a low-pass filter:
- the calculated disparity values;
- confidence values;
- disparity values weighted by confidence values.

12. The correspondence analyser (1) according to any one of the preceding claims, **characterised in that** the number of even convolution kernels kₘₐₓ is equal to 2 and the even convolution kernels contain functions f_{even,1} and f_{even,2} as given below, and that the number lₘₐₓ of odd convolution kernels is equal to 2 and the odd convolution kernels contain functions f_{odd,1} and f_{odd,2} as given below, wherein f_{even,1} and f_{even,2} are selected such that the even convolution kernels are mean-free and at least one of the coefficients 3.4954, 0.7818, 4.9652, 1.8416, 4.0476, 0.2559, 6.0228, or 0.0332 can also be larger or smaller by up to 10 %: ${f}_{even , 1} \left(x\right) = 3.4954 cos \left(\frac{πx}{8}\right) + 0.7818 cos \left(\frac{πx}{4}\right) + {off}_{even , 1}$ ${f}_{even , 2} \left(x\right) = 4.9652 cos \left(\frac{3 πx}{8}\right) + 1.8416 cos \left(\frac{πx}{2}\right) + {off}_{even , 2}$ ${f}_{odd , 1} \left(x\right) = 4.0476 sin \left(\frac{πx}{8}\right) - 0.2559 sin \left(\frac{πx}{4}\right)$ ${f}_{odd , 2} \left(x\right) = 6.0228 sin \left(\frac{3 πx}{8}\right) - 0.0332 sin \left(\frac{πx}{2}\right) .$

13. The correspondence analyser (1) according to any one of the preceding claims, **characterised in that** the computing device (3) is configured to execute averaging for a reference image patch of the values of the correspondence function SSD(δₚ) of this reference image patch with the values of the correspondence functions SSD(δₚ) of a plurality of other, neighbouring reference image patches, and to calculate and output a subpixel-precise value of the disparity at a point δₚ using this averaged correspondence function.

14. The correspondence analyser (1) according to any one of the preceding claims, **characterised in that** the computing device (3) is configured to normalize all convolution results of the signals of all image patches with a value which correlates with the signal strength of the respective image patch.

15. A stereo camera (2) comprising two cameras (20, 21), each one comprising a camera sensor (5) and a lens (8, 9), wherein the optical centres of the lenses (8, 9) with the camera sensors (5) are spaced apart from each other by a base width B, and wherein the stereo camera (2) comprises a correspondence analyser (1) according to any one of the preceding claims.

16. The stereo camera (2) according to the preceding claim, **characterised in that** one of the lenses (8, 9) is held in an adjustable eccentric, such that a coplanarity error can be corrected by rotating the lens (8, 9) in the eccentric with respect to a test image and the coplanarity of the optical axes of the lenses (8, 9) can be adjusted.

17. The stereo camera (2) according to any one of the two preceding claims, **characterised in that** the stereo camera is configured to additionally evaluate the disparity of corresponding image patches in a direction approximately perpendicular to the epipolar line during runtime for correcting coplanarity alignment errors, and to correct the average deviation of this disparity from zero, i.e. a deviation from ideal epipolar geometry, by an opposite shift of one of the images perpendicular to the epipolar line by a correction of the rectification parameters.

18. The stereo camera (2) according to any one of the three preceding claims, **characterised in that** the computing device (3) of the correspondence analyser (1) is configured to normalize at least one, preferably all, of the features calculated from the image data of the left and right cameras with the respective signal strength of this camera.

19. A method for determining the disparity of corresponding image elements in two digital individual images (25, 26) which preferably have been rectified to the stereo normal case, in particular using a correspondence analyser (1) according to any one of claims 1 to 19, wherein for determining the disparity δ, i.e. a shift between corresponding image elements in two digital individual images (25, 26), a computing device (3) is used
- to select image patches from the two individual images (25, 26), the image patch of one of the individual images being chosen as a reference image patch, and a sequence of search image patches being selected in the other individual image; and
- to generate a plurality vₘₐₓ of signals YL_{signal,v} from the reference image patch and a plurality vₘₐₓ of signals YR_{signal,v} from each of the search image patches; and
- to perform a convolution of the plurality of signals YL_{signal,v} of the reference image patch with even and odd convolution kernels stored in a memory (6), wherein the even convolution kernels comprise a weighted sum of a plurality of even harmonic functions of different spatial frequencies and the odd convolution kernels comprise a weighted sum of a plurality of odd harmonic functions of different spatial frequencies;
- and to perform a convolution of the signals YR_{signal,v} for each of the search image patches with the convolution kernels stored in the memory (6); and
- to calculate the differences of the respective convolution results for each signal pair YL_{signal,v} and YR_{signal,v}; and
- to process the differences of the convolution results for each of the search image patches in a non-linear manner and to accumulate them to obtain a function value of a correspondence function SSD(δₚ) at the point δₚ, or to calculate, from the differences in the convolution results, the first derivative SSD'(δₚ) of the correspondence function SSD(δₚ) with respect to δₚ at the point δₚ, and thus to calculate a function value of a correspondence function SSD(δₚ) or of its derivative at the point δₚ, wherein δₚ denotes the distance of the reference image from the search image, wherein the reference image patch and the search image patches lie on an epipolar line, such that the disparity for a search image patch is the distance of this search image patch to the reference image patch on the epipolar line; and
- to determine local extrema of the correspondence function SSD(δₚ) or zero crossings of the derivative SSD'(δₚ) of the correspondence function SSD(δₚ); and
- to output the point δₚ of one of the local extrema or of one of the zero crossings as the disparity δ; or
- to calculate and output a subpixel-precise value of the disparity at the point δₚ.

## Revendications

1. Analyseur de correspondances (1) destiné à déterminer la disparité δ, et par conséquent du décalage d'éléments d'image correspondants dans deux images individuelles (25, 26) numériques, comprenant
- un dispositif de calcul (3) qui est conçu pour
- sélectionner des zones d'image à partir des deux images individuelles (25, 26), la zone d'image de l'une des images individuelles étant sélectionnée en tant que zone d'image de référence, et une suite de zones d'image de recherche étant sélectionnée dans l'autre image individuelle, et
- générer une pluralité de signaux YL_{Signal,v} à partir de la zone d'image de référence, et une pluralité de signaux YR_{signal,v} respectivement à partir des zones d'image de recherche, et
- convoluer la pluralité des signaux YL_{signal,v} de la zone d'image de référence avec des noyaux de convolution pairs et impairs stockés dans une mémoire (6), les noyaux de convolution pairs comportant une somme pondérée de plusieurs fonctions harmoniques paires de fréquences spatiales différentes, et les noyaux de convolution impairs comportant une somme pondérée de plusieurs fonctions harmoniques impaires de fréquences spatiales différentes,
- et convoluer, pour chacune des zones d'image de recherche, les signaux YR_{Signal,v} avec les noyaux de convolution stockés dans la mémoire (6), et
- former pour chaque paire de signaux YL_{signal,v} et YR_{signal,v}, les différences des résultats de convolution respectifs, et
- soumettre, pour chacune des zones d'image de recherche, les différences des résultats de convolution à un traitement non linéaire et les accumuler pour obtenir une valeur de fonction d'une fonction de correspondance SSD(δₚ) à l'emplacement δₚ, ou pour déterminer à partir des différences des résultats de convolution, la dérivée première SSD'(δₚ) de la fonction de correspondance par rapport à δₚ, à l'emplacement δₚ, et former ainsi une valeur de fonction d'une fonction de correspondance SSD(δₚ) ou de sa dérivée, à l'emplacement δₚ, où δₚ désigne la distance de l'image de référence par rapport à l'image de recherche, la zone d'image de référence et les zones d'image de recherche se situant sur une ligne épipolaire, de sorte que la disparité pour une zone de recherche d'image est représentée par la distance de cette zone d'image de recherche par rapport à la zone d'image de référence sur la ligne épipolaire, et
- déterminer des extremums locaux de la fonction de correspondance SSD(δₚ) ou des passages par zéro de la dérivée SSD'(δₚ) de la fonction de correspondance SSD(δₚ), et
- délivrer en tant que disparité δ, l'emplacement δₚ de l'un des extremums locaux ou de l'un des passages par zéro, ou
- calculer et délivrer une valeur de la disparité avec une précision au sous-pixel, à l'emplacement δₚ.

2. Analyseur de correspondances (1) selon la revendication précédente, dans lequel au moins une des caractéristiques suivantes s'applique aux noyaux de convolution stockés dans la mémoire (6) :
- les noyaux de convolution sont sélectionnés de manière à ce que ceux-ci, dans un modèle de signal pour chaque signal dans la plage de fréquences spatiales, les opérations de convolution des kₘₐₓ fonctions paires et des lₘₐₓ fonctions impaires transmettent respectivement des sommes avec des composantes de signal pondérées d'un groupe de fréquences spatiales avec les amplitudes Aₘ, de sorte que dans la fonction de correspondance SSD(δ), deux sommes partielles se forment pour chaque signal et chaque fréquence spatiale avec l'indice m, la première avec des termes **caractérisés par** des amplitudes quadratiques Aₘ² à partir des résultats des opérations de convolution avec les fonctions paires, et la deuxième avec des termes **caractérisés par** des amplitudes quadratiques Aₘ² à partir des résultats des opérations de convolution avec les fonctions impaires, et la première somme partielle et la deuxième somme partielle peuvent se résumer selon la relation de Pythagore trigonométrique, de sorte que la somme SSDᵢₙᵥ(δ) des deux sommes partielles est indépendante de la phase d'objet Δₘ,
- les noyaux de convolution sont sélectionnés de manière à obtenir, lors de la détermination de la disparité, un écart standard local des mesures de la disparité inférieur à 0,2 pixel, voire même à 0,1 pixel, lors du décalage d'un objet plan qui présente une modulation d'intensité le long de la direction de la ligne épipolaire, incluant notamment une fréquence spatiale dans la plage de fréquences spatiales, ou présente une texture correspondante, et le décalage de l'objet s'effectuant avec une distance Z constante par rapport à la caméra et le long de la ligne épipolaire.

3. Analyseur de correspondances (1) selon une des revendications précédentes, **caractérisé par** au moins une des caractéristiques suivantes :
- les noyaux de convolution sont sélectionnés dans la zone locale de manière à ce que, pour chaque signal dans la plage de fréquences spatiales, les opérations de convolution des kₘₐₓ fonctions paires et des lₘₐₓ fonctions impaires transmettent respectivement des sommes avec des composantes de signal pondérées d'un groupe de fréquences spatiales avec les amplitudes Aₘ, de sorte que dans la fonction de correspondance SSD(δ), deux termes se forment pour chaque signal et chaque fréquence spatiale avec l'indice m, le premier terme étant un produit d'une amplitude quadratique Aₘ², d'une première constante et d'une fonction sinus au carré, et le deuxième terme étant un produit d'une amplitude quadratique Aₘ², d'une deuxième constante et d'une fonction cosinus au carré, et les valeurs de la première et de la deuxième constante étant identiques ou étant identiques à l'intérieur d'une tolérance de +/- 20 %,
- au moins un noyau de convolution, de préférence l'ensemble des noyaux de convolution, comporte une fonction de pondération qui est appropriée pour prendre en compte à des degrés divers des informations issues de différentes parties des zones d'image, dans l'analyse des correspondances, notamment dans la détermination de la disparité,
- au moins un des noyaux de filtrage comporte une fonction de pondération qui attribue à des parties d'une zone d'image qui sont situées à proximité du centre de gravité géométrique de la zone d'image, une pondération plus importante qu'à des parties qui sont plus éloignées de ce centre de gravité,
- le dispositif de calcul est conçu pour sélectionner une fonction de pondération en se basant sur des propriétés d'image.

4. Analyseur de correspondances (1) selon une des revendications précédentes, dans lequel le dispositif de calcul (3) est conçu pour
- générer, à partir de la zone d'image de référence, une pluralité de vₘₐₓ signaux YL_{Signal,v}, par des opérations de convolution des données de la zone d'image de référence, perpendiculairement à la ligne épipolaire, et générer, à partir des zones d'image de recherche, respectivement une pluralité de vₘₐₓ signaux YR_{Signal,v}, par des opérations de convolution des données de la zone d'image de recherche respective, perpendiculairement à la ligne épipolaire, sachant que les opérations de convolution qui génèrent les signaux et les opérations de convolution des kₘₐₓ fonctions paires et des lₘₐₓ fonctions impaires dans le modèle de signal sont sélectionnées de manière à ce que ces dernières opérations de convolution transmettent respectivement des sommes avec des composantes de signal pondérées d'une pluralité de fréquences spatiales, désignées ci-après par des valeurs différentes pour l'indice m, et que
- pour chaque signal, il se forme dans la fonction de correspondance SSD(δ), une première somme partielle dont les termes sont indépendants des phases d'objet Δₘ, et il se forme une deuxième somme partielle dont les termes sont fonction des phases d'objet Δₘ, sachant que
- lors d'une accumulation des premières sommes partielles, chacun des vₘₐₓ signaux forme une accumulation constructive dans laquelle les différents termes ne se compensent pas mutuellement, et
- lors d'une accumulation des deuxièmes sommes partielles, chacun des vₘₐₓ signaux forme une accumulation statistique dans laquelle ces composantes comportant du bruit se compensent statistiquement au moins en partie.

5. Analyseur de correspondances (1) selon une des revendications précédentes, **caractérisé en ce que**
- les formes de signaux des noyaux de convolution pairs du nombre kₘₐₓ sont décrites par des séries de Fourier avec les coefficients de Fourier c_{k,n}, et les formes de signaux des noyaux de convolution impairs du nombre lₘₐₓ sont décrites par des séries de Fourier avec les coefficients de Fourier s_{1,n}, n étant l'indice de la fréquence spatiale respective de la série de Fourier concernée, et **en ce que**
- pour chaque fréquence spatiale m ainsi transmise et la pondération correspondante du vecteur de profil gₘ, les coefficients de Fourier c_{k,n} et s_{1,n} sont des solutions du système d'équation non linéaire suivant : ${g}_{m} = {\sum }_{k = 1}^{{k}_{max}} {\left({\sum }_{n = 1}^{{n}_{max}} {c}_{k , n} ⋅ {AEV}_{n , m}\right)}^{2} = {\sum }_{l = 1}^{{l}_{max}} {\left({\sum }_{n = 1}^{{n}_{max}} {s}_{l , n} ⋅ {AOD}_{n , m}\right)}^{2} .$ - où les coefficients AEVₙₘ et AOD_{n,m} sont déterminés, pour respectivement 4 valeurs pour les indices m et n, par les matrices ci-après ou s'écartent des valeurs de ces matrices $AEV = {\vec{\left[\begin{matrix}\frac{1}{4} & \frac{1}{3 π} & 0 & - \frac{1}{15 π} \\ \frac{1}{3 π} & \frac{1}{4} & \frac{3}{5 π} & 0 \\ 0 & \frac{3}{5 π} & \frac{1}{4} & \frac{3}{7 π} \\ - \frac{1}{15 π} & 0 & \frac{3}{7 π} & \frac{1}{4}\end{matrix}\right]}}^{m} ↓ n AOD = {\vec{\left[\begin{matrix}\frac{1}{4} & \frac{2}{3 π} & 0 & - \frac{4}{15 π} \\ \frac{2}{3 π} & \frac{1}{4} & \frac{2}{5 π} & 0 \\ 0 & \frac{2}{5 π} & \frac{1}{4} & \frac{4}{7 π} \\ - \frac{4}{15 π} & 0 & \frac{4}{7 π} & \frac{1}{4}\end{matrix}\right]}}^{m} ↓ n$ respectivement d'un facteur 0,8 à 1,2, et où les noyaux de convolution pairs f_{even,k} et les noyaux de convolution impairs f_{odd,k} sont donnés par ${f}_{even , k} = {\sum }_{n = 1}^{{n}_{max}} {c}_{k , n} ⋅ cos \left(n⋅ω⋅x\right)$ ${f}_{odd , l} = {\sum }_{n = 1}^{{n}_{max}} {s}_{l , n} ⋅ sin \left(n⋅ω⋅x\right)$

6. Analyseur de correspondances (1) selon une des revendications précédentes, **caractérisé en ce que** la dérivée première de la fonction de correspondance SSD'(δₚ) est déterminée à l'aide de la relation $SSD ′ \left({δ}_{p}\right) = {\sum }_{u = 1}^{{u}_{max}} {\sum }_{v = 1}^{{v}_{max}} \left(\begin{matrix}\left({FR}_{u , v}\left({δ}_{p}\right)-{FR}_{u , v}\left({δ}_{p - 1}\right)\right) \\ ⋅ \left({FR}_{u , v}\left({δ}_{p}\right)+{FR}_{u , v}\left({δ}_{p - 1}\right)-2⋅{FL}_{u , v}\right)\end{matrix}\right)$ où δₚ₋₁ est la disparité du prédécesseur dans la suite des zones d'image de recherche concernant la zone d'image de recherche par rapport à δₚ sur la ligne épipolaire, et FL_{u,v} désigne le résultat de la convolution du signal YL_{Signal,v} avec le noyau de convolution ayant l'indice u, issu de l'ensemble des uₘₐₓ noyaux de convolution, avec lequel les signaux sont soumis à une convolution, et FR_{u,v}(δ) désigne le résultat de la convolution du signal YR_{Signal,v} d'une zone d'image de recherche ayant la disparité δ, avec le noyau de convolution ayant l'indice u, et où vₘₐₓ désigne le nombre de paires de signaux YL_{Signal,v}, YR_{Signal,v}.

7. Analyseur de correspondances (1) selon une des revendications précédentes, **caractérisé en ce que** le dispositif de calcul (3) est conçu pour déterminer la valeur δ_{sub} avec une précision au sous-pixel dans le voisinage d'un extremum local ou du zéro de la dérivée première de la fonction de correspondance, à l'emplacement de la zone d'image de recherche ayant la disparité δₚ, à l'aide de l'une des relations suivantes : $\begin{matrix}{δ}_{sub} \left({δ}_{p}\right) = {δ}_{p} - \frac{1}{2} ⋅ \frac{SSD ′ \left({δ}_{p}\right) + SSD ′ \left({δ}_{p + 1}\right)}{SSD " \left({δ}_{p}\right)} \\ = {δ}_{p} - \frac{1}{2} ⋅ \frac{SSD ′ \left({δ}_{p}\right) + SSD ′ \left({δ}_{p + 1}\right)}{SSD ′ \left({δ}_{p + 1}\right) - SSD ′ \left({δ}_{p}\right)} \\ = {δ}_{p} - \frac{1}{2} ⋅ \frac{SSD \left({δ}_{p + 1}\right) - SSD \left({δ}_{p - 1}\right)}{SSD \left({δ}_{p - 1}\right) + SSD \left({δ}_{p + 1}\right) - 2 ⋅ SSD \left({δ}_{p}\right)}\end{matrix}$ où δₚ₋₁ est la disparité du prédécesseur dans la suite des zones d'image de recherche d'image concernant la zone d'image de recherche par rapport à δₚ sur la ligne épipolaire, et δₚ₊₁ est la disparité du successeur dans la suite des zones d'image de recherche concernant la zone d'image de recherche par rapport à δₚ, et pour délivrer δ_{sub} en tant que disparité δ.

8. Analyseur de correspondances (1) selon la revendication 5, **caractérisé en ce qu'**une pluralité de fonctions de correspondance à pa-ramétrage différent et leurs noyaux de convolution ainsi que le vecteur de profil gₘ qui leur correspond respectivement sont stockés dans l'analyseur de correspondances (1) ou sont déterminés au moment du fonctionnement, l'analyseur de correspondances (1) étant en outre conçu pour sélectionner une partie de cette pluralité de fonctions de correspondance et de leurs noyaux de convolution, à l'aide des zones d'image présentes ou à l'aide des zones d'image avantageuses pour la suite du traitement.

9. Analyseur de correspondances selon la revendication précédente, **caractérisé en ce que** les paramètres d'au moins une fonction de correspondance et les noyaux de convolution de celle-ci sont sélectionnés de manière à ce que le coefficient de pondération du vecteur de profil gₘ respectif correspondant pour la fréquence spatiale la plus élevée soit inférieur à au moins un des autres coefficients de pondération de ce vecteur de profil.

10. Analyseur de correspondances (1) selon une des deux revendications précédentes, **caractérisé en ce que** l'analyseur de correspondances (1) est conçu pour déterminer le spectre de puissance local ou global des données d'image et pour utiliser les pondérations en fonction du spectre de puissance local ou global dans l'image.

11. Analyseur de correspondances (1) selon une des revendications précédentes, **caractérisé en ce que** le dispositif de calcul (3) est conçu pour filtrer avec un filtre passe-bas au moins une des grandeurs suivantes :
- les valeurs de disparité calculées,
- des valeurs de confiance,
- des valeurs de disparité pondérées par des valeurs de confiance.

12. Analyseur de correspondances (1) selon une des revendications précédentes, **caractérisé en ce que** le nombre des noyaux de convolution pairs kₘₐₓ est égal à 2 et les noyaux de convolution pairs comportent les fonctions f_{even,1} et f_{even,2} ci-après, et que le nombre lₘₐₓ des noyaux de convolution impairs est égal à 2 et les noyaux de convolution impairs comportent les fonctions f_{odd,1} et f_{odd,2} ci-après, sachant que f_{even,1} et f_{even,2} sont sélectionnées de manière à ce que les noyaux de convolution pairs soient dépourvus de valeurs moyennes, et qu'au moins un des coefficients 3,4954, 0,7818, 4,9652, 1,8416, 4,0476, 0,2559, 6,0228 ou 0,0332 puisse être supérieur ou inférieur jusqu'à 10 % : ${f}_{even , 1} \left(x\right) = 3 , 4954 cos \left(\frac{πx}{8}\right) + 0 , 7818 cos \left(\frac{πx}{4}\right) + {off}_{even , 1}$ ${f}_{even , 2} \left(x\right) = 4 , 9652 cos \left(\frac{3 πx}{8}\right) + 1 , 8416 cos \left(\frac{πx}{2}\right) + {off}_{even , 2}$ ${f}_{odd , 1} \left(x\right) = 4 , 0476 sin \left(\frac{πx}{8}\right) - 0 , 2559 sin \left(\frac{πx}{4}\right)$ ${f}_{odd , 2} \left(x\right) = 6 , 0228 sin \left(\frac{3 πx}{8}\right) - 0 , 0332 sin \left(\frac{πx}{2}\right)$

13. Analyseur de correspondances (1) selon une des revendications précédentes, **caractérisé en ce que** le dispositif de calcul (3) est conçu pour effectuer, pour une zone d'image de référence, un calcul de la moyenne des valeurs de la fonction de correspondance SSD(δₚ) de cette zone d'image de référence avec les valeurs des fonctions de correspondance SSD(δₚ) d'une pluralité d'autres zones d'image de référence voisines, et pour calculer avec cette fonction de correspondance, dont la valeur moyenne a été établie, une valeur à précision au sous-pixel de la disparité, à un emplacement δₚ, et la délivrer.

14. Analyseur de correspondances (1) selon une des revendications précédentes, **caractérisé en ce que** le dispositif de calcul (3) est conçu pour normaliser tous les résultats de convolution des signaux de l'ensemble des zones d'image avec une valeur qui est en corrélation avec l'intensité de signal de la zone d'image respective.

15. Caméra stéréo (2) dotée de deux caméras (20, 21) qui comportent chacune un capteur de caméra (5) et un objectif (8, 9), les foyers des objectifs (8, 9) étant disposés avec les capteurs de caméra (5) en étant espacés d'une largeur de base B les uns par rapport aux autres, et la caméra stéréo (2) comprenant un analyseur de correspondances (1) selon une des revendications précédentes.

16. Caméra stéréo (2) selon la revendication précédente, **caractérisée en ce que** l'un des objectifs (8, 9) est tenu dans un excentrique ajustable, de sorte qu'un défaut de coplanarité peut être corrigé par rotation de l'objectif (8, 9) dans l'excentrique par rapport à une image de test, et la coplanarité des axes optiques des objectifs (8, 9) peut être ajustée.

17. Caméra stéréo (2) selon une des deux revendications précédentes, **caractérisée en ce que** la caméra stéréo est conçue pour exploiter, pendant la durée de fonctionnement, aux fins de corriger des défauts d'ajustage de la coplanarité, la disparité de zones d'image correspondantes, en plus dans une direction sensiblement perpendiculaire à la ligne épipolaire, et pour corriger l'écart moyen de cette disparité par rapport à zéro, c'est-à-dire un écart par rapport à la géométrie épipolaire idéale, par un décalage de l'une des images dans le sens opposé, perpendiculairement à la ligne épipolaire, à l'aide d'une correction des paramètres de rectification.

18. Caméra stéréo (2) selon une des trois revendications précédentes, **caractérisée en ce que** le dispositif de calcul (3) de l'analyseur de correspondances (1) est conçu pour normaliser au moins une caractéristique, de préférence toutes les caractéristiques calculées à partir des données d'image de la caméra gauche et de la caméra droite, avec l'intensité de signal respective de cette caméra.

19. Procédé de détermination de la disparité d'éléments d'image correspondants dans deux images individuelles (25, 26) numériques rectifiées de préférence par rapport au cas stéréo normal, en particulier au moyen d'un analyseur de correspondances (1) selon une des revendications 1 à 19, selon lequel, pour la détermination de la disparité δ, et donc du décalage d'éléments d'image correspondants dans deux images individuelles (25, 26) numériques, à l'aide d'un dispositif de calcul (3),
- des zones d'image sont sélectionnées à partir des deux images individuelles (25, 26), la zone d'image de l'une des images individuelles étant sélectionnée en tant que zone d'image de référence, et une suite de zones d'image de recherche étant sélectionnée dans l'autre image individuelle, et
- une pluralité de vmax signaux YLSignal,v est générée à partir de la zone d'image de référence, et une pluralité de vmax signaux YRSignal,v est générée respectivement à partir des zones d'image de recherche, et
- la pluralité des signaux YLSignal,v de la zone d'image de référence est convoluée avec des noyaux de convolution pairs et impairs stockés dans une mémoire (6), les noyaux de convolution pairs comportant une somme pondérée de plusieurs fonctions harmoniques paires ayant des fréquences spatiales différentes, et les noyaux de convolution impairs comportant une somme pondérée de plusieurs fonctions harmoniques impaires ayant des fréquences spatiales différentes,
- et pour chacune des zones d'image de recherche, les signaux YRSi-gnal,v sont convolués avec les noyaux de convolution stockés dans la mémoire (6), et
- pour chaque paire de signaux YLSignal,v et YRSignal,v, les différences des résultats de convolution respectifs sont formées, et
- pour chacune des zones d'image de recherche, les différences des résultats de convolution font l'objet d'un traitement non linéaire et sont accumulées pour obtenir une valeur de fonction d'une fonction de correspondance SSD(δp) à l'emplacement δp, ou bien on détermine, à partir des différences des résultats de convolution, la dérivée première SSD'(δp) de la fonction de correspondance SSD(δp) par rapport à δp, à l'emplacement δp, et on l'utilise pour établir une valeur de fonction d'une fonction de correspondance SSD(δp) ou la dérivée de celle-ci, à l'emplacement δp, où δp désigne la distance de l'image de référence par rapport à l'image de recherche, la zone d'image de référence et les zones d'image de recherche se situant sur une ligne épipolaire, de sorte que la disparité pour une zone d'image de recherche est représentée par la distance de cette zone d'image de recherche par rapport à la zone d'image de référence sur la ligne épipolaire, et
- on détermine des extremums locaux de la fonction de correspondance SSD(δp) ou des passages par zéro de la dérivée SSD'(δp) de la fonction de correspondance SSD(δp),
- et l'emplacement δp de l'un des extremums locaux ou de l'un des passages par zéro est délivré en tant que disparité δ, ou
- une valeur de la disparité à précision au sous-pixel est calculée à l'emplacement δp et délivrée.
